(19) Europäisches Patentamt
European Patent Office
Office européen des brevets

(11) **EP 3 390 308 B1**

(12) **EUROPÄISCHE PATENTSCHRIFT**

(45) Veröffentlichungstag und Bekanntmachung des Hinweises auf die Patenterteilung:
**28.08.2024   Patentblatt 2024/35**

(21) Anmeldenummer: **16822653.8**

(22) Anmeldetag: **16.12.2016**

(51) Internationale Patentklassifikation (IPC):
**C03B 20/00** (2006.01)     **C03B 37/012** (2006.01)
**C03B 19/10** (2006.01)     **C03B 19/06** (2006.01)

(52) Gemeinsame Patentklassifikation (CPC):
**C03C 3/06; C03B 19/066; C03B 19/108;
C03B 19/1095; C03B 37/01211; C03C 1/026;
C03C 13/045;** C03B 2201/03; C03B 2201/04;
C03C 2201/11; C03C 2201/23; C03C 2201/32;
G01N 21/412; Y02P 40/57

(86) Internationale Anmeldenummer:
**PCT/EP2016/081503**

(87) Internationale Veröffentlichungsnummer:
**WO 2017/103153 (22.06.2017 Gazette 2017/25)**

(54) **GLASFASERN  AUS  QUARZGLAS MIT GERINGEM OH-, CL- UND AL-GEHALT**

GLASS FIBRES OF  QUARTZ GLASS WITH LOW OH, CL AND AL CONTENTS

FIBRES DE VERRE DE VERRE DE SILICE A TENEUR REDUITE EN OH, CL ET AL

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **18.12.2015  EP 15201083**

(43) Veröffentlichungstag der Anmeldung:
**24.10.2018   Patentblatt 2018/43**

(73) Patentinhaber: **Heraeus Quarzglas GmbH & Co.
KG
63450 Hanau (DE)**

(72) Erfinder:
• **HÜNERMANN, Michael
63755 Alzenau (DE)**
• **HOFMANN, Achim
60599 Frankfurt am Main (DE)**
• **FABIAN, Heinz
63762 Großostheim (DE)**
• **OTTER, Matthias
59075 Hamm (DE)**
• **KAYSER, Thomas
04105 Leipzig (DE)**

(74) Vertreter: **Herzog IP Patentanwalts GmbH
Steinstraße 16-18
40212 Düsseldorf (DE)**

(56) Entgegenhaltungen:
EP-A1- 1 717 202     EP-A1- 2 495 220
JP-A- 2001 220 126     JP-A- H11 310 423
US-A- 4 650 511     US-A- 5 063 179
US-A- 5 713 979

## Beschreibung

Die Erfindung betrifft einen Lichtleiter beinhaltend eine Hülle M1 und einen oder mehrere Kerne, wobei die Hülle M1 die Kerne umgibt, wobei jeder Kern einen Brechungsindexverlauf senkrecht zur maximalen Kernausdehnung aufweist, wobei mindestens ein Brechungsindex $n_K$ von jedem Brechungsindexverlauf größer ist als der Brechungsindex $n_{M1}$ der Hülle M1; wobei die Hülle M1 aus Siliziumdioxid besteht und einen OH-Gehalt von weniger als 10 ppm; und einen Chlorgehalt von weniger als 60 ppm; und einen Aluminiumgehalt von weniger als 200 ppb aufweist; wobei die ppb und ppm jeweils bezogen sind auf das Gesamtgewicht der Mantelschicht M1. Die Erfindung betrifft ebenfalls Verfahren zum Herstellen eines Lichtleiters und eines Lichtleiterkabels.

## Stand der Technik

Lichtleiter an sich sind bekannt. Das Verbessern der lichtleitenden Eigenschaften von Lichtleitern ist weiterhin ein Ziel, um die Leistungsfähigkeit bei der Datenübertragung zu steigern, insbesondere bei der Datenübertragung über weite Strecken. Lichtleiter beinhalten einen oder mehrere Kerne aus einem lichtleitenden Material, wie Glas oder Quarzglas. Als genereller Aufbau ist der Kern von mindestens einer Mantelschicht umgeben. Die Mantelschicht besteht aus einem Material, das einen niedrigeren Brechungsindex aufweist als der Kern, in der Regel ebenfalls Glas oder Quarz. Der Brechungsindex des Glases bzw. Quarzes des Kerns und/oder des Mantels kann durch Dotieren eingestellt werden. Germanium wird oftmals ausgewählt, um den Brechungsindex des Kerns anzuheben. Fluor oder Bor werden bevorzugt ausgewählt um den Brechungsindex der Mantelschicht abzusenken. Durch den daraus resultierenden Brechungsindexunterschied zwischen Kern und Mantelschicht wird eine Totalreflexion von durch den Kern des Lichtleiters geführten Lichtes erreicht.

Häufig weist der Kern auch im Verlauf durch den Kernquerschnitt nicht durchgängig einen konstanten Brechungsindex auf, sondern ein konzentrisches Brechungsindexprofil. Dadurch können die Eigenschaften des Kerns weiter angepasst werden. Hat der Kern ein konzentrisches Brechungsindexprofil, befindet sich oftmals ein erster Bereich im Zentrum des Kerns, bei dem der Brechungsindex maximal ist. Daran anschließend gibt es einen weiteren Bereich, hier als Peripherie bezeichnet, in der der Brechungsindex niedriger ist als im Zentrum. Innerhalb der Peripherie des Kerns kann der Brechungsindex ebenfalls weiter variieren. Weiterhin weist ein Lichtleiter neben dem Kern und der mindestens einen Mantelschicht oftmals mindestens eine weitere, äußere Mantelschicht auf. Während die mindestens eine Mantelschicht bei der Herstellung des Kerns um den eigentlichen Kern herum ausgebildet wird, sodass der Kern selbst alle für das Licht führen notwendige Merkmale in sich vereint, wird der Vorläufer der weiteren, äußeren Mantelschicht separat hergestellt. Der Lichtleiter kann dann durch Einbringen eines Kernvorläufers in den äußeren Mantelschichtvorläufer mit anschließendem Ziehen dieses Vorläuferensembles in der Wärme zum Lichtleiter gebildet werden. Es kommt durchaus vor, dass die mindestens eine Mantelschicht, die den Kern begrenzt, und die äußere Mantelschicht nach dem Formen zum Lichtleiter nicht mehr voneinander unterscheidbar sind. Zudem sind der Kern und die Mantelschichten des Lichtleiters nach dem Ziehprozess nicht mehr von einander trennbar, ohne den Lichtleiter insgesamt zu zerstören.

US 4 650 511 A betrifft die Herstellung von Quarzglas, das für Lichtleiter einsetzbar ist. Das Quarzglas weist niedrige OH- und Chlorgehalte auf.

## Aufgaben der Erfindung

Eine Aufgabe der vorliegenden Erfindung ist es, einen oder mehrere der sich aus dem Stand der Technik ergebenden Nachteile zumindest teilweise zu überwinden.

Es ist eine weitere Aufgabe der Erfindung, einen Lichtleiter mit einer langen Lebensdauer bereitzustellen.

Es ist eine weitere Aufgabe der Erfindung, einen Lichtleiter bereitzustellen, der für weite Übertragungen geeignet ist. Insbesondere ist es eine Aufgabe der Erfindung, einen Lichtleiter bereitzustellen, von dem mehrere Stücke gut miteinander verbindbar sind.

Es ist eine weitere Aufgabe der Erfindung, einen Lichtleiter bereitzustellen, der hohe Übertragungsraten über weite Entfernungen aufweist. Insbesondere ist es eine Aufgabe der Erfindung, einen Lichtleiter bereitzustellen, der Übertragungsraten von mehreren Tbit/s über Entfernungen von mehr als 100 km erlaubt.

Eine weitere Aufgabe ist, einen Lichtleiter bereitzustellen, der reiß- und bruchfest ist. Insbesondere ist es eine Aufgabe der Erfindung, einen Lichtleiter bereitzustellen, der streckbar ist ohne zu reißen.

Eine weitere Aufgabe ist, einen Lichtleiter mit hoher Symmetrie bereitzustellen. Insbesondere ist es eine Aufgabe der Erfindung, einen Lichtleiter bereitzustellen, dessen Querschnitt rund ist.

Es ist eine weitere Aufgabe, einen Lichtleiter bereitzustellen, der eine geradlinige Ausformung aufweist.

Es ist eine weitere Aufgabe, einen Lichtleiter mit einer niedrigen Dämpfung herzustellen. Unter Dämpfung wird ein entfernungsabhängiger Abfall der Signalintensität verstanden.

Es ist eine weitere Aufgabe der Erfindung, einen Lichtleiter mit einer geringen Opazität bereitzustellen. Es ist eine weitere Aufgabe der Erfindung, einen Lichtleiter mit einer hohen Transparenz bereitzustellen.

Es ist eine weitere Aufgabe, einen Lichtleiter bereitzustellen, der die Migration von Kationen vermeidet.

Eine weitere Aufgabe ist, einen kostengünstigen Lichtleiter bereitzustellen.

Es ist eine weitere Aufgabe der Erfindung, einen Lichtleiter bereitzustellen, der eine hohe Reinheit und eine geringe Kontamination mit Fremdatomen aufweist. Unter Fremdatomen werden Bestandteile verstanden, die nicht gezielt eingebracht wurden.

Es ist eine weitere Aufgabe der Erfindung, einen Lichtleiter bereitzustellen, der eine geringe Menge an Dotierstoffen enthält.

Es ist eine weitere Aufgabe der Erfindung, einen Lichtleiter bereitzustellen, der eine hohe Homogenität im Mantelglasbereich aufweist. Eine Homogenität einer Eigenschaft oder eines Stoffes ist ein Maß für die Gleichmäßigkeit der Verteilung dieser Eigenschaft oder des Stoffes in einer Probe.

Es ist eine weitere Aufgabe der Erfindung, einen Lichtleiter bereitzustellen, der eine hohe Stoffhomogenität im Mantelglasbereich aufweist. Die Stoffhomogenität ist ein Maß für die Gleichmäßigkeit der Verteilung von im Lichtleiter enthaltenen Elemente und Verbindungen, insbesondere von OH, Chlor, Metallen, insbesondere Aluminium, Erdalkalimetalle, Refraktärmetallen und Dotierstoffen.

Es ist eine weitere Aufgabe der Erfindung, einen Lichtleiter mit mehreren Faserkernen (Multicore-Lichtleiter) bereitzustellen, der mindestens eine der beschriebenen Aufgaben löst.

Es ist eine weitere Aufgabe der Erfindung, einen Multicore-Lichtleiter bereitzustellen, der bei der Übertragung von Signalen keine oder wenige Übertragungsfehler durch Übersprechen aufweist. Unter Übersprechen wird das Übergehen eines Signals von einer Faser eines Multicore-Lichtleiters in eine andere Faser eines Multicore-Lichtleiters verstanden.

Es ist eine weitere Aufgabe der Erfindung, einen Multicore-Lichtleiter mit einer hohen Übertragungsrate in einer guten Qualität bereitzustellen. Insbesondere ist es eine Aufgabe der Erfindung, einen Multicore-Lichtleiter bereitzustellen, dessen Faserkerne sich bei der Signalübertragung nicht stören.

Es ist eine weitere Aufgabe der Erfindung, ein Verfahren bereitzustellen, mit dem Lichtleiter hergestellt werden können, mittels derer mindestens ein Teil der bereits beschriebenen Aufgaben gelöst ist.

Eine weitere Aufgabe ist, ein Verfahren bereitzustellen, mit dem ein Lichtleiter kosten- und zeitsparend hergestellt werden kann.

Es ist eine weitere Aufgabe der Erfindung, ein Verfahren bereitzustellen, mit dem Lichtleiter einfacher hergestellt werden können.

Es ist eine weitere Aufgabe der Erfindung, ein kontinuierliches Verfahren bereitzustellen, mit dem Lichtleiter hergestellt werden können.

Es ist eine weitere Aufgabe der Erfindung, ein Verfahren bereitzustellen, mit dem Lichtleiter mit höherer Geschwindigkeit gebildet werden können.

Es ist eine weitere Aufgabe der Erfindung, ein Verfahren bereitzustellen, mit dem Lichtleiter durch ein kontinuierliches Schmelz- und Formgebungsverfahren hergestellt werden können.

Es ist eine weitere Aufgabe der Erfindung, ein Verfahren bereitzustellen, mit dem Lichtleiter mit geringem Ausschuss hergestellt werden können.

Es ist eine weitere Aufgabe der Erfindung, ein Verfahren bereitzustellen, mit dem konfektionierbare Lichtleiter hergestellt werden können.

Es ist eine weitere Aufgabe der Erfindung, ein automatisiertes Verfahren bereitzustellen, mit dem Lichtleiter hergestellt werden können.

Eine weitere Aufgabe ist, die Verarbeitbarkeit von Lichtleitern weiter zu verbessern. Eine weitere Aufgabe ist, die Konfektionierbarkeit von Lichtleitern weiter zu verbessern.

**Bevorzugte Ausführungsformen der vorliegenden Erfindung:**

Ein Beitrag zur mindestens teilweisen Erfüllung mindestens einer der zuvor genannten Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

    111 Ein Lichtleiter beinhaltend eine Hülle M1 und einen oder mehrere Kerne,

        wobei die Hülle M1 die Kerne umgibt,
        wobei jeder Kern einen Brechungsindexverlauf senkrecht zur maximalen Kernausdehnung aufweist, wobei mindestens ein Brechungsindex $n_K$ von jedem Brechungsindexverlauf größer ist als der Brechungsindex $n_{M1}$ der Hülle M1;
        wobei die Hülle M1 aus Siliziumdioxid besteht und

a) einen OH-Gehalt von weniger als 10 ppm;
b) einen Chlorgehalt von weniger als 60 ppm; und
c) einen Aluminiumgehalt von weniger als 200 ppb aufweist;

wobei die ppb und ppm jeweils bezogen sind auf das Gesamtgewicht der Hülle M1.

121 Der Lichtleiter gemäß Ausführungsform 111, beinhaltend zwei oder mehr Kerne, wobei die Hülle M1 die Kerne als Matrix umgibt.

131 Der Lichtleiter nach einer der vorhergehenden Ausführungsformen, wobei die Hülle M1 mindestens eines der folgenden Merkmale aufweist:

d) einen ODC-Anteil von weniger als $5\times10^{15}/cm^3$;
e) einen Metallgehalt von Metallen, die von Aluminium verschieden sind, von weniger als 1 ppm;
f) eine Viskosität (p=1013 hPa) in einem Bereich von $\log_{10}$ ($\eta$ (1200°C) / dPas) = 13,4 bis $\log_{10}$ ($\eta$ (1200°C) / dPas) = 13,9 oder $\log_{10}$ ($\eta$ (1300°C) / dPas) = 11,5 bis $\log_{10}$ ($\eta$ (1300°C) / dPas) = 12,1 oder $\log_{10}$ ($\eta$ (1350°C) / dPas) = 1,2 bis $\log_{10}$ ($\eta$ (1350°C) / dPas) = 10,8;
g) einen Curl-Parameter von mehr als 6 m;
h) eine Standardabweichung des OH-Gehalts von nicht mehr als 10 %, bezogen auf den OH-Gehalt a) der Hülle M1;
i) eine Standardabweichung des Cl-Gehalts von nicht mehr als 10 %, bezogen auf den Cl-Gehalt b) der Hülle M1;
j) eine Standardabweichung des Al-Gehalts von nicht mehr als 10 %, bezogen auf den Al-Gehalt c) der Hülle M1;
k) eine Brechzahlhomogenität von weniger als $1\times10^{-4}$;
l) einen Transformationspunkt $T_g$ in einem Bereich von 1150 bis 1250°C,

wobei die ppb und ppm jeweils bezogen sind auf das Gesamtgewicht der Hülle M1.

141 Der Lichtleiter nach einer der vorhergehenden Ausführungsformen, wobei der Gewichtsanteil der Hülle M1 mindestens 60 Gew.-%, bezogen auf das Gesamtgewicht der Kerne und Hülle M1, beträgt.

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann. Einseitig begrenzte Bereiche der Art "bis zu Y" für eine Größe A bedeuten entsprechend als Werte Y und kleiner als Y.

**Ausführliche Beschreibung der Erfindung:**

Ein erster Gegenstand der Erfindung ist ein Lichtleiter beinhaltend eine Hülle M1 und einen oder mehrere Kerne,

wobei die Hülle M1 die Kerne umgibt,
wobei jeder Kern einen Querschnitt $Q_K$ aufweist,
wobei jeder Kern einen Brechungsindex $n_K$ aufweist, der an mindestens einer Stelle des Kernquerschnitts $Q_K$ größer ist als der Brechungsindex $n_{Ml}$ der Hülle M1;
wobei die Hülle M1 aus Siliziumdioxid besteht, und

a) einen OH-Gehalt von weniger als 10 ppm;
b) einen Chlorgehalt von weniger als 60 ppm; und
c) einen Aluminiumgehalt von weniger als 200 ppb aufweist,

wobei die ppb und ppm jeweils bezogen sind auf das Gesamtgewicht der Hülle M1.

Der Brechungsindex der Hülle M1 wird mittels einer Brechzahldifferenzmessung bestimmt.
Unter ppm als Mengenangabe für ein bestimmtes Merkmal wird gemäß der Erfindung ein Millionstel des Merkmals an einer Gesamtmenge verstanden. Unter ppb als Mengenangabe für ein bestimmtes Merkmal wird gemäß der Erfindung ein Milliardstel des Merkmals an einer Gesamtmenge verstanden. Wird die Einheit ohne Bezugsgröße angegeben, so bezieht sie sich auf das Gesamtgewicht.
Der Lichtleiter, auch als Lichtwellenleiter oder optische Faser bezeichnet, kann jedes Material beinhalten, das dazu geeignet ist elektromagnetische Strahlung, insbesondere Licht, zu leiten oder zu führen.

Unter Leiten oder Führen von Strahlung wird die Ausdehnung der Strahlung über die Längsausdehnung des Lichtleiters ohne wesentliche Behinderung oder Dämpfung der Intensität der Strahlung bezeichnet. Dabei wird die Strahlung über ein Ende des Lichtleiters in den Leiter eingekoppelt. Bevorzugt leitet der Lichtleiter elektromagnetische Strahlung in einem Wellenlängenbereich von 170 bis 5000 nm. Bevorzugt liegt die Dämpfung der Strahlung durch den Lichtleiter in dem genannten Wellenlängenbereich in einem Bereich von 0,1 bis 10 dB/km. Die Dämpfung wird bevorzugt bei einer Referenzwellenlänge von 1550 nm bestimmt. Bevorzugt weist der Lichtleiter eine Übertragungsrate von bis zu 50 Tbit/s auf.

Der Lichtleiter weist bevorzugt einen Curl-Parameter von mehr als 6 m auf. Unter dem Curl-Parameter wird gemäß der Erfindung der Biegeradius einer Faser, z.B. eines Lichtleiters oder einer Hülle M1, verstanden, der sich bei einer frei beweglichen Faser ohne äußere Krafteinwirkung einstellt.

Der Lichtleiter ist bevorzugt biegbar ausgestaltet. Biegbar im Sinne der Erfindung bedeutet, dass der Lichtleiter durch einen Biegeradius von 20 mm oder weniger gekennzeichnet, zum Beispiel von 10 mm oder weniger, besonders bevorzugt weniger als 5 mm oder weniger, ist. Unter einem Biegeradius wird der engste Radius bezeichnet, der geformt werden kann, ohne einen Bruch des Lichtleiters zu bewirken und ohne Beeinträchtigung der Fähigkeit des Lichtleiters Strahlung zu leiten. Eine Beeinträchtigung liegt bei einer Dämpfung des durch eine Biegung des Lichtleiters durchgeleiteten Lichts um mehr als 0,1 dB vor. Die Dämpfung wird bevorzugt bei einer Referenzwellenlänge von 1550 nm angegeben.

Der Lichtleiter weist bevorzugt eine längliche Form auf. Der Lichtleiter wird in seiner Form durch seine Längsausdehnung L und seinem Querschnitt Q definiert. Der Lichtleiter weist bevorzugt eine runde Außenwand entlang seiner Längsausdehnung L auf. Ein Querschnitt Q des Lichtleiters wird immer in einer Ebene bestimmt, die senkrecht zu der Außenwand des Lichtleiters steht. Ist der Lichtleiter in der Längsausdehnung L gekrümmt, so wird der Querschnitt Q senkrecht zu einer Tangente, welche in der Richtung der Längsausdehnung L verläuft und an einem Punkt auf der Lichtleiteraußenwand anliegt, ermittelt. Der Lichtleiter weist bevorzugt einen Durchmesser $d_L$ in einem Bereich von 0,04 bis 1,5 mm auf. Der Lichtleiter weist bevorzugt eine Länge in einem Bereich von 1 m bis 100 km auf.

Erfindungsgemäß beinhaltet der Lichtleiter einen oder mehrere Kerne, zum Beispiel einen Kern oder zwei Kerne oder drei Kerne oder vier Kerne oder fünf Kerne oder sechs Kerne oder sieben Kerne oder mehr als sieben Kerne, besonders bevorzugt einen Kern. Bevorzugt werden mehr als 75 %, zum Beispiel mehr als 80 % oder mehr als 85 % oder mehr als 90 % oder mehr als 95 %, besonders bevorzugt mehr als 98 % der elektromagnetischen Strahlung, die durch den Lichtleiter geleitet werden, in den Kernen geführt. Für den Transport von Licht in den Kernen gelten die als bevorzugt genannten Wellenlängenbereiche, die bereits für den Lichtleiter angegeben wurden. Bevorzugt ist das Material der Kerne ausgewählt aus der Gruppe bestehend aus Glas oder Quarzglas, oder einer Kombination der beiden, besonders bevorzugt Quarzglas. Die Kerne können unabhängig voneinander aus dem gleichen Material oder aus unterschiedlichen Materialien bestehen. Bevorzugt bestehen alle Kerne aus dem gleichen Material, besonders bevorzugt aus Quarzglas.

Jeder Kern weist einen, bevorzugt runden, Querschnitt $Q_K$ auf und hat eine längliche Form mit der Länge $L_K$. Der Querschnitt $Q_K$ eines Kerns ist unabhängig von dem Querschnitt $Q_K$ jedes weiteren Kerns. Die Querschnitte $Q_K$ der Kerne können gleich oder verschieden sein. Bevorzugt sind die Querschnitte $Q_K$ aller Kerne gleich. Ein Querschnitt $Q_K$ eines Kerns wird immer in einer Ebene bestimmt, die senkrecht zu der Außenwand des Kerns bzw. der Lichtleiteraußenwand steht. Ist ein Kern in der Längsausdehnung gekrümmt, so wird der Querschnitt $Q_K$ senkrecht zu einer Tangente, welche in der Richtung der Längsausdehnung verläuft und an einem Punkt auf der Außenwand dieses Kerns anliegt, ermittelt. Die Länge $L_K$ eines Kerns ist unabhängig von der Länge $L_K$ jedes weiteren Kerns. Die Längen $L_K$ der Kerne können gleich oder verschieden sein. Bevorzugt sind die Längen $L_K$ aller Kerne gleich. Jeder Kern weist bevorzugt eine Länge $L_K$ in einem Bereich von 1 m bis 100 km auf. Jeder Kern weist einen Durchmesser $d_K$ auf. Der Durchmesser $d_K$ eines Kerns ist unabhängig von dem Durchmesser $d_K$ jedes weiteren Kerns. Die Durchmesser $d_K$ der Kerne können gleich oder verschieden sein. Bevorzugt sind die Durchmesser $d_K$ aller Kerne gleich. Bevorzugt liegt der Durchmesser $d_K$ jedes Kerns in einem Bereich von 0,1 bis 1000 $\mu$m, zum Beispiel von 0,2 bis 100 $\mu$m oder von 0,5 bis 50 $\mu$m, besonders bevorzugt von 1 bis 30 $\mu$m.

Jeder Kern weist mindestens einen Brechungsindexverlauf senkrecht zur maximalen Kernausdehnung auf. "Brechungsindexverlauf" bedeutet, dass der Brechungsindex senkrecht zur maximalen Kernausdehnung konstant ist oder sich verändert. Der bevorzugte Brechungsindexverlauf entspricht einem konzentrischen Brechungsindexprofil, zum Beispiel einem konzentrischen Brechungsindexprofil, bei dem sich ein erster Bereich mit dem maximalen Brechungsindex im Zentrum des Kerns befindet, dem sich ein weiterer Bereich mit einem niedrigeren Brechungsindex anschließt. Bevorzugt weist jeder Kern nur einen Brechungsindexverlauf über seine Länge $L_K$ auf. Der Brechungsindexverlauf eines Kerns ist unabhängig von dem Brechungsindexverlauf jedes weiteren Kerns. Die Brechungsindexverläufe der Kerne können gleich oder verschieden sein. Bevorzugt sind die Brechungsindexverläufe aller Kerne gleich. Es ist prinzipiell auch möglich, dass ein Kern eine Vielzahl verschiedener Brechungsindexverläufe aufweist.

Jeder Brechungsindexverlauf senkrecht zur maximalen Kernausdehnung weist einen maximalen Brechungsindex $n_K$ auf. Jeder Brechungsindexverlauf senkrecht zur maximalen Kernausdehnung kann zudem weitere niedrigere Brechungsindices aufweisen. Der niedrigste Brechungsindex des Brechungsindexverlaufs ist bevorzugt nicht um mehr als 0,5 geringer als der maximale Brechungsindex $n_K$ des Brechungsindexverlaufs. Der niedrigste Brechungsindex des Brechungsindexverlaufs ist bevorzugt um 0,0001 bis 0,15, zum Beispiel um 0,0002 bis 0,1, besonders bevorzugt um 0,0003 bis 0,05 geringer als der maximale Brechungsindex $n_K$ des Brechungsindexverlaufs.

Bevorzugt weist jeder Kern einen Brechungsindex $n_K$ in einem Bereich von 1,40 bis 1,60, zum Beispiel in einem Bereich von 1,41 bis 1,59, besonders bevorzugt in einem Bereich von 1,42 bis 1,58 auf, jeweils ermittelt bei einer Referenzwellenlänge von $\lambda_r$ = 589 nm (Natrium D-Linie), bei einer Temperatur von 20°C und bei Normaldruck (p = 1013 hPa). Weitere Angaben hierzu siehe Abschnitt Testmethoden. Der Brechungsindex $n_K$ eines Kerns ist unabhängig von dem Brechungsindex $n_K$ jedes weiteren Kerns. Die Brechungsindices $n_K$ der Kerne können gleich oder verschieden sein. Bevorzugt sind die Brechungsindices $n_K$ aller Kerne gleich.

Bevorzugt weist jeder Kern des Lichtleiters eine spezifische Dichte in einem Bereich von 1,9 bis 2,5 g/cm$^3$, zum Beispiel in einem Bereich von 2,0 bis 2,4 g/cm$^3$, besonders bevorzugt in einem Bereich von 2,1 bis 2,3 g/cm$^3$ auf. Bevorzugt weisen die Kerne eine Restfeuchte von weniger als 100 ppb auf, zum Beispiel von weniger als 20 ppb oder von weniger als 5 ppb, besonders bevorzugt von weniger als 1 ppb, jeweils bezogen auf das Gesamtgewicht des Kerns. Die spezifische Dichte eines Kerns ist unabhängig von der spezifischen Dichte jedes weiteren Kerns. Die spezifischen Dichten der Kerne können gleich oder verschieden sein. Bevorzugt sind die spezifischen Dichten aller Kerne gleich.

Beinhaltet ein Lichtleiter mehr als einen Kern, ist jeder Kern unabhängig von den weiteren Kernen durch die oben stehenden Merkmale gekennzeichnet. Es ist bevorzugt, dass alle Kerne die gleichen Merkmale aufweisen.

Die Kerne sind erfindungsgemäß von mindestens einer Hülle M1 umgeben. Die Hülle M1 umgibt die Kerne bevorzugt über die gesamte Länge der Kerne. Bevorzugt umgibt die Hülle M1 die Kerne zu mindestens 95 %, zum Beispiel zu mindestens 98 % oder zu mindestens 99 %, besonders bevorzugt zu 100 % der Außenoberfläche, also der gesamten Außenwand, der Kerne. Oftmals sind die Kerne bis auf die Enden (jeweils die letzten 1-5 cm) vollständig von der Hülle M1 umgeben. Dies dient dem Schutz der Kerne vor mechanischer Beeinträchtigung.

Die Hülle M1 kann jedes Material, beinhaltend Siliziumdioxid, beinhalten, das einen niedrigeren Brechungsindex aufweist als mindestens ein Punkt P im Verlauf des Querschnitts $Q_K$ des Kerns. Bevorzugt ist dieser mindestens eine Punkt P im Verlauf des Querschnitts $Q_K$ des Kerns, der Punkt, der im Zentrum des Kerns liegt. Weiterhin bevorzugt ist der Punkt P im Verlauf des Querschnitts $Q_K$ des Kerns der Punkt, der ein Maximum des Brechungsindexes $n_{Kmax}$ im Kern aufweist. Bevorzugt weist die Hülle M1 einen Brechungsindex $n_{M1}$ auf, der mindestens 0,0001 geringer ist als der Brechungsindex des Kerns $n_K$ an dem mindestens einen Punkt im Verlauf des Querschnitts Q des Kerns. Bevorzugt weist die Hülle M1 einen Brechungsindex $n_{M1}$ auf, der in einem Bereich von 0,0001 bis 0,5, zum Beispiel in einem Bereich von 0,0002 bis 0,4, besonders bevorzugt in einem Bereich von 0,0003 bis 0,3 geringer ist als der Brechungsindex des Kerns $n_K$.

Die Hülle M1 weist bevorzugt einen Brechungsindex $n_{M1}$ in einem Bereich von 1,0 bis 1,599, zum Beispiel in einem Bereich von 1,30 bis 1,59, besonders bevorzugt in einem Bereich von 1,40 bis 1,57 auf. Bevorzugt bildet die Hülle M1 einen Bereich des Lichtleiters mit einem konstanten Brechungsindex $n_{M1}$. Unter einem Bereich mit konstantem Brechungsindex wird ein Bereich verstanden, in dem der Brechungsindex nicht mehr als 0,0001 von dem Mittelwert des Brechungsindex $n_{M1}$ in diesem Bereich abweicht.

Prinzipiell kann der Lichtleiter weitere Hüllen beinhalten. Besonders bevorzugt weist zumindest eine der weiteren Hüllen, bevorzugt mehrere oder alle, einen Brechungsindex auf, der niedriger ist als der Brechungsindex $n_K$ jedes Kerns. Bevorzugt weist der Lichtleiter eine oder zwei oder drei oder vier oder mehr als vier weitere Hüllen auf, die die Hülle M1 umgeben. Bevorzugt weisen die die Hülle M1 umgebenden weiteren Hüllen einen Brechungsindex auf, der niedriger ist als der Brechungsindex $n_{MI}$ der Hülle M1.

Bevorzugt weist der Lichtleiter eine oder zwei oder drei oder vier oder mehr als vier weitere Hüllen auf, die die Kerne umgeben und von der Hülle M1 umgeben sind, also zwischen den Kernen und der Hülle M1 liegen. Weiterhin bevorzugt weisen die zwischen den Kernen und der Hülle M1 liegenden weiteren Hüllen einen Brechungsindex auf, der höher ist als der Brechungsindex $n_{M1}$ der Hülle M1.

Bevorzugt nimmt der Brechungsindex vom Kern des Lichtleiters zur äußersten Hülle hin ab. Die Abnahme des Brechungsindex vom Kern zur äußersten Hülle kann in Stufen oder stetig verlaufen. Die Abnahme des Brechungsindex kann verschiedene Abschnitte aufweisen. Weiter bevorzugt kann der Brechungsindex in mindestens einem Abschnitt stufenweise und in mindestens einem anderen Abschnitt stetig abnehmen. Die Stufen können gleich oder verschieden hoch sein. Es ist durchaus möglich, zwischen Abschnitten mit abnehmendem Brechungsindex Abschnitte mit steigendem Brechungsindex vorzusehen.

Die unterschiedlichen Brechungsindices der verschiedenen Hüllen können beispielsweise durch Dotierung der Hülle M1, der weiteren Hüllen und/oder der Kerne eingestellt werden.

Je nach Art der Herstellung eines Kerns kann ein Kern bereits nach seiner Herstellung eine erste Mantelschicht M0 aufweisen. Diese dem Kern unmittelbar benachbarte Mantelschicht M0 wird manchmal auch als integrale Mantelschicht bezeichnet. Die Mantelschicht M0 liegt dem Kernmittelpunkt näher als die Hülle M1 und, wenn enthalten, die weiteren Hüllen. Die Mantelschicht M0 dient in der Regel nicht der Lichtleitung bzw. Strahlungsleitung. Vielmehr trägt die Mantelschicht M0 dazu bei, dass die Strahlung innerhalb des Kerns verbleibt und dort transportiert wird. Die im Kern geleitete Strahlung wird bevorzugt am Übergang vom Kern in die Mantelschicht M0 reflektiert. Dieser Übergang von dem Kern zur Mantelschicht M0 ist bevorzugt durch eine Brechungsindexänderung gekennzeichnet. Der Brechungsindex der Mantelschicht M0 ist bevorzugt kleiner als der Brechungsindex $n_K$ des Kerns. Bevorzugt beinhaltet die Mantelschicht M0 das gleiche Material wie der Kern, weist jedoch aufgrund einer Dotierung oder von Additiven einen geringeren Brechungsindex als der Kern auf.

Erfindungsgemäß besteht die Hülle M1 aus Siliziumdioxid und weist

a) einen OH-Gehalt von weniger als 10 ppm, zum Beispiel von weniger als 5 ppm, besonders bevorzugt von weniger als 1 ppm; und
b) einen Chlorgehalt von weniger als 60 ppm, bevorzugt von weniger als 40 ppm, zum Beispiel von weniger als 40 ppm oder weniger als 2 ppm oder weniger als 0,5 ppm, besonders bevorzugt von weniger als 0,1 ppm; und
c) einen Aluminiumgehalt von weniger als 200 ppb, bevorzugt von weniger als 100 ppb, zum Beispiel von weniger als 80 ppb, besonders bevorzugt von weniger als 60 ppb auf,

wobei die ppb und ppm jeweils bezogen sind auf das Gesamtgewicht der Hülle M1.

Unter dem OH-Gehalt wird der Gehalt an OH-Ionen in der Hülle M1 verstanden. Darunter fallen sowohl permanente als auch mobile OH-Gruppen. Unter permanenten OH-Gruppen werden OH-Gruppen verstanden, die kovalent an das Silizium des Siliziumdioxidgranulats gebunden sind oder kovalent mit weiteren Elementen verbunden sind, die das Siliziumdioxidgranulat beinhaltet. Permanente OH-Gruppen werden durch eine Temperaturbehandlung in einem Bereich von 800 bis 1700°C nicht entfernt. Unter mobilen OH-Gruppen werden nicht-permanentene in der Hülle enthaltene OH-Gruppen verstanden. Mobile OH-Gruppen können durch Tempern bei über 800°C entfernt werden, wie dies für die thermische Behandlung der Siliziumdioxidpartikel oder pulver später noch beschrieben wird.

Bevorzugt weist die Mantelschicht M1 einen OH-Gehalt von weniger als 10 ppm, zum Beispiel von weniger als 5 ppm oder von weniger als 1 ppm oder in einem Bereich von 1 ppb bis 10 ppm oder in einem Bereich von 1 ppb bis 5 ppm, besonders bevorzugt in einem Bereich von 1 ppb bis 1 ppm auf.

Unter einem Chlorgehalt wird der Gehalt an elementarem Chlor oder Chlorid-Ionen in der Hülle M1 verstanden. Bevorzugt weist die Hülle M1 einen Chlorgehalt von weniger als 60 ppm, bevorzugt von weniger als 40 ppm, zum Beispiel von weniger als 40 ppm oder weniger als 2 ppm oder weniger als 0,5 ppm, besonders bevorzugt von weniger als 0,1 ppm auf. Oftmals beträgt der Chlorgehalt der Hülle M1 mindestens 1 ppb.

Unter einem Aluminiumgehalt wird der Gehalt an elementarem Aluminium oder Aluminium-Ionen in der Hülle M1 verstanden. Bevorzugt weist die Hülle M1 Aluminium von weniger als 200 ppb, zum Beispiel von weniger als 100 ppb oder von weniger als 80 ppb oder von weniger als 60 ppb, in einem Bereich von 1 bis 200 ppb oder in einem Bereich von 1 bis 100 ppb, besonders bevorzugt in einem Bereich von 1 bis 60 ppb auf.

In einer bevorzugten Ausführungsform des Lichtleiters weist die Hülle M1 mindestens eines, bevorzugt mehrere oder alle der folgenden Merkmale auf:

d) einen ODC-Anteil von weniger als $5\times10^{15}$ /cm$^3$, zum Beispiel in einem Bereich von $0,1\times10^{15}$ bis $3\times10^{15}$ /cm$^3$, besonders bevorzugt in einem Bereich von $0,5\times10^{15}$ bis $2,0\times10^{15}$ /cm$^3$;
e) einen Metallgehalt von Metallen, die von Aluminium verschieden sind, von weniger als 1 ppm, zum Beispiel von weniger als 0,5 ppm, besonders bevorzugt von weniger als 0,1 ppm;
f) eine Viskosität (p=1013 hPa) in einem Bereich von $\log_{10}$ ($\eta$ (1200°C) / dPas) = 13,4 bis $\log_{10}$ ($\eta$ (1200°C) / dPas) = 13,9 und/oder $\log_{10}$ ($\eta$ (1300°C) / dPas) = 11,5 bis $\log_{10}$ ($\eta$ (1300°C) / dPas) = 12,1 und/oder $\log_{10}$ ($\eta$ (1350°C) / dPas) = 1,2 bis $\log_{10}$ ($\eta$ (1350°C) / dPas) = 10,8;
g) einen Curl-Parameter von mehr als 6 m;
h) eine Standardabweichung des OH-Gehalts von nicht mehr als 10 %, bevorzugt nicht mehr als 5 %, bezogen auf den OH-Gehalt a) der Hülle M1;
i) eine Standardabweichung des Cl-Gehalts von nicht mehr als 10 %, bevorzugt nicht mehr als 5 %, bezogen auf den Cl-Gehalt b) der Hülle M1;
j) eine Standardabweichung des Al-Gehalts von nicht mehr als 10 %, bevorzugt nicht mehr als 5 %, bezogen auf den Al-Gehalt c) der Hülle M1
k) eine Brechzahlhomogenität von weniger als $1\times10^{-4}$;
l) einen Transformationspunkt $T_g$ in einem Bereich von 1150 bis 1250°C, besonders bevorzugt in einem Bereich von 1180 bis 1220°C,

wobei die ppb und ppm jeweils bezogen sind auf das Gesamtgewicht der Hülle M1.

Bevorzugt weist die Hülle M1 des Lichtleiters eine Merkmalskombination auf, ausgewählt aus der Gruppe bestehend aus: a)b), a)c), a)d), b)c), b)d), c)d), a)b)c), a)b)d), b)c)d) und a)b)c)d).

Die Abkürzung "ODC" steht für "oxygen deficient center". Unter "ODC" wird gemäß der Erfindung eine Fehlstelle im Siliziumdioxid des Quarzglases verstanden. Unter "ODC-Anteil" wird gemäß der Erfindung die Anzahl an ODC's pro $cm^3$ Quarzglas, zum Beispiel der Hülle M1 oder eines Quarzglaskörpers, verstanden. ODCs im Quarzglas können sein: $\equiv$Si-Si$\equiv$ und O=Si:.

Bevorzugt weist die Hülle M1 einen ODC-Anteil von weniger als $5\times10^{15}$ /$cm^3$, zum Beispiel in einem Bereich von $0,1\times10^{15}$ bis $3\times10^{15}$ /$cm^3$, besonders bevorzugt in einem Bereich von $0,5\times10^{15}$ bis $2,0\times10^{15}$ /$cm^3$ auf, jeweils bezogen auf den ODC-Anteil der gesamten Hülle M1. Der ODC-Anteil der Hülle M1 kann axial, radial oder axial und radial schwanken. Oftmals können an einem Messpunkt der Hülle M1 Schwankungen von bis zu $10^{14}$ /$cm^3$ auftreten, zum Beispiel bis zu $0,5\times10^{14}$ /$cm^3$, jeweils bezogen auf den ODC-Anteil der gesamten Hülle M1. Bevorzugt liegen die Schwankungen des ODC-Anteils unter $10^{13}$ /$cm^3$, jeweils bezogen auf den ODC-Anteil der gesamten Hülle M1. Bevorzugt liegt an mindestens 95 % der Hülle M1 der ODC-Anteil in einem Bereich von weniger als $5\times10^{15}$ /$cm^3$.

Bevorzugt weist die Hülle M1 einen Metallgehalt an von Aluminium verschiedenen Metallen von weniger als 1000 ppb, zum Beispiel von weniger als 500 ppb, besonders bevorzugt von weniger als 100 ppb, jeweils bezogen auf das Gesamtgewicht der Hülle M1, auf. Oftmals weist die Hülle M1 jedoch einen Gehalt an von Aluminium verschiedenen Metallen in einer Menge von mindestens 1 ppb auf. Solche Metalle sind beispielsweise Natrium, Lithium, Kalium, Magnesium, Calcium, Strontium, Germanium, Kupfer, Molybdän, Titan, Eisen und Chrom. Diese können zum Beispiel als Element, als Ion, als Teil eines Moleküls oder eines Ions oder eines Komplexes vorliegen.

Die Hülle M1 kann weitere Bestandteile beinhalten. Bevorzugt beinhaltet die Hülle M1 weniger als 500 ppm, zum Beispiel weniger als 450 ppm, besonders bevorzugt weniger als 400 ppm an weiteren Bestandteilen, wobei die ppm jeweils bezogen sind auf das Gesamtgewicht der Hülle M1. Als weitere Bestandteile kommen zum Beispiel Kohlenstoff, Fluor, Jod, Brom und Phosphor in Betracht. Diese können zum Beispiel als Element, als Ion, als Teil eines Moleküls oder eines Ions oder eines Komplexes vorliegen.

Bevorzugt beinhaltet die Hülle M1 Kohlenstoff zu weniger als 50 ppm, zum Beispiel zu weniger als 40 ppm oder zu weniger als 30 ppm, besonders bevorzugt zu weniger als 20 ppm, jeweils bezogen auf das Gesamtgewicht der Hülle M1.

Bevorzugt weist die Hülle M1 eine homogen verteilte OH-Menge, Chlormenge oder Aluminiummenge auf. Ein Indikator für die Homogenität der Hülle M1 kann in der Standardabweichung der OH-Menge, Chlormenge oder Aluminiummenge ausgedrückt werden. Die Standardabweichung ist das Maß für die Streubreite der Werte einer Variablen, hier der OH-Menge, Chlormenge oder Aluminiummenge, um deren arithmetisches Mittel. Zur Bestimmung der Standardabweichung wird der Gehalt der zu bestimmenden Komponente in der Probe, z.B. OH, Chlor oder Aluminium, an mindestens sieben Messpunkten bestimmt.

Bevorzugt weist die Hülle eine Brechzahlhomogenität von weniger als $1\times10^{-4}$ auf. Die Brechzahlhomogenität bezeichnet die maximale Abweichung des Brechungsindex an jeder Stelle einer Probe, beispielsweise einer Hülle M1 oder eines Quarzglaskörpers, bezogen auf den Mittelwert aller an der Probe ermittelten Brechungsindices. Zur Bestimmung des Mittelwerts wird der Brechungsindex an mindestens sieben Messpunkten ermittelt. Bevorzugt weist die Hülle eine Brechzahlhomogenität von weniger als $1\times10^{-4}$ auf, zum Beispiel von weniger als $2\times10^{-5}$, besonders bevorzugt von weniger als $1\times10^{-5}$.

In einer bevorzugten Ausführungsform des Lichtleiters weist die Hülle M1 einen Gewichtsanteil von mindestens 60 Gew.-%, zum Beispiel mindestens 70 Gew.-%, besonders bevorzugt mindestens 80 Gew.-%, jeweils bezogen auf das Gesamtgewicht der Hülle M1 und der Kerne, auf. Bevorzugt weist die Hülle M1 einen Gewichtsanteil von mindestens 60 Gew.-%, zum Beispiel mindestens 70 Gew.-%, besonders bevorzugt mindestens 80 Gew.-%, jeweils bezogen auf das Gesamtgewicht der Hülle M1, der Kerne und der zwischen der Hülle M1 und der Kerne liegenden weiteren Hüllen, auf. Bevorzugt weist die Hülle M1 einen Gewichtsanteil von mindestens 60 Gew.-%, zum Beispiel mindestens 70 Gew.-%, besonders bevorzugt mindestens 80 Gew.-%, jeweils bezogen auf das Gesamtgewicht des Lichtleiters auf.

Bevorzugt weist die Hülle M1 eine spezifische Dichte in einem Bereich von 2,1 bis 2,3 g/$cm^3$, besonders bevorzugt in einem Bereich von 2,18 bis 2,22 g/$cm^3$ auf.

Die Hülle M1 umgibt den oder die Kerne des Lichtleiters. Beinhaltet der Lichtleiter nur einen Kern, umgibt die Hülle den einen Kern. Beinhaltet der Lichtleiter mehr als einen Kern, kann die Hülle prinzipiell in jeder beliebigen Form ausgestaltet sein, die gewährleistet, dass alle Kerne von dieser Hülle umgeben sind. Zum Beispiel können mehrere Kerne als Bündel vorliegen. Dann ist das Bündel von der Hülle umgeben. Gemäß einer anderen, bevorzugten Ausführungsform ist die Hülle als Matrix ausgestaltet. Unter einer Matrix wird eine Hülle verstanden, in die die Kerne eingebettet und von dieser umgeben sind. Zwischen nebeneinander angeordneten Kernen befindet sich ebenfalls einbettende Matrix.

Die Hülle M1 weist bevorzugt die Merkmalskombination a)/b)/c)/d) oder a)/b)/c)/e) oder a)/b)/c)/f) auf, weiter bevorzugt die Merkmalskombination a)/b)/c)/d)/e) oder a)/b)/c)/d)/f) oder a)/b)/c)/e)/f), besonders bevorzugt die Merkmalskombination a)/b)/c)/d)/e)/f).

Die Hülle M1 weist bevorzugt die Merkmalskombination a)/b)/c)/d) auf, wobei der OH-Gehalt weniger als 5 ppm, der Chlorgehalt weniger als 40 ppm, der Aluminiumgehalt weniger als 80 ppb beträgt und der ODC-Anteil in einem Bereich von $0,1\times10^{15}$ bis $3\times10^{15}$ /$cm^3$ liegt.

Die Hülle M1 weist bevorzugt die Merkmalskombination a)/b)/c)/e) auf, wobei der OH-Gehalt weniger als 5 ppm, der Chlorgehalt weniger als 40 ppm, der Aluminiumgehalt weniger als 80 ppb beträgt und der Gesamtgehalt an Metallen, die von Aluminium verschieden sind, weniger als 0,1 ppm beträgt.

Die Hülle M1 weist bevorzugt die Merkmalskombination a)/b)/c)/f) auf, wobei der OH-Gehalt weniger als 5 ppm, der Chlorgehalt weniger als 40 ppm, der Aluminiumgehalt weniger als 80 ppb beträgt und die Viskosität (p=1013 hPa) in einem Bereich von $\log_{10}$ (η (1200°C) / dPas) = 13,4 bis $\log_{10}$ (η (1200°C) / dPas) = 13,9 liegt.

Die Hülle M1 weist bevorzugt die Merkmalskombination a)/b)/c)/d)/e) auf, wobei der OH-Gehalt weniger als 5 ppm, der Chlorgehalt weniger als 40 ppm, der Aluminiumgehalt weniger als 80 ppb beträgt, der ODC-Anteil in einem Bereich von $0,1\times10^{15}$ bis $3\times10^{15}$ /cm³ liegt und der Gesamtgehalt an Metallen, die von Aluminium verschieden sind, weniger als 0,1 ppm beträgt.

Die Hülle M1 weist bevorzugt die Merkmalskombination a)/b)/c)/d)/f) auf, wobei der OH-Gehalt weniger als 5 ppm, der Chlorgehalt weniger als 40 ppm, der Aluminiumgehalt weniger als 80 ppb beträgt, der ODC-Anteil in einem Bereich von $0,1\times10^{15}$ bis $3\times10^{15}$ /cm³ liegt und die Viskosität (p=1013 hPa) in einem Bereich von $\log_{10}$ (η (1200°C) / dPas) = 13,4 bis $\log_{10}$ (η (1200°C) / dPas) = 13,9 liegt.

Die Hülle M1 weist bevorzugt die Merkmalskombination a)/b)/c)/e)/f) auf, wobei der OH-Gehalt weniger als 5 ppm, der Chlorgehalt weniger als 40 ppm, der Aluminiumgehalt weniger als 80 ppb beträgt, der Gesamtgehalt an Metallen, die von Aluminium verschieden sind, weniger als 0,1 ppm beträgt und die Viskosität (p=1013 hPa) in einem Bereich von $\log_{10}$ (η (1200°C) / dPas) = 13,4 bis $\log_{10}$ (η (1200°C) / dPas) = 13,9 liegt.

Die Hülle M1 weist bevorzugt die Merkmalskombination a)/b)/c)/d)/e)/f) auf, wobei der OH-Gehalt weniger als 5 ppm, der Chlorgehalt weniger als 40 ppm, der Aluminiumgehalt weniger als 80 ppb beträgt, der ODC-Anteil in einem Bereich von $0,1\times10^{15}$ bis $3\times10^{15}$ /cm³ liegt, der Gesamtgehalt an Metallen, die von Aluminium verschieden sind, weniger als 0,1 ppm beträgt und die Viskosität (p=1013 hPa) in einem Bereich von $\log_{10}$ (η (1200°C) / dPas) = 13,4 bis $\log_{10}$ (η (1200°C) / dPas) = 13,9 liegt.

**Siliziumdioxidgranulat I**

Ein Siliziumdioxidgranulat I weist folgende Merkmale auf:

[A] einen Chlorgehalt von weniger als 200 ppm, bevorzugt von weniger als 150 ppm, zum Beispiel weniger als 100 ppm, oder von weniger als 50 ppm, oder von weniger als 1 ppm, oder von weniger als 500 ppb, oder von weniger als 200 ppb, oder in einem Bereich von 1 ppb bis weniger als 200 ppm, oder von 1 ppb bis 100 ppm, oder von 1 ppb bis 1 ppm, oder von 10 ppb bis 500 ppb, oder von 10 ppb bis 200 ppb, besonders bevorzugt von 1 ppb bis 80 ppb; und

[B] einen Aluminiumgehalt von weniger als 200 ppb, bevorzugt von weniger als 100 ppb, zum Beispiel von weniger als 50 ppb oder von 1 bis 200 ppb oder von 1 bis 100 ppb, besonders bevorzugt in einem Bereich von 1 bis 50 ppb;

wobei die ppb und ppm bezogen sind auf das Gesamtgewicht des Siliziumdioxidgranulats I.

Unter einem Pulver werden Partikel trockener fester Stoffe mit einer Primärpartikelgröße im Bereich von 1 bis weniger als 100 nm verstanden.

Das Siliziumdioxidgranulat kann durch Granulieren von Siliziumdioxidpulver erhalten werden. Ein Siliziumdioxidgranulat weist in der Regel eine BET-Oberfläche von 3 m²/g oder mehr und eine Dichte von weniger als 1,5 g/cm³ auf. Unter Granulieren versteht man das Überführen von Pulverteilchen in Granulen. Beim Granulieren bilden sich Zusammenlagerungen von mehreren Siliziumdioxidpulverteilchen größere Agglomerate, die als "Siliziumdioxidgranulen" bezeichnet werden. Diese werden oft auch als "Siliziumdioxidgranulatteilchen" oder "Granulatteilchen" bezeichnet. In ihrer Gesamtheit bilden Granulen ein Granulat, z.B. die Siliziumdioxidgranulen ein "Siliziumdioxidgranulat". Das Siliziumdioxidgranulat weist einen größeren Partikeldurchmesser auf als das Siliziumdioxidpulver.

Der Vorgang des Granulierens, um ein Pulver in Granulate zu überführen, wird später näher erläutert.

Unter Siliziumdioxidkörnung werden im vorliegenden Kontext Siliziumdioxidpartikel verstanden, die durch ein Zerkleinern eines Siliziumdioxidkörpers, insbesondere eines Quarzglaskörpers erhältlich sind. Eine Siliziumdioxidkörnung weist in der Regel eine Dichte von mehr als 1,2 g/cm³, zum Beispiel in einem Bereich von 1,2 bis 2,2 g/cm³, und besonders bevorzugt von etwa 2,2 g/cm³ auf. Weiter bevorzugt beträgt die BET-Oberfläche einer Siliziumdioxidkörnung in der Regel weniger als 1 m²/g, bestimmt gemäß DIN ISO 9277:2014-01.

Als Siliziumdioxidpartikel kommen prinzipiell alle dem Fachmann geeigneten Siliziumdioxidpartikel in Betracht. Bevorzugt ausgewählt werden Siliziumdioxidgranulat und Siliziumdioxidkörnung.

Unter einem Partikeldurchmesser oder einer Partikelgröße wird der Durchmesser eines Partikels verstanden, der sich als "area equivalent circular diameter $\chi_{Ai}$" gemäß der Formel $x_{Ai} = \sqrt{\frac{4A_i}{\pi}}$ ergibt, wobei Ai die Fläche des betrachteten Partikels bei einer Bildanalyse bedeutet. Als Methoden zur Bestimmung eignen sich zum Beispiel ISO 13322-1:2014 oder ISO 13322-2:2009. Vergleichende Angaben wie "größerer Partikeldurchmesser" bedeutet immer, dass die in Bezug gesetzten Werte mit derselben Methode bestimmt wurden.

Bevorzugt weist das Siliziumdioxidgranulat I eines, bevorzugt mehrere oder alle der folgenden Merkmale auf:

[C] einen Metallgehalt von Metallen, die von Aluminium verschieden sind, von weniger als 1000 ppb, bevorzugt in einem Bereich von 40 bis 900 ppb, zum Beispiel in einem Bereich von 50 bis 700 ppb, besonders bevorzugt in einem Bereich von 60 bis 500 ppb;

[D] eine BET-Oberfläche in einem Bereich von 20 bis 50 $m^2/g$, zum Beispiel in einem Bereich von 20 bis 40 $m^2/g$; besonders bevorzugt in einem Bereich von 25 bis 35 $m^2/g$; dabei beläuft sich bevorzugt der Mikroporenanteil auf eine BET-Oberfläche in einem Bereich von 4 bis 5 $m^2/g$; zum Beispiel in einem Bereich von 4,1 bis 4,9 $m^2/g$; besonders bevorzugt in einem Bereich von 4,2 bis 4,8 $m^2/g$;

[E] ein Porenvolumen in einem Bereich von 0,1 bis 1,5 mL/g, zum Beispiel in einem Bereich von 0,15 bis 1,1 mL/g; besonders bevorzugt in einem Bereich von 0,2 bis 0,8 mL/g;

[F] eine Restfeuchte von weniger als 10 Gew.-%, bevorzugt in einem Bereich von 0,01 Gew.-% bis 5 Gew.-%, zum Beispiel von 0,02 bis 1 Gew.-%, besonders bevorzugt von 0,03 bis 0,5 Gew.-%;

[G] eine Schüttdichte in einem Bereich von 0,5 bis 1,2 $g/cm^3$, zum Beispiel in einem Bereich von 0,6 bis 1,1 $g/cm^3$, besonders bevorzugt in einem Bereich von 0,7 bis 1,0 $g/cm^3$;

[H] eine Stampfdichte in einem Bereich von 0,5 bis 1,2 $g/cm^3$, zum Beispiel in einem Bereich von 0,6 bis 1,1 $g/cm^3$, besonders bevorzugt in einem Bereich von 0,75 bis 1,0 $g/cm^3$;

[I] eine Menge von Kohlenstoff von weniger als 50 ppm;

[J] eine Partikelgrößenverteilung $D_{10}$ in einem Bereich von 50 bis 150 $\mu m$;

[K] eine Partikelgrößenverteilung $D_{50}$ in einem Bereich von 150 bis 300 $\mu m$;

[L] eine Partikelgrößenverteilung $D_{90}$ in einem Bereich von 250 bis 620 $\mu m$,

wobei die Gew.-%, ppb und ppm bezogen sind auf das Gesamtgewicht des Siliziumdioxidgranulats I.

Weiterhin bevorzugt weisen die Granulen des Siliziumdioxidgranulats I eine sphärische Morphologie auf. Unter einer sphärischen Morphologie wird eine runde bis ovale Form der Partikel verstanden. Die Granulen des Siliziumdioxidgranulats I weisen bevorzugt eine mittlere Sphärizität in einem Bereich von 0,7 bis 1,3 SPHT3, zum Beispiel eine mittlere Sphärizität in einem Bereich von 0,8 bis 1,2 SPHT3, besonders bevorzugt eine mittlere Sphärizität in einem Bereich von 0,85 bis 1,1 SPHT3 auf. Das Merkmal SPHT3 ist in den Testmethoden beschrieben.

Weiterhin bevorzugt weisen die Granulen des Siliziumdioxidgranulats eine mittlere Symmetrie in einem Bereich von 0,7 bis 1,3 Symm3, zum Beispiel eine mittlere Symmetrie in einem Bereich von 0,8 bis 1,2 Symm3, besonders bevorzugt eine mittlere Symmetrie in einem Bereich von 0,85 bis 1,1 Symm3 auf. Das Merkmal der mittleren Symmetrie Symm3 ist in den Testmethoden beschrieben.

Das Siliziumdioxidgranulat I kann weitere Bestandteile, beispielsweise in Form von Molekülen, Ionen oder Elementen beinhalten. Bevorzugt beinhaltet der Siliziumdioxidgranulat I weniger als 500 ppm, zum Beispiel weniger als 200 ppm, besonders bevorzugt weniger als 100 ppm, jeweils bezogen auf das Gesamtgewicht des Siliziumdioxidgranulats I, weitere Bestandteile. Die weiteren Bestandteile können ausgewählt sein aus der Gruppe bestehend aus Kohlenstoff, Fluorid, Jodid, Bromid, Phosphor oder einer Mischung von mindestens zwei hiervon. Bevorzugt beinhaltet das Siliziumdioxidgranulat I Kohlenstoff zu weniger als 50 ppm, zum Beispiel zu weniger als 40 ppm oder zu weniger als 30 ppm, besonders bevorzugt zu weniger als 20 ppm, jeweils bezogen auf das Gesamtgewicht des Siliziumdioxidgranulats I. Bevorzugt beinhaltet das Siliziumdioxidgranulat I weniger als 100 ppm, zum Beispiel weniger als 70 ppm, besonders bevorzugt weniger als 50 ppm, jeweils bezogen auf das Gesamtgewicht des Siliziumdioxidgranulats I, an Bestandteilen neben Siliziumdioxid, OH-Ionen, Chlor bzw. Chlorid, oder Aluminium.

Das Siliziumdioxidgranulat I weist bevorzugt eine spezifische Dichte in einem Bereich von 2,1 bis 2,3 $g/cm^3$, besonders bevorzugt in einem Bereich von 2,18 bis 2,22 $g/cm^3$ auf.

Die Definition der Schüttdichte und der Stampfdichte ist dem Verfahren zur Herstellung von Siliziumdioxidgranulaten zu entnehmen.

Das Siliziumdioxidgranulat I weist bevorzugt eine mittlere Partikelgröße in einem Bereich von 200 bis 300 $\mu m$, zum Beispiel in einem Bereich von 220 bis 280 $\mu m$, besonders bevorzugt in einem Bereich von 230 bis 270 $\mu m$ auf.

Das Siliziumdioxidgranulat I weist bevorzugt eine Partikelgröße $D_{50}$ in einem Bereich von 150 bis 300 $\mu m$, zum Beispiel in einem Bereich von 180 bis 280 $\mu m$, besonders bevorzugt in einem Bereich von 220 bis 270 $\mu m$, auf. Weiterhin bevorzugt weist das Siliziumdioxidgranulat I eine Partikelgröße $D_{10}$ in einem Bereich von 50 bis 150 $\mu m$ auf, zum Beispiel in einem Bereich von 80 bis 150 $\mu m$, besonders bevorzugt in einem Bereich von 100 bis 150 $\mu m$. Weiterhin bevorzugt weist das Siliziumdioxidgranulat I eine Partikelgröße $D_{90}$ in einem Bereich von 250 bis 620 $\mu m$, zum Beispiel in einem Bereich von 280 bis 550 $\mu m$, besonders bevorzugt in einem Bereich von 300 bis 450 $\mu m$, auf.

Das Siliziumdioxidgranulat I weist bevorzugt die Merkmalskombination [A]/[B]/[D] oder [A]/[B]/[G] oder [A]/[B]/[K] auf, weiter bevorzugt die Merkmalskombination [A]/[B]/[D]/[G] oder [A]/[B]/[D]/[K] oder [A]/[B]/[G]/[K], besonders bevorzugt die Merkmalskombination [A]/[B]/[D]/[G]/[K].

Das Siliziumdioxidgranulat I weist bevorzugt die Merkmalskombination [A]/[B]/[D] auf, wobei der Chlorgehalt weniger als 100 ppm beträgt, der Aluminiumgehalt weniger als 100 ppb beträgt und die BET-Oberfläche in einem Bereich von 10 bis 40 $m^2$/g liegt.

Das Siliziumdioxidgranulat I weist bevorzugt die Merkmalskombination [A]/[B]/[G] auf, wobei der Chlorgehalt weniger als 100 ppm beträgt, der Aluminiumgehalt weniger als 100 ppb beträgt und die Schüttdichte in einem Bereich von 0,6 bis 1,1 $g/cm^3$ liegt.

Das Siliziumdioxidgranulat I weist bevorzugt die Merkmalskombination[A]/[B]/[K] auf, wobei der Chlorgehalt weniger als 100 ppm beträgt, der Aluminiumgehalt weniger als 100 ppb beträgt und die Partikelgrößenverteilung $D_{50}$ in einem Bereich von 150 bis 300 $\mu$m liegt.

Das Siliziumdioxidgranulat I weist bevorzugt die Merkmalskombination [A]/[B]/[D]/[G] auf, wobei der Chlorgehalt weniger als 100 ppm beträgt, der Aluminiumgehalt weniger als 100 ppb beträgt, die BET-Oberfläche in einem Bereich von 10 bis 40 $m^2$/g liegt und die Schüttdichte in einem Bereich von 0,6 bis 1,1 $g/cm^3$ liegt.

Das Siliziumdioxidgranulat I weist bevorzugt die Merkmalskombination [A]/[B]/[D]/[K] auf, wobei der Chlorgehalt weniger als 100 ppm beträgt, der Aluminiumgehalt weniger als 100 ppb beträgt, die BET-Oberfläche in einem Bereich von 10 bis 40 $m^2$/g liegt und die Partikelgrößenverteilung $D_{50}$ in einem Bereich von 150 bis 300 $\mu$m liegt.

Das Siliziumdioxidgranulat I weist bevorzugt die Merkmalskombination [A]/[B]/[G]/[K] auf, wobei der Chlorgehalt weniger als 100 ppm beträgt, der Aluminiumgehalt weniger als 100 ppb beträgt, die Schüttdichte in einem Bereich von 0,6 bis 1,1 $g/cm^3$ liegt und die Partikelgrößenverteilung $D_{50}$ in einem Bereich von 150 bis 300 $\mu$m liegt.

Das Siliziumdioxidgranulat I weist bevorzugt die Merkmalskombination [A]/[B]/[D]/[G]/[K] auf, wobei der Chlorgehalt weniger als 100 ppm beträgt, der Aluminiumgehalt weniger als 100 ppb beträgt, die BET-Oberfläche in einem Bereich von 10 bis 40 $m^2$/g liegt, die Schüttdichte in einem Bereich von 0,6 bis 1,1 $g/cm^3$ liegt und die Partikelgrößenverteilung $D_{50}$ in einem Bereich von 150 bis 300 $\mu$m liegt.

Unter Partikelgröße wird die Größe der aus den Primärpartikeln zusammengelagerten Teilchen verstanden, die in einem Siliziumdioxidpulver, in einer Aufschlämmung oder in einem Siliziumdioxidgranulat vorliegen. Unter der mittleren Partikelgröße wird der arithmetische Mittelwert aller Partikelgrößen des genannten Stoffes verstanden. Der $D_{50}$-Wert gibt an, dass 50 % der Partikel, bezogen auf die gesamte Teilchenzahl, kleiner als der angegebene Wert sind. Der $D_{10}$-Wert gibt an, dass 10 % der Partikel, bezogen auf die gesamte Teilchenzahl, kleiner als der angegebene Wert sind. Der $D_{90}$-Wert gibt an, dass 90 % der Partikel, bezogen auf die gesamte Teilchenzahl, kleiner als der angegebene Wert sind. Die Partikelgröße wird mittels dynamischem Bildanalyseverfahren nach ISO 13322-2:2006-11 bestimmt.

Ein Verfahren zum Herstellen von Siliziumdioxidgranulat I beinhaltet folgende Schritte:

I. Bereitstellen eines Siliziumdioxidpulvers;

II. Bereitstellen einer Flüssigkeit;

III. Mischen der Komponenten aus Schritt I. und II. unter Erhalt einer Aufschlämmung; und

IV. Sprühtrocknen, bevorzugt Sprühgranulieren, der Aufschlämmung unter Erhalt eines Siliziumdioxidgranulats I.

Das Siliziumdioxidpulver weist folgende Merkmale auf:

a. einen Chlorgehalt von weniger als 200 ppm, zum Beispiel im Bereich von 1 ppb bis 150 ppm, oder von 10 ppb bis 100 ppm, besonders bevorzugt im Bereich von 100 ppb bis 80 ppm, jeweils bezogen auf das Gesamtgewicht des Siliziumdioxidpulvers; und

b. einen Aluminiumgehalt von weniger als 200 ppb, zum Beispiel im Bereich von 1 bis 150 ppb oder von 1 bis 100 ppb, besonders bevorzugt im Bereich von 1 bis 80 ppb, jeweils bezogen auf das Gesamtgewicht des Siliziumdioxidpulvers,

wobei die ppb und ppm jeweils bezogen sind auf das Gesamtgewicht des Siliziumdioxidpulvers.

Das Siliziumdioxidpulver weist bevorzugt mindestens eines, zum Beispiel mindestens zwei oder mindestens drei oder mindestens vier, besonders bevorzugt alle der folgenden Merkmale auf:

c. eine BET-Oberfläche in einem Bereich von 20 bis 60 $m^2$/g, zum Beispiel von 25 bis 55 $m^2$/g, oder von 30 bis 50 $m^2$/g, besonders bevorzugt von 20 bis 40 $m^2$/g;

d. eine Schüttdichte in einem Bereich von 0,01 bis 0,3 $g/cm^3$, zum Beispiel im Bereich von 0,02 bis 0,2 $g/cm^3$, bevorzugt im Bereich von 0,03 bis 0,15 $g/cm^3$;

e. einen Kohlenstoffgehalt von weniger als 50 ppm;

f. einen Gesamtgehalt an Metallen, die von Aluminium verschieden sind, von weniger als 5 ppm, zum Beispiel von weniger als 2 ppm, besonders bevorzugt in einem Bereich von 1 ppb bis 1 ppm;

g. mindestens 70 Gew.-% der Pulverteilchen weisen eine Primärpartikelgröße in einem Bereich von 10 bis 100 nm auf, zum Beispiel im Bereich von 15 bis weniger als 100 nm, besonders bevorzugt im Bereich von 20 bis weniger als 100 nm auf;

h. eine Stampfdichte in einem Bereich von 0,001 bis 0,3 $g/cm^3$, zum Beispiel im Bereich von 0,002 bis 0,2 $g/cm^3$ oder von 0,005 bis 0,1 $g/cm^3$, bevorzugt im Bereich von 0,01 bis 0,06 $g/cm^3$;

i. eine Restfeuchte von weniger als 5 Gew.-%, zum Beispiel im Bereich von 0,25 bis 3 Gew.-%, besonders bevorzugt im Bereich von 0,5 bis 2 Gew.-%;

j. eine Partikelgrößenverteilung $D_{10}$ im Bereich von 1 bis 7 $\mu$m, zum Beispiel im Bereich von 2 bis 6 $\mu$m oder im Bereich von 3 bis 5 $\mu$m, besonders bevorzugt im Bereich von 3,5 bis 4,5 $\mu$m;

k. eine Partikelgrößenverteilung $D_{50}$ im Bereich von 6 bis 15 $\mu$m, zum Beispiel im Bereich von 7 bis 13 $\mu$m oder im Bereich von 8 bis 11 $\mu$m, besonders bevorzugt im Bereich von 8,5 bis 10,5 $\mu$m;

1. eine Partikelgrößenverteilung $D_{90}$ im Bereich von 10 bis 40 $\mu$m, zum Beispiel im Bereich von 15 bis 35 $\mu$m, besonders bevorzugt im Bereich von 20 bis 30 $\mu$m;

wobei die Gew.-%, ppb und ppm jeweils auf das Gesamtgewicht des Siliziumdioxidpulvers bezogen sind.

## Siliziumdioxidpulver

Siliziumdioxidprimärteilchen fallen als sogenannter "Soot" bei der Herstellung von synthetischem Quarzglas an. "Soot" kann unter Einsatz von Flammhydrolysebrennern abgeschieden werden. Dazu wird entlang einer Brennerreihe ein rotierendes Trägerrohr, das eine Zylindermantelfläche aufweist, reversierend hin- und herbewegt. Den Flammhydrolysebrennern können dabei als Brennergase jeweils Sauerstoff und Wasserstoff sowie die Ausgangsmaterialien für die Bildung der Siliziumdioxidpartikel zugeführt werden. Die durch Flammenhydrolyse erzeugten Siliziumdioxidprimärteilchen aggregieren oder agglomerieren zu Siliziumdioxid-Sootpartikeln mit Partikelgrößen im Nanometerbereich. Diese Siliziumdioxid-Sootpartikel werden auf der Zylindermantelfläche des um seine Längsachse rotierenden Trägerrohrs abgeschieden, wodurch nach und nach, schichtweise, ein sogenannter Sootkörper aufgebaut wird. Ein anderer Teil der Siliziumdioxid-Sootpartikel durchläuft nicht die Bildung zum Sootkörper, sondern gelangt über eine Absaugung in eine Filteranlage. Diese Siliziumdioxid-Sootpartikel fallen als sogenannter "Sootstaub" an. Der "Sootstaub" ist oftmals ein Nebenprodukt des Verfahrens zur Quarzglasherstellung, das über den zuvor erwähnten Sootkörper verläuft. Das Nebenprodukt wird oftmals aufwendig und kostenintensiv entsorgt. Im Fall der vorliegenden Erfindung kann es als Ausgangsstoff eingesetzt werden und wird im Folgenden als "Siliziumdioxidpulver" bezeichnet.

Folglich ist eine Quelle des erfindungsgemäß beanspruchten "Siliziumdioxidpulvers" Sootstaub, der bei der Herstellung Quarzglas als Nebenprodukt erzeugt wird.

Eine alternative Darstellung von Siliziumdioxidpulver ist eine durch Flammenhydrolyse gezielte Herstellung von Sootstaub. In diesem Fall werden die in der Flammenhydrolyse gebildeten Siliziumdioxid-Partikel abgeführt, bevor sich Agglomerate oder Aggregate bilden. Hier ist der Sootstaub Hauptprodukt. Dies ist eine zweite Quelle für das erfindungsgemäß beanspruchte Siliziumdioxidpulver.

Als Ausgangsmaterialien für die Bildung des Siliziumdioxidpulvers eignen sich bevorzugt Siloxane, Siliziumalkoxide und anorganische Siliziumverbindungen. Unter Siloxanen werden lineare und cyclische Polyalkylsiloxane verstanden. Bevorzugt haben Polyalkylsiloxane die allgemeine Formel

$$Si_pO_pR_{2p},$$

wobei p eine ganze Zahl von mindestens 2, bevorzugt von 2 bis 10, besonders bevorzugt von 3 bis 5, und R eine Alkylgruppe mit 1 bis 8 C-Atomen, bevorzugt mit 1 bis 4 C-Atomen, besonders bevorzugt eine Methylgruppe ist.

Besonders bevorzugt sind Siloxane ausgewählt aus der Gruppe bestehend aus Hexamethyldisiloxan (D3), Hexamethylcyclotrisiloxan (D4), Octamethylcyclotetrasiloxan und Dekamethylcyclopentasiloxan (D5) oder einer Kombination von zwei oder mehr davon. Umfasst das Siloxan D3, D4 und D5, ist D4 bevorzugt die Hauptkomponente. Die Hauptkomponente liegt bevorzugt mit einem Anteil von mindestens 70 Gew.-%, bevorzugt von mindestens 80 Gew.-%, zum Beispiel von mindestens 90 Gew.-% oder von mindestens 94 Gew.-%, besonders bevorzugt von mindestens 98 Gew.-%, jeweils bezogen auf die Gesamtmenge Siliziumdioxidpulver, vor. Bevorzugte Siliziumalkoxide sind Tetramethoxysilan und Methyltrimethoxysilan. Bevorzugte anorganische Siliziumverbindungen als Ausgangsmaterial für Siliziumdioxidpulver sind Siliziumhalogenide, Silikate, Siliziumcarbid und Siliziumnitrid. Besonders bevorzugt als anorganische Siliziumverbindung als Ausgangsmaterial für Siliziumdioxidpulver sind $SiCl_4$ und $SIHCl_3$.

Das Siliziumdioxidpulver enthält Siliziumdioxid. Bevorzugt enthält das Siliziumdioxidpulver Siliziumdioxid in einer Menge von mehr als 95 Gew.-%, zum Beispiel in einer Menge von mehr als 98 Gew.-%.oder von mehr als 99 Gew.-%, oder von mehr als 99,9 Gew.-%, jeweils bezogen auf das Gesamtgewicht des Siliziumdioxidpulvers. Besonders bevorzugt enthält das Siliziumdioxidpulver Siliziumdioxid in einer Menge von mehr als 99,99 Gew.-%, bezogen auf das Gesamtgewicht des Siliziumdioxidpulvers.

Bevorzugt weist das Siliziumdioxidpulver einen Metallgehalt an von Aluminium verschiedenen Metallen von weniger als 1000 ppb, zum Beispiel von weniger als 800 ppb oder von weniger als 500 ppb oder von weniger als 300 ppb, besonders bevorzugt von weniger als 150 ppb, jeweils bezogen auf das Gesamtgewicht des Siliziumdioxidpulvers, auf. Oftmals weist das Siliziumdioxidpulver jedoch einen Gehalt an von Aluminium verschiedenen Metallen in einer Menge von mindestens 1 ppb auf. Solche Metalle sind beispielsweise Natrium, Lithium, Kalium, Magnesium, Calcium, Strontium, Germanium, Kupfer, Molybdän, Titan, Eisen und Chrom. Diese können zum Beispiel als Element, als Ion, als Teil eines Moleküls oder eines Ions oder eines Komplexes vorliegen.

Bevorzugt hat das Siliziumdioxidpulver einen Gesamtanteil an Verunreinigungen von weniger als 1000 ppb, zum Beispiel von weniger als 700 ppb oder von weniger als 500 ppb oder von weniger als 300 ppb, und besonders bevorzugt von weniger als 200 ppb, die ppb jeweils bezogen auf das Gesamtgewicht des Siliziumdioxidpulvers.

Bevorzugt weisen mindestens 70 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis weniger als 100 nm oder von 15 bis weniger als 100 nm, und besonders bevorzugt im Bereich von 20 bis weniger als 100 nm auf. Die Primärpartikelgröße wird durch dynamische Lichtstreuung nach ISO 13320:2009-10 bestimmt.

Bevorzugt weisen mindestens 75 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis weniger als 100 nm oder von 15 bis weniger als 100 nm, und besonders bevorzugt im Bereich von 20 bis weniger als 100 nm.

Bevorzugt weisen mindestens 80 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis weniger als 100 nm oder von 15 bis weniger als 100 nm, und besonders bevorzugt im Bereich von 20 bis weniger als 100 nm.

Bevorzugt weisen mindestens 85 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis weniger als 100 nm oder von 15 bis weniger als 100 nm, und besonders bevorzugt im Bereich von 20 bis weniger als 100 nm.

Bevorzugt weisen mindestens 90 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis weniger als 100 nm oder von 15 bis weniger als 100 nm, und besonders bevorzugt im Bereich von 20 bis weniger als 100 nm.

Bevorzugt weisen mindestens 95 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis weniger als 100 nm oder von 15 bis weniger als 100 nm, und besonders bevorzugt im Bereich von 20 bis weniger als 100 nm.

Bevorzugt weist das Siliziumdioxidpulver eine Partikelgröße $D_{10}$ im Bereich von 1 bis 7 $\mu$m auf, zum Beispiel im Bereich von 2 bis 6 $\mu$m oder im Bereich von 3 bis 5 $\mu$m, besonders bevorzugt im Bereich von 3,5 bis 4,5 $\mu$m. Bevorzugt weist das Siliziumdioxidpulver eine Partikelgröße $D_{50}$ im Bereich von 6 bis 15 $\mu$m auf, zum Beispiel im Bereich von 7 bis 13 oder im Bereich von 8 bis 11 $\mu$m, besonders bevorzugt im Bereich von 8,5 bis 10,5 $\mu$m. Bevorzugt weist das Siliziumdioxidpulver eine Partikelgröße $D_{90}$ im Bereich von 10 bis 40 $\mu$m auf, zum Beispiel im Bereich von 15 bis 35, besonders bevorzugt im Bereich von 20 bis 30 $\mu$m.

Wird als Ausgangsmaterial des Siliziumdioxidpulvers ein Gemisch umfassend D3, D4 und D5 verwendet, enthält das Siliziumdioxidpulver bevorzugt D3 und D5 in einem Verhältnis im Bereich von 1:100 bis 100:1, zum Beispiel in einem Verhältnis im Bereich von 1:50 bis 50:1 oder von 1:25 bis 25:1, besonders bevorzugt in einem Verhältnis im Bereich von 1:10 bis 10:1.

Bevorzugt weist das Siliziumdioxidpulver eine spezifische Oberfläche (BET-Oberfläche) in einem Bereich von 10 bis 60 m$^2$/g auf, zum Beispiel von 15 bis 50 m$^2$/g, besonders bevorzugt von 20 bis 40 m$^2$/g. Die BET-Oberfläche wird nach der Methode von Brunauer, Emmet und Teller (BET) anhand der DIN ISO 9277:2014-01 ermittelt und basiert auf Gasabsorption an der zu messenden Oberfläche.

Bevorzugt hat das Siliziumdioxidpulver einen pH-Wert von weniger als 7, zum Beispiel im Bereich von 3 bis 6,5 oder von 3,5 bis 6 oder von 4 bis 5,5, besonders bevorzugt im Bereich von 4,5 bis 5. Der pH-Wert kann mittels Einstabmesselektrode ermittelt werden (4 Gew.-% Siliziumdioxidpulver in Wasser).

Das Siliziumdioxidpulver weist bevorzugt die Merkmalskombination a./b./c. oder a./b./d. oder a./b./e. auf, weiter bevorzugt die Merkmalskombination a./b./c./d. oder a./b./c./e. oder a./b./d./e., besonders bevorzugt die Merkmalskombination a./b./c./e./e.

Das Siliziumdioxidpulver weist bevorzugt die Merkmalskombination a./b./c. auf, wobei der Chlorgehalt in einem Bereich von 1 ppb bis 150 ppm liegt, der Aluminiumgehalt in einem Bereich von 1 bis 150 ppb liegt und die BET-Oberfläche in einem Bereich von 20 bis 40 m$^2$/g liegt.

Das Siliziumdioxidpulver weist bevorzugt die Merkmalskombination a./b./d. auf, wobei der Chlorgehalt in einem Bereich von 1 ppb bis 150 ppm liegt, der Aluminiumgehalt in einem Bereich von 1 bis 150 ppb liegt und die Partikelgrößenverteilung $D_{50}$ in einem Bereich von 7 bis 13 $\mu$m liegt.

Das Siliziumdioxidpulver weist bevorzugt die Merkmalskombination a./b./e. auf, wobei der Chlorgehalt in einem Bereich von 1 ppb bis 150 ppm liegt, der Aluminiumgehalt in einem Bereich von 1 bis 150 ppb liegt und die Schüttdichte in einem Bereich von 0,02 bis 0,2 g/cm$^3$ liegt.

Das Siliziumdioxidpulver weist weiter bevorzugt die Merkmalskombination a./b./c./d. auf, wobei der Chlorgehalt in einem Bereich von 1 ppb bis 150 ppm liegt, der Aluminiumgehalt in einem Bereich von 1 bis 150 ppb liegt, die BET-Oberfläche in einem Bereich von 20 bis 40 m$^2$/g liegt und die Partikelgrößenverteilung $D_{50}$ in einem Bereich von 7 bis 13 μm liegt.

Das Siliziumdioxidpulver weist weiter bevorzugt die Merkmalskombination a./b./c./e. auf, wobei der Chlorgehalt in einem Bereich von 1 ppb bis 150 ppm liegt, der Aluminiumgehalt in einem Bereich von 1 bis 150 ppb liegt, die BET-Oberfläche in einem Bereich von 20 bis 40 m$^2$/g liegt und die Schüttdichte in einem Bereich von 0,02 bis 0,2 g/cm$^3$ liegt.

Das Siliziumdioxidpulver weist weiter bevorzugt die Merkmalskombination a./b./d./e. auf, wobei der Chlorgehalt in einem Bereich von 1 ppb bis 150 ppm liegt, der Aluminiumgehalt in einem Bereich von 1 bis 150 ppb liegt, die Partikelgrößenverteilung $D_{50}$ in einem Bereich von 7 bis 13 μm liegt und die Schüttdichte in einem Bereich von 0,02 bis 0,2 g/cm$^3$ liegt.

Das Siliziumdioxidpulver weist besonders bevorzugt die Merkmalskombination a./b./c./d./e. auf, wobei der Chlorgehalt in einem Bereich von 1 ppb bis 150 ppm liegt, der Aluminiumgehalt in einem Bereich von 1 bis 150 ppb liegt, die BET-Oberfläche in einem Bereich von 20 bis 40 m$^2$/g liegt, die Partikelgrößenverteilung $D_{50}$ in einem Bereich von 7 bis 13 μm liegt und die Schüttdichte in einem Bereich von 0,02 bis 0,2 g/cm$^3$ liegt.

**Flüssigkeit**

Die Flüssigkeit ist bevorzugt ausgewählt aus der Gruppe bestehend aus Lösungsmitteln, in denen das Siliziumdioxidpulver in einer Menge von weniger als 0,5 g/L Lösungsmittel, bevorzugt in einer Menge von weniger als 0,25 g/L Lösungsmittel, besonders bevorzugt in einer Menge von weniger als 0,15 g/L Lösungsmittel löslich ist.

Als Flüssigkeit sind beispielsweise polare Lösungsmittel geeignet. Bevorzugt ist die Flüssigkeit ausgewählt aus der Gruppe bestehend aus Wasser, Methanol, Ethanol, n-Propanol, iso-Propanol, n-Butanol, tert-Butanol und mehr als einem davon. Besonders bevorzugt ist die Flüssigkeit Wasser. Besonders bevorzugt ist die Flüssigkeit destilliertes oder deionisiertes Wasser.

**Aufschlämmung**

Das Siliziumdioxidpulver wird zu einer Aufschlämmung weiterverarbeitet. Unter "Aufschlämmung" wird eine Suspension aus der Flüssigkeit und dem Siliziumdioxidpulver verstanden. Das Siliziumdioxidpulver ist in der Flüssigkeit bei Raumtemperatur nahezu unlöslich, kann jedoch in die Flüssigkeit in hohen Gewichts-Anteilen unter Erhalt der Aufschlämmung eingebracht werden.

Das Siliziumdioxidpulver und die Flüssigkeit können in beliebiger Weise gemischt werden. Zum Beispiel kann das Siliziumdioxidpulver zu der Flüssigkeit oder die Flüssigkeit zum Siliziumdioxidpulver gegeben und anschließend gerührt oder geschüttelt werden. Bevorzugt kann das Siliziumdioxidpulver unter Rühren zu der Flüssigkeit gegeben werden. Weiter bevorzugt kann ein Teil des Siliziumdioxidpulvers zu der Flüssigkeit gegeben und das so erhaltene Gemisch mit dem übrigen Teil des Siliziumdioxidpulvers vermischt werden. Ebenso kann ein Teil der Flüssigkeit zu dem Siliziumdioxidpulver gegeben und das so erhaltene Gemisch mit dem übrigen Teil der Flüssigkeit vermischt werden.

Durch das Mischen des Siliziumdioxidpulvers und der Flüssigkeit wird eine Aufschlämmung des Siliziumdioxidpulvers in der Flüssigkeit erhalten. Bevorzugt ist die Aufschlämmung eine Suspension, in der das Siliziumdioxidpulver homogen in der Flüssigkeit verteilt ist. Unter "homogen" wird verstanden, dass Dichte und Zusammensetzung der Aufschlämmung an jeder Stelle um nicht mehr als 10 % von der durchschnittlichen Dichte und Zusammensetzung abweichen, jeweils bezogen auf die Gesamtmenge an Aufschlämmung.

Bevorzugt hat die Aufschlämmung ein Litergewicht im Bereich von 1000 bis 2000 g/L, zum Beispiel im Bereich von 1200 bis 1900 g/L oder von 1300 bis 1800 g/L, besonders bevorzugt im Bereich von 1400 bis 1700 g/L. Das Litergewicht wird mittels Auswiegen eines volumenkalibrierten Behälters bestimmt.

Bevorzugt hat die Aufschlämmung einen isoelektrischen Punkt von weniger als 7, zum Beispiel im Bereich von 1 bis 5 oder im Bereich von 2 bis 4, besonders bevorzugt im Bereich von 3 bis 3,5. Unter "isolektrischem Punkt" wird der pH-Wert verstanden, bei dem das Zeta-Potential den Wert 0 annimmt. Bei diesem pH-Wert trägt die Oberfläche des in der Flüssigkeit suspendierten Feststoffs keine elektrischen Ladungen. Bei einem pH-Wert oberhalb des isoelektrischen Punkts ist die Oberfläche des in der Flüssigkeit suspendierten Feststoffs negativ, bei einem pH-Wert unterhalb positiv geladen. Das Zeta-Potential wird gemäß ISO 13099-2:2012 bestimmt.

Bevorzugt kann die Aufschlämmung auf einen pH-Wert von mindestens 7, zum Beispiel von mehr als 7 oder einen pH-Wert im Bereich von 7,5 bis 13 oder von 8 bis 11, besonders bevorzugt von 8,5 bis 10 eingestellt werden. Bevorzugt können zur Einstellung des pH-Werts der Aufschlämmung NaOH oder NH$_3$, zum Beispiel als wässrige Lösung verwendet werden.

Bevorzugt liegt der Feststoffgehalt der Aufschlämmung bei mindestens 40 Gew.-%, zum Beispiel im Bereich von 45 bis 90 Gew.-%, oder von 50 bis 80 Gew.-%, oder von 55 bis 75 Gew.-%, oder besonders bevorzugt im Bereich von 60 bis 70 Gew.-%, jeweils bezogen auf das Gesamtgewicht der Aufschlämmung.

Bei einem Feststoffgehalt von 30 Gew.-% in Wasser liegt die Viskosität der Aufschlämmung in einem Bereich von 500 bis 2000 mPa*s, zum Beispiel im Bereich von 600 bis 1700 mPa*s, besonders bevorzugt im Bereich von 1000 bis 1600 mPa*s. Die Viskosität wird nach DIN53019-1 (30 %, 23°C, Wasser, 5 rpm) bestimmt.

Bevorzugt weist die Aufschlämmung thixotropes Verhalten auf. Der Thixotropiewert liegt im Bereich von 3 bis 6, zum Beispiel im Bereich von 3,5 bis 5, besonders bevorzugt im Bereich von 4,0 bis 4,5. Die Thixotropie wird nach DIN SPEC 91143-2 (30 %, 23°C, Wasser, 5 rpm, 50 rpm) bestimmt.

Das Siliziumdioxidpulver bildet sich in der Aufschlämmung durch Zusammenlagerung von zwei oder mehr Pulverteilchen. Bevorzugt weisen die Partikel in einer 4 Gew.-%igen wässrigen Aufschlämmung eine mittlere Partikelgröße im Bereich von 100 bis 500 nm, besonders bevorzugt im Bereich von 200 bis 300 nm auf. Bevorzugt weisen die Partikel in einer 4 Gew.-%igen wässrigen Aufschlämmung eine Partikelgröße $D_{10}$ im Bereich von 50 bis 250 nm auf, besonders bevorzugt im Bereich von 100 bis 150 nm. Bevorzugt weisen die Partikel in einer 4 Gew.-%igen wässrigen Aufschlämmung eine Partikelgröße $D_{50}$ im Bereich von 100 bis 400 nm auf, besonders bevorzugt im Bereich von 200 bis 250 nm. Bevorzugt weisen die Partikel in einer 4 Gew.-%igen wässrigen Aufschlämmung eine Partikelgröße $D_{90}$ im Bereich von 200 bis 600 nm auf, besonders bevorzugt im Bereich von 350 bis 400 nm.

## Granulation

Das Siliziumdioxidgranulat wird durch Granulieren von Siliziumdioxidpulver erhalten. Unter Granulieren versteht man das Überführen von Pulverteilchen in Granulen. Beim Granulieren bilden sich Zusammenlagerungen von mehreren Siliziumdioxidpulverteilchen größere Agglomerate, die als "Siliziumdioxidgranulen" bezeichnet werden. Diese werden oft auch als "Siliziumdioxidpartikel", "Siliziumdioxidgranulatteilchen" oder "Granulatteilchen" bezeichnet. In ihrer Gesamtheit bilden Granulen ein Granulat, z.B. die Siliziumdioxidgranulen ein "Siliziumdioxidgranulat".

Im vorliegenden Fall kann prinzipiell jedes Granulierverfahren ausgewählt werden, das dem Fachmann bekannt und zum Granulieren von Siliziumdioxidpulver geeignet erscheint. Bei den Granulierverfahren kann zwischen Aufbaugranulation und Pressgranulation, und weiter zwischen Nass- und Trocken-Granulierverfahren unterschieden werden. Bekannte Methoden sind Rollgranulation in einem Granulierteller, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.

Bevorzugt wird beim Verarbeiten ein Siliziumdioxidgranulat mit Granulen gebildet, die eine sphärische Morphologie aufweisen; wobei das Verarbeiten weiter bevorzugt durch Sprühgranulieren oder Rollgranulieren erfolgt. Weiter bevorzugt beinhaltet ein Siliziumdioxidgranulat mit Granulen, die eine sphärische Morphologie aufweisen, höchstens 50 % Granulen, bevorzugt höchstens 40 % Granulen, weiter bevorzugt höchstens 20 % Granulen, mehr bevorzugt zwischen 0 und 50%, zwischen 0 und 40% oder zwischen 0 und 20%, oder zwischen 10 und 50%, zwischen 10 und 40% oder zwischen 10 und 20% Granulen, die nicht eine sphärische Morphologie aufweisen, die Prozentangabe jeweils bezogen auf die Gesamtzahl an Granulen im Granulat. Die Granulen mit einer sphärischen Morphologie weisen die in dieser Beschreibung bereits genannten SPHT3-Werte auf.

## Sprühtrocknen

Bevorzugt werden Siliziumdioxidgranulen durch Sprühgranulation, auch als Sprühtrocknen bezeichnet, erhalten. Das Sprühtrocknen gehört zur Gruppe der Nass-Granulierverfahren.

Während des Sprühtrocknens wird die Aufschlämmung unter Druck und Temperatur in einen Gasstrom gesprüht. Es bilden sich Tropfen der Aufschlämmung, die durch den direkten und intensiven Wärmeaustausch augenblicklich trocknen. Es entstehen zunächst trockene Kleinstpartikel ("Keime"), die als Wirbelschicht im Schwebezustand gehalten werden und die Oberfläche zur Trocknung weiterer Tröpfchen bilden.

Der Druck beträgt bevorzugt im Bereich von 1 bis 40 bar, zum Beispiel im Bereich von 5 bis 35 bar oder von 10 bis 30 bar, oder besonders bevorzugt im Bereich von 14 bis 28 bar, wobei die Druckangabe absolut erfolgt.

Der Gasstrom besteht bevorzugt aus Luft, einem Inertgas, oder mindestens zwei Inertgasen oder einer Kombination von Luft mit mindestens zwei Inertgasen. Inertgase sind bevorzugt ausgewählt aus der Liste bestehend aus Stickstoff, Helium, Neon, Argon, Krypton und Xenon. Zum Beispiel besteht der Gasstrom aus Luft, Stickstoff oder Argon, besonders bevorzugt aus Luft.

Der Gasstrom hat bevorzugt eine Temperatur von 100°C bis 600°C, zum Beispiel von 200°C bis 550°C oder von 300°C bis 500°C, oder besonders bevorzugt eine Temperatur von 350°C bis 450°C.

Jedes der so erhaltenen Siliziumdioxidgranulen liegt als Agglomerat einzelner Teilchen von Siliziumdioxidpulver vor. Die mittlere Partikelgröße der einzelnen Teilchen des Siliziumdioxidpulvers liegt bevorzugt im Bereich von 150 bis 300 $\mu$m, zum Beispiel im Bereich von 170 bis 250 $\mu$m, oder besonders bevorzugt im Bereich von 180 bis 240 $\mu$m. Die

mittlere Teilchengröße dieser Teilchen kann gemäß ISO 13322-2:2006-11 bestimmt werden.

Das Sprühtrocknen kann in Anwesenheit von Hilfsstoffen wie Bindemitteln durchgeführt werden. Prinzipiell können alle Stoffe als Hilfsstoffe eingesetzt werden, die dem Fachmann bekannt sind und zum vorliegenden Einsatzzweck geeignet erscheinen. Beispiele für geeignete Bindemittel sind Metalloxide wie Calciumoxid, Metallcarbonate wie Calciumcarbonat und Polysaccharide wie Cellulose, Celluloseether, Stärke und Stärkederivate. Besonders bevorzugt wird das Sprühtrocknen ohne Hilfsstoffe durchgeführt.

**Siliziumdioxidgranulat II**

Ein Siliziumdioxidgranulat II weist folgende Merkmale auf:

(A) einen Chlorgehalt von weniger als 500 ppm, bevorzugt von weniger als 400 ppm, zum Beispiel weniger als 350 ppm oder bevorzugt von weniger als 330 ppm oder in einem Bereich von 1 ppb bis 500 ppm oder von 1 ppb bis 450 ppm besonders bevorzugt von 1 ppb bis 300 ppm;

(B) einen Aluminiumgehalt von weniger als 200 ppb, zum Beispiel von weniger als 150 ppb oder von weniger als 100 ppb oder von 1 bis 150 ppb oder von 1bis 100 ppb, besonders bevorzugt in einem Bereich von 1 bis 80 ppb;

wobei die ppb und ppm jeweils bezogen sind auf das Gesamtgewicht des Siliziumdioxidgranulats II.

Bevorzugt weist das Siliziumdioxidgranulat II mindestens eines der folgenden Merkmale auf:

(C) einen Metallgehalt von Metallen, die von Aluminium verschieden sind, von weniger als 1000 ppb, zum Beispiel in einem Bereich von 1 bis 400 ppb, besonders bevorzugt in einem Bereich von 1 bis 200 ppb, jeweils bezogen auf das Gesamtgewicht des Siliziumdioxidgranulats II;

(D) eine BET-Oberfläche in einem Bereich von 10 bis 35 $m^2/g$, zum Beispiel in einem Bereich von 10 bis 30 $m^2/g$, besonders bevorzugt in einem Bereich von 20 bis 30 $m^2/g$; dabei beläuft sich bevorzugt der Mikroporenanteil auf eine BET-Oberfläche in einem Bereich von 1 bis 2 $m^2/g$; zum Beispiel in einem Bereich von 1,2 bis 1,9 $m^2/g$; besonders bevorzugt in einem Bereich von 1,3 bis 1,8 $m^2/g$;

(E) ein Porenvolumen in einem Bereich von 0,1 bis 2,5 mL/g, zum Beispiel in einem Bereich von 0,2 bis 1,5 mL/g; besonders bevorzugt in einem Bereich von 0,4 bis 1 mL/g;

(F) eine Restfeuchte von weniger als 3 Gew.-%, zum Beispiel in einem Bereich von 0,001 Gew.-% bis 2 Gew.-%, besonders bevorzugt von 0,01 bis 1 Gew.-%;

(G) eine Schüttdichte in einem Bereich von 0,7 bis 1,2 $g/cm^3$, zum Beispiel in einem Bereich von 0,75 bis 1,1 $g/cm^3$, besonders bevorzugt in einem Bereich von 0,8 bis 1,0 $g/cm^3$;

(H) eine Stampfdichte in einem Bereich von 0,7 bis 1,2 $g/cm^3$, zum Beispiel in einem Bereich von 0,75 bis 1,1 $g/cm^3$, besonders bevorzugt in einem Bereich von 0,8 bis 1,0 $g/cm^3$;

(I) eine Partikelgröße $D_{50}$ in einem Bereich von 150 bis 250 $\mu$m;

(1) eine Menge von Kohlenstoff von weniger als 5 ppm, zum Beispiel von weniger als 4,5 ppm, besonders bevorzugt von weniger als 4 ppm;

wobei die Gew.-%, ppb und ppm jeweils bezogen sind auf das Gesamtgewicht des Siliziumdioxidgranulats II.

Das Siliziumdioxidgranulat II kann weitere Bestandteile, beispielsweise in Form von Molekülen, Ionen oder Elementen beinhalten. Bevorzugt beinhaltet das Siliziumdioxidgranulat II weniger als 500 ppm, zum Beispiel weniger als 300 ppm, besonders bevorzugt weniger als 100 ppm, jeweils bezogen auf das Gesamtgewicht des Siliziumdioxidgranulats II, weitere Bestandteile. Oftmals sind weitere Bestandteile in einer Menge von mindestens 1 ppb enthalten. Die weiteren Bestandteile können ausgewählt sein aus der Gruppe bestehend aus Kohlenstoff, Fluorid, Jodid, Bromid, Phosphor oder einer Mischung von mindestens zwei hiervon. Bevorzugt beinhaltet das Siliziumdioxidgranulat II Kohlenstoff zu weniger als 40 ppm, zum Beispiel zu weniger als 30 ppm, besonders bevorzugt zu weniger als 20 ppm, jeweils bezogen auf das Gesamtgewicht des Siliziumdioxidgranulats II. Bevorzugt beinhaltet das Siliziumdioxidgranulat II weniger als 100 ppm, zum Beispiel weniger als 80 ppm, besonders bevorzugt weniger als 70 ppm, jeweils bezogen auf das Gesamtgewicht des Siliziumdioxidgranulats II, an Bestandteilen neben Siliziumdioxid, OH-Ionen, Chlor bzw. Chlorid, oder Aluminium.

Das Siliziumdioxidgranulat II weist bevorzugt eine spezifische Dichte in einem Bereich von 0,5 bis 2,0 $g/cm^3$, zum Beispiel von 0,6 bis 1,5 $g/cm^3$, besonders bevorzugt von 0,8 bis 1,2 $g/cm^3$, auf. Die Bestimmung der spezifischen Dichte entspricht der, wie in den Testmethoden beschrieben.

Das Siliziumdioxidgranulat II weist bevorzugt eine Partikelgröße $D_{50}$ in einem Bereich von 150 bis 250 $\mu$m, zum Beispiel in einem Bereich von 180 bis 250 $\mu$m, besonders bevorzugt in einem Bereich von 200 bis 250 $\mu$m, auf. Weiterhin bevorzugt weist das Siliziumdioxidgranulat II eine Partikelgröße $D_{10}$ in einem Bereich von 50 bis 150 $\mu$m auf, zum Beispiel in einem Bereich von 80 bis 150 $\mu$m, besonders bevorzugt in einem Bereich von 100 bis 150 $\mu$m. Weiterhin

bevorzugt weist das Siliziumdioxidgranulat II eine Partikelgröße $D_{90}$ in einem Bereich von 250 bis 450 $\mu m$, zum Beispiel in einem Bereich von 280 bis 420 $\mu m$, besonders bevorzugt in einem Bereich von 300 bis 400 $\mu m$, auf.

Das Siliziumdioxidgranulat II weist bevorzugt die Merkmalskombination (A)/(B)/(D) oder (A)/(B)/(H) oder (A)/(B)/(I) auf, weiter bevorzugt die Merkmalskombination (A)/(B)/(D)/(H) oder (A)/(B)/(D)/(I) oder (A)/(B)/(H)/(I), besonders bevorzugt die Merkmalskombination (A)/(B)/(D)/(H)/(I).

Das Siliziumdioxidgranulat II weist bevorzugt die Merkmalskombination (A)/(B)/(D) auf, wobei der Chlorgehalt weniger als 350 ppm beträgt, der Aluminiumgehalt weniger als 100 ppb beträgt und die BET-Oberfläche in einem Bereich von 10 bis 30 $m^2$/g liegt.

Das Siliziumdioxidgranulat II weist bevorzugt die Merkmalskombination (A)/(B)/(H) auf, wobei der Chlorgehalt weniger als 350 ppm beträgt, der Aluminiumgehalt weniger als 100 ppb beträgt und die Stampfdichte in einem Bereich von 0,75 bis 1,1 $g/cm^3$ liegt.

Das Siliziumdioxidgranulat II weist bevorzugt die Merkmalskombination (A)/(B)/(I) auf, wobei der Chlorgehalt weniger als 350 ppm beträgt, der Aluminiumgehalt weniger als 100 ppb beträgt und die Partikelgrößenverteilung $D_{50}$ in einem Bereich von 150 bis 250 $\mu m$ liegt.

Das Siliziumdioxidgranulat II weist bevorzugt die Merkmalskombination (A)/(B)/(D)/(H) auf, wobei der Chlorgehalt weniger als 350 ppm beträgt, der Aluminiumgehalt weniger als 100 ppb beträgt, die BET-Oberfläche in einem Bereich von 10 bis 30 $m^2$/g liegt und die Stampfdichte in einem Bereich von 0,75 bis 1,1 $g/cm^3$ liegt.

Das Siliziumdioxidgranulat II weist bevorzugt die Merkmalskombination (A)/(B)/(D)/(I) auf, wobei der Chlorgehalt weniger als 350 ppm beträgt, der Aluminiumgehalt weniger als 100 ppb beträgt, die BET-Oberfläche in einem Bereich von 10 bis 30 $m^2$/g liegt und die Partikelgrößenverteilung $D_{50}$ in einem Bereich von 150 bis 250 $\mu m$ liegt.

Das Siliziumdioxidgranulat II weist bevorzugt die Merkmalskombination (A)/(B)/(H)/(I) auf, wobei der Chlorgehalt weniger als 350 ppm beträgt, der Aluminiumgehalt weniger als 100 ppb beträgt, die Stampfdichte in einem Bereich von 0,75 bis 1,1 $g/cm^3$ liegt und die Partikelgrößenverteilung $D_{50}$ in einem Bereich von 150 bis 250 $\mu m$ liegt.

Das Siliziumdioxidgranulat II weist bevorzugt die Merkmalskombination (A)/(B)/(D)/(H)/(I) auf, wobei der Chlorgehalt weniger als 350 ppm beträgt, der Aluminiumgehalt weniger als 100 ppb beträgt, die BET-Oberfläche in einem Bereich von 10 bis 30 $m^2$/g liegt, die Stampfdichte in einem Bereich von 0,75 bis 1,1 $g/cm^3$ liegt und die Partikelgrößenverteilung $D_{50}$ in einem Bereich von 150 bis 250 $\mu m$ liegt.

Ein Verfahren zum Herstellen eines Siliziumdioxidgranulats II beinhaltet mindestens folgende Schritte:

(I) Bereitstellen von Siliziumdioxidgranulat I; und
(II) Behandeln des Siliziumdioxidgranulats I aus Schritt (I) unter Erhalt von Siliziumdioxidgranulat II.

Das Siliziumdioxidgranulat I weist folgende Merkmale auf:

A) einen Chlorgehalt von weniger als 200 ppm; und
B) einen Aluminiumgehalt von weniger als 200 ppb,

wobei die ppb und ppm jeweils bezogen sind auf das Gesamtgewicht des Siliziumdioxidgranulats I. Bevorzugt ist das in Schritt (I) bereitgestellte Siliziumdioxidgranulat I gekennzeichnet durch die Merkmale, die oben beschrieben sind.

**Schritt (II)**

Bevor das Siliziumdioxidgranulat I zu Quarzglaskörpern weiterverarbeitet wird, wird es vorbehandelt, wobei ein Siliziumdioxidgranulat II gebildet wird (Schritt (II)). Diese Vorbehandlung kann verschiedenen Zwecken dienen, die entweder die Verarbeitung zu Quarzglaskörpern erleichtern oder die Eigenschaften der resultierenden Quarzglaskörper beeinflussen. Zum Beispiel kann das Siliziumdioxidgranulat I verdichtet, gereinigt, oberflächenmodifiziert oder getrocknet werden.

Bevorzugt kann das Siliziumdioxidgranulat I einer thermischen, mechanischen oder chemischen Behandlung oder einer Kombination aus zwei oder mehr Behandlungen unterworfen werden, wobei ein Siliziumdioxidgranulat II erhalten wird.

**chemisch**

Bevorzugt weist das Siliziumdioxidgranulat I einen Kohlenstoffgehalt $w_{C(1)}$ auf. Der Kohlenstoffgehalt $w_{C(1)}$ beträgt bevorzugt weniger als 50 ppm, zum Beispiel von weniger als 40 ppm oder von weniger 30 ppm, besonders bevorzugt in einem Bereich von 1 ppb bis 20 ppm, jeweils auf das Gesamtgewicht des Siliziumdioxidgranulats I bezogen.

Bevorzugt beinhaltet das Siliziumdioxidgranulat I mindestens zwei Teilchen. Bevorzugt können die mindestens zwei Teilchen eine Relativbewegung zueinander ausführen. Als Maßnahmen zum Erzeugen der Relativbewegung kommen prinzipiell alle dem Fachmann bekannten und geeignet erscheinenden Maßnahmen in Betracht. Insbesondere bevorzugt ist ein Mischen. Ein Mischen kann prinzipiell in beliebiger Weise durchgeführt werden. Bevorzugt wird hierfür ein Durchlaufofen ausgewählt. Dementsprechend können die mindestens zwei Teilchen bevorzugt eine Relativbewegung zueinander ausführen, indem sie in einem Durchlaufofen, zum Beispiel einem Drehrohrofen, bewegt werden.

Unter Durchlauföfen werden Öfen verstanden, bei denen das Be- und Entladen des Ofens, die sogenannte Chargierung, kontinuierlich erfolgt. Beispiele für Durchlauföfen sind Drehrohröfen, Rollenöfen, Förderbandöfen, Durchfahröfen, Durchstoßöfen. Bevorzugt werden zur Behandlung des Siliziumdioxidgranulats I Drehrohröfen verwendet.

Kontinuierlich bedeutet im Kontext der vorliegenden Erfindung in Bezug auf ein Verfahren, dass dieses fortlaufend betrieben werden kann. Das bedeutet, dass Zufuhr und Entnahme von am Verfahren beteiligten Stoffen und Materialien beim Durchführen des Verfahrens laufend erfolgen kann. Es ist nicht notwendig, dafür das Verfahren zu unterbrechen.

Kontinuierlich als Attribut eines Gegenstands, z.B. in Bezug auf einen "kontinuierlichen Ofen", bedeutet, dass dieser Gegenstand so ausgelegt ist, dass ein in ihm erfolgendes Verfahren oder in ihm erfolgender Verfahrensschritt kontinuierlich durchgeführt werden kann.

Bevorzugt wird das Siliziumdioxidgranulat I mit einem Reaktanden unter Erhalt eines Siliziumdioxidgranulats II behandelt. Das Behandeln wird durchgeführt, um die Konzentration bestimmter Stoffe im Siliziumdioxidgranulat zu verändern. Das Siliziumdioxidgranulat I kann Verunreinigungen oder bestimmte Funktionalitäten aufweisen, deren Anteil verringert werden soll, wie zum Beispiel: OH-Gruppen, kohlenstoffhaltige Verbindungen, Übergangsmetalle, Alkalimetalle und Erdalkalimetalle. Die Verunreinigungen und Funktionalitäten können aus dem Ausgangsmaterial stammen oder im Laufe des Verfahrens eingetragen werden. Die Behandlung des Siliziumdioxidgranulats I kann verschiedenen Zwecken dienen. Zum Beispiel kann der Einsatz von behandeltem Siliziumdioxidgranulat I, also Siliziumdioxidgranulat II, die Verarbeitung des Siliziumdioxidgranulats zu Quarzglaskörpern vereinfachen. Ferner können durch diese Auswahl die Eigenschaften der resultierenden Quarzglaskörper angepasst sein. Zum Beispiel kann das Siliziumdioxidgranulat I gereinigt oder oberflächenmodifiziert werden.

Bevorzugt eignen sich als Reaktand ein Gas oder eine Kombination mehrerer Gase. Diese wird auch als Gasgemisch bezeichnet. Prinzipiell können alle dem Fachmann bekannten Gase eingesetzt werden, die für die genannte Behandlung bekannt sind und geeignet erscheinen. Bevorzugt wird ein Gas ausgewählt aus der Gruppe bestehend aus $HCl$, $Cl_2$, $F_2$, $O_2$, $O_3$, $H_2$, $C_2F_4$, $C_2F_6$, $HClO_4$, Luft, Inertgas, z.B. $N_2$, $He$, $Ne$, $Ar$, $Kr$, oder Kombinationen aus zwei oder mehr davon, eingesetzt. Bevorzugt erfolgt die Behandlung in Anwesenheit eines Gases oder einer Kombination aus zwei oder mehr als Gasen. Bevorzugt erfolgt die Behandlung in einem Gasgegenstrom, oder in einem Gasgleichstrom.

Bevorzugt ist der Reaktand ausgewählt aus der Gruppe bestehend aus $HCl$, $Cl_2$, $F_2$, $O_2$, $O_3$ oder Kombinationen von zwei oder mehr davon. Bevorzugt werden Gemische von zwei oder mehr der zuvor genannten Gase zum Behandeln von Siliziumdioxidgranulat I, verwendet. Durch die Anwesenheit von F, Cl oder beiden können Metalle, die als Verunreinigungen im Siliziumdioxidgranulat I enthalten sind, wie zum Beispiel Übergangsmetalle, Alkalimetalle und Erdalkalimetalle, entfernt werden. Dabei können die vorgenannten Metalle mit Bestandteilen des Gasgemischs unter den Verfahrensbedingungen gasförmige Verbindungen eingehen, die anschließend ausgetragen werden und so nicht mehr im Granulat vorliegen. Weiter bevorzugt kann der OH-Gehalt in dem Siliziumdioxidgranulat I durch die Behandlung des Siliziumdioxidgranulats I mit diesen Gasen verringert werden.

Bevorzugt wird als Reaktand ein Gasgemisch von $HCl$ und $Cl_2$ eingesetzt. Bevorzugt weist das Gasgemisch einen Gehalt an HCl in einem Bereich von 1 bis 30 Vol.-%, beispielsweise in einem Bereich von 2 bis 15 Vol.-%, besonders bevorzugt in einem Bereich von 3 bis 10 Vol.-% auf. Ebenfalls bevorzugt weist das Gasgemisch einen Gehalt an $Cl_2$ in einem Bereich von 20 bis 70 Vol.-%, beispielsweise in einem Bereich von 25 bis 65 Vol.-%, besonders bevorzugt in einem Bereich von 30 bis 60 Vol.-% auf. Der Rest zu 100 Vol.-% kann durch ein oder mehrere Inertgase, z.B. $N_2$, He, Ne, Ar, Kr, oder durch Luft ergänzt werden. Bevorzugt liegt die an Inertgas in Reaktanden in einem Bereich von 0 bis weniger als 50 Vol.-%, zum Beispiel in einem Bereich von 1 bis 40 Vol.-% oder von 5 bis 30 Vol.-%, besonders bevorzugt in einem Bereich von 10 bis 20 Vol.-%, jeweils bezogen auf das Gesamtvolumen des Reaktanden.

$O_2$, $C_2F_2$, oder Mischungen davon mit $Cl_2$ werden bevorzugt zur Reinigung von Siliziumdioxidgranulat I verwendet, das aus einem Siloxan oder einem Gemisch mehrerer Siloxane hergestellt wurde.

Der Reaktand in Form eines Gases oder Gasgemisches wird bevorzugt als Gasstrom oder als Teil eines Gasstroms mit einem Durchsatz in einem Bereich von 50 bis 2000 L/h, beispielsweise in einem Bereich von 100 bis 1000 L/h, besonders bevorzugt in einem Bereich von 200 bis 500 L/h mit dem Siliziumdioxidgranulat kontaktiert. Eine bevorzugte Ausgestaltung des Kontaktierens ist ein Kontakt von Gasstrom und Siliziumdioxidgranulat in einem Durchlaufofen, zum Beispiel einem Drehrohrofen. Eine andere bevorzugte Ausgestaltung des Kontaktierens ist ein Wirbelschichtverfahren (fluidized bed).

Durch das Behandeln des Siliziumdioxidgranulats I mit dem Reaktanden wird ein Siliziumdioxidgranulat II mit einem Kohlenstoffgehalt $w_{C(2)}$ erhalten. Der Kohlenstoffgehalt $w_{C(2)}$ des Siliziumdioxidgranulats II ist kleiner als der Kohlenstoffgehalt $w_{C(1)}$ des Siliziumdioxidgranulats I. Bevorzugt ist $w_{C(2)}$ um 0,5 bis 50 %, beispielsweise um 1 bis 45 %, besonders bevorzugt um 1,5 bis 45 % kleiner als $w_{C(1)}$, bezogen auf das Gesamtgewicht des jeweiligen Siliziumdioxidgranulats.

**thermisch**

Bevorzugt wird das Siliziumdioxidgranulat I zusätzlich einer thermischen oder mechanischen Behandlung oder einer Kombination dieser Behandlungen unterworfen. Eine oder mehrere dieser zusätzlichen Behandlungen können vor oder während der Behandlung mit dem Reaktanden erfolgen. Alternativ oder ergänzend kann die zusätzlich Behandlung auch am Siliziumdioxidgranulat II durchgeführt werden. Die im Folgenden verwendete allgemeine Bezeichnung "Siliziumdioxidgranulat" beinhaltet die Alternativen "Siliziumdioxidgranulat I" und "Siliziumdioxidgranulat II". Ebenso ist es möglich, die nachfolgend beschriebenen Behandlungen sowohl am "Siliziumdioxidgranulat I", als auch am behandelten Siliziumdioxidgranulat I, dem "Siliziumdioxidgranulat II", durchzuführen.

Die Behandlung des Siliziumdioxidgranulats kann verschiedenen Zwecken dienen. Zum Beispiel erleichtert diese Behandlung die Verarbeitung des Siliziumdioxidgranulats zu Quarzglaskörpern. Die Behandlung kann auch die Eigenschaften der resultierenden Quarzglaskörper beeinflussen. Zum Beispiel kann das Siliziumdioxidgranulat verdichtet, gereinigt, oberflächenmodifiziert oder getrocknet werden. Dabei kann sich die spezifische Oberfläche (BET) verringern. Ebenso können die Schüttdichte und die mittlere Partikelgröße aufgrund von Agglomerationen von Siliziumdioxidpartikeln zunehmen. Die thermische Behandlung kann dynamisch oder statisch durchgeführt werden.

Für die dynamisch thermische Behandlung eignen sich prinzipiell alle Öfen, in denen das Siliziumdioxidgranulat thermisch behandelt und dabei bewegt werden kann. Für die dynamisch thermische Behandlung werden bevorzugt Durchlauföfen verwendet.

Eine bevorzugte mittlere Verweilzeit des Siliziumdioxidgranulats bei der dynamisch thermischen Behandlung ist mengenabhängig. Bevorzugt liegt die mittlere Verweilzeit des Siliziumdioxidgranulats bei der dynamisch thermischen Behandlung im Bereich von 10 bis 180 min, zum Beispiel im Bereich von 20 bis 120 min oder von 30 bis 90 min. Besonders bevorzugt liegt die mittlere Verweilzeit des Siliziumdioxidgranulats bei der dynamisch thermischen Behandlung im Bereich von 30 bis 90 min.

Im Fall eines kontinuierlichen Verfahrens gilt zur Bestimmung der Verweilzeit als eine Charge eine definierte Portion eines Stroms an Siliziumdioxidgranulat, z.B. ein Gramm, ein Kilogramm oder eine Tonne. Beginn und Ende des Verweilens sind hier durch Ein- und Ausführen aus dem kontinuierlichen Ofenbetrieb bestimmt.

Bevorzugt liegt der Durchsatz des Siliziumdioxidgranulats bei einem kontinuierlichen Verfahren zur dynamisch thermischen Behandlung im Bereich von 1 bis 50 kg/h, zum Beispiel im Bereich von 5 bis 40 kg/h oder von 8 bis 30 kg/h. Besonders bevorzugt liegt der Durchsatz hier im Bereich von 10 bis 20 kg/h.

Im Falle eines diskontinuierlichen Verfahrens zur dynamisch thermischen Behandlung ergibt sich die Behandlungszeit aus dem Zeitraum zwischen einem Beladen und anschließendem Entladen des Ofens.

Im Falle eines diskontinuierlichen Verfahrens zur dynamisch thermischen Behandlung beträgt der Durchsatz in einem Bereich von 1 bis 50 kg/h, zum Beispiel im Bereich von 5 bis 40 kg/h oder von 8 bis 30 kg/h. Besonders bevorzugt beträgt der Durchsatz hier im Bereich von 10 bis 20 kg/h. Der Durchsatz kann durch eine Charge einer bestimmten Menge, die eine Stunde lang behandelt wird, erreicht werden. Gemäß einer anderen Ausführungsform kann der Durchsatz erreicht werden durch eine Anzahl von Chargen pro Stunde, wobei zum Beispiel die Menge einer Charge dem Durchsatz pro Stunde durch die Anzahl der Chargen entspricht. Die Behandlungszeit entspricht dann dem Bruchteil einer Stunde, der sich aus 60 Minuten durch die Anzahl der Chargen pro Stunde ergibt.

Bevorzugt erfolgt die dynamisch thermische Behandlung des Siliziumdioxidgranulats bei einer Ofentemperatur von mindestens 500°C, zum Beispiel im Bereich von 510 bis 1700°C oder von 550 bis 1500°C oder von 580 bis 1300°C, besonders bevorzugt im Bereich von 600 bis 1200°C.

In der Regel hat der Ofen in der Ofenkammer die angegebene Temperatur. Bevorzugt weicht diese Temperatur um weniger als 10 % von der angegebenen Temperatur nach oben oder unten ab, bezogen auf die gesamte Behandlungszeit und die gesamte Länge des Ofens sowohl zu jedem Zeitpunkt der Behandlung als auch an jeder Stelle des Ofens.

Alternativ kann insbesondere das kontinuierliche Verfahren einer dynamisch thermischen Behandlung des Siliziumdioxidgranulats bei unterschiedlichen Ofentemperaturen erfolgen. Beispielsweise kann der Ofen über die Behandlungszeit eine konstante Temperatur aufweisen, wobei die Temperatur über die Länge des Ofens in Abschnitten variiert. Solche Abschnitte können gleich lang oder unterschiedlich lang sein. Bevorzugt ist in diesem Fall eine vom Eingang des Ofens zum Ausgang des Ofens hin zunehmende Temperatur. Bevorzugt ist die Temperatur am Eingang um wenigstens 100°C niedriger als am Ausgang, zum Beispiel 150°C niedriger oder 200°C niedriger oder 300°C niedriger oder 400°C niedriger. Weiter bevorzugt beträgt die Temperatur am Ausgang bevorzugt mindestens 500°C, zum Beispiel im Bereich von 510 bis 1700°C oder von 550 bis 1500°C oder von 580 bis 1300°C, besonders bevorzugt im Bereich von 600 bis 1200°C. Weiter bevorzugt beträgt die Temperatur am Eingang bevorzugt mindestens 300°C, zum Beispiel von 400 bis 1000°C oder von 450 bis 900°C oder von 500 bis 800°C oder von 550 bis 750°C, besonders bevorzugt von 600 bis 700°C. Weiter kann jeder der genannten Temperaturbereiche am Ofeneingang mit jedem der genannten Temperaturbereiche am Ofenausgang kombiniert werden. Bevorzugte Kombinationen von Ofeneingangs- und Ofenausgangstemperaturbereichen sind:

| Bereich Ofeneingangstemperatur [°C] | Bereich Ofenausgangstemperatur [°C] |
| --- | --- |
| 400 - 1000 | 510 - 1300 |
| 450 - 900 | 550 - 1260 |
| 480 - 850 | 580 - 1200 |
| 500 - 800 | 600 - 1100 |
| 530 - 750 | 630 - 1050 |

Für die statisch thermische Behandlung des Siliziumdioxidgranulats werden bevorzugt in einem Ofen angeordnete Tiegel verwendet. Als Tiegel eignen sich Sintertiegel oder Blechtiegel. Bevorzugt sind Walzblechtiegel aus mehreren, miteinander vernieteten Platten. Als Tiegelmaterial sind beispielsweise Refraktärmetalle, insbesondere Wolfram, Molybdän und Tantal, bevorzugt. Die Tiegel können ferner aus Graphit gebildet sein oder im Falle der Tiegel aus Refraktärmetallen mit Graphitfolie ausgeschlagen sein. Weiter bevorzugt können die Tiegel aus Siliziumdioxid gebildet sein. Besonders bevorzugt werden Siliziumdioxidtiegel eingesetzt.

Die mittlere Verweilzeit des Siliziumdioxidgranulats bei der statisch thermischen Behandlung ist mengenabhängig. Bevorzugt liegt die mittlere Verweilzeit des Siliziumdioxidgranulats bei der statisch thermischen Behandlung bei einer Menge von 20 kg Siliziumdioxidgranulat I im Bereich von 10 bis 180 min, zum Beispiel im Bereich von 20 bis 120 min, besonders bevorzugt im Bereich von 30 bis 90 min.

Bevorzugt erfolgt die statisch thermische Behandlung des Siliziumdioxidgranulats bei einer Ofentemperatur von mindestens 800°C, zum Beispiel im Bereich von 900 bis 1700°C oder von 950 bis 1600°C oder von 1000 bis 1500°C oder von 1050 bis 1400°C, besonders bevorzugt im Bereich von 1100 bis 1300°C.

Bevorzugt erfolgt die statisch thermische Behandlung des Siliziumdioxidgranulats I bei konstanter Ofentemperatur. Die statisch thermische Behandlung kann auch bei einer variierenden Ofentemperatur erfolgen. Bevorzugt nimmt in diesem Fall die Temperatur im Laufe der Behandlung zu, wobei die Temperatur zu Beginn der Behandlung um wenigstens 50°C niedriger ist als am Ende, zum Beispiel 70°C niedriger oder 80°C niedriger oder 100°C niedriger oder 110°C niedriger, und wobei die Temperatur am Ende bevorzugt mindestens 800°C, zum Beispiel im Bereich von 900 bis 1700°C oder von 950 bis 1600°C oder von 1000 bis 1500°C oder von 1050 bis 1400°C, besonders bevorzugt im Bereich von 1100 bis 1300°C, beträgt.

**mechanisch**

Bevorzugt kann das Siliziumdioxidgranulat I mechanisch behandelt werden. Die mechanische Behandlung kann zum Erhöhen der Schüttdichte durchgeführt werden. Die mechanische Behandlung kann mit der zuvor beschriebenen thermischen Behandlung kombiniert werden. Mittels einer mechanischen Behandlung kann vermieden werden, dass die Agglomerate im Siliziumdioxidgranulat und damit die mittlere Partikelgröße der einzelnen, behandelten Siliziumdioxidgranulen im Siliziumdioxidgranulat zu groß werden. Eine Vergrößerung der Agglomerate kann die Weiterverarbeitung erschweren oder nachteilige Auswirkungen auf die Eigenschaften der mit dem erfindungsgemäßen Verfahren hergestellten Quarzglaskörper haben, oder eine Kombination beider Effekte bedeuten. Eine mechanische Behandlung des Siliziumdioxidgranulats fördert zudem einen gleichmäßigen Kontakt der Oberflächen der einzelnen Siliziumdioxidgranulen mit dem Gas oder den Gasen. Dies wird insbesondere bei einer Kombination aus gleichzeitiger mechanischer und chemischer Behandlung mit einem oder mehreren Gasen erreicht. Dadurch kann die Wirkung der chemischen Behandlung verbessert werden.

Die mechanische Behandlung des Siliziumdioxidgranulats kann durch Bewegen von zwei oder mehr Siliziumdioxidgranulen in einer Relativbewegung zueinander erfolgen, beispielsweise durch das Drehen des Rohrs eines Drehrohrofens.

Bevorzugt wird das Siliziumdioxidgranulat I chemisch, thermisch und mechanisch behandelt. Besonders erfolgt eine simultane chemische, thermische und mechanische Behandlung des Siliziumdioxidgranulats I.

Bei der chemischen Behandlung wird der Gehalt an Verunreinigungen im Siliziumdioxidgranulat I verringert.

Dazu kann das Siliziumdioxidgranulat I in einem Drehrohrofen bei erhöhter Temperatur unter chlor- und sauerstoffhaltiger Atmosphäre behandelt werden. Im Siliziumdioxidgranulat I vorliegendes Wasser verdampft, organische Materialien reagieren zu CO und $CO_2$. Metallverunreinigungen können zu flüchtigen, chlorhaltigen Verbindungen konvertiert werden.

Bevorzugt wird das Siliziumdioxidgranulat I in einer chlor- und sauerstoffhaltigen Atmosphäre in einem Drehrohrofen bei einer Temperatur von mindestens 500°C, bevorzugt in einem Temperaturbereich von 550 bis 1300°C oder von 600 bis 1260°C oder von 650 bis 1200°C oder von 700 bis 1000°C, besonders bevorzugt in einem Temperaturbereich von 700 bis 900°C behandelt. Die chlorhaltige Atmosphäre enthält beispielsweise HCl oder $Cl_2$ oder eine Kombination aus beiden. Diese Behandlung bewirkt eine Reduzierung des Kohlenstoffgehalts. Ferner werden bevorzugt Alkali- und Eisenverunreinigungen reduziert. Bevorzugt wird zudem eine Verringerung der Anzahl an OH-Gruppen erreicht. Bei Temperaturen unterhalb von 700°C können sich lange Behandlungsdauern ergeben, bei Temperaturen oberhalb von 1100°C besteht die Gefahr, dass sich Poren des Granulats unter Einschluss von Chlor oder gasförmigen Chlorverbindungen schließen.

Bevorzugt ist es auch möglich, mehrere chemische Behandlungsschritte bei jeweils gleichzeitiger thermischer und mechanischer Behandlung nacheinander durchzuführen. Beispielsweise kann das Siliziumdioxidgranulat I erst in einer chlorhaltigen Atmosphäre und anschließend in einer sauerstoffhaltigen Atmosphäre behandelt werden. Daraus resultierende niedrige Konzentrationen an Kohlenstoff, Hydroxylgruppen und Chlor erleichtern das Einschmelzen des Siliziumdioxidgranulats II.

Weiter bevorzugt weist Schritt II.2) mindestens eines, zum Beispiel mindestens zwei oder mindestens drei, besonders bevorzugt eine Kombination von allen der folgenden Merkmale auf:

N1) der Reaktand beinhaltet HCl, $Cl_2$ oder eine Kombination davon;
N2) die Behandlung wird in einem Drehrohrofen durchgeführt;
N3) die Behandlung wird bei einer Temperatur in einem Bereich von 600 bis 900°C durchgeführt;
N4) der Reaktand bildet einen Gegenstrom;
N5) der Reaktand weist einen Gasstrom in einem Bereich von 50 bis 2000 L/h, bevorzugt 100 bis 1000 L/h, besonders bevorzugt 200 bis 500 L/h auf;
N6) der Reaktand weist einen Volumenanteil an Inertgas in einem Bereich von 0 bis weniger als 50 Vol.-% auf.

Bevorzugt weist das Siliziumdioxidgranulat I einen Partikeldurchmesser auf, der größer ist, als der Partikeldurchmesser des Siliziumdioxidpulvers. Bevorzugt ist der Partikeldurchmesser des Siliziumdioxidgranulats I bis zu 300 mal größer als der Partikeldurchmesser des Siliziumdioxidpulvers, zum Beispiel bis zu 250 mal größer oder bis zu 200 mal größer oder bis zu 150 mal größer oder bis zu 100 mal größer oder bis zu 50 mal größer oder bis zu 20 mal größer oder bis zu 10 mal größer, besonders bevorzugt 2 bis 5 mal größer.

Ein Verfahren zum Herstellen eines Quarzglaskörpers umfasst mindestens folgende Schritte:

i) Bereitstellen von Siliziumdioxidgranulat II;
ii) Erwärmen des Siliziumdioxidgranulats II aus Schritt i) unter Erhalt einer Glasschmelze;
iii) Entnahme mindestens eines Teils der Glasschmelze und Bilden eines Quarzglaskörpers.

Das Siliziumdioxidgranulat II weist folgende Merkmale auf:

A) einen Chlorgehalt von weniger als 500 ppm; und
B) einen Aluminiumgehalt von weniger als 200 ppb;

wobei die ppm und ppb jeweils auf das Gesamtgewicht des Siliziumdioxidgranulats II bezogen sind.

Bevorzugt ist das in Schritt i) bereitgestellte Siliziumdioxidgranulat II gekennzeichnet durch die Merkmale, die oben beschrieben sind.

**Schritt ii)**

Aus dem in Schritt i) bereitgestellten Siliziumdioxidgranulat II wird eine Glasschmelze gebildet. Bevorzugt wird das Siliziumdioxidgranulat II unter Erhalt der Glasschmelze erwärmt. Das Erwärmen des Siliziumdioxidgranulats II unter Erhalt einer Glasschmelze kann prinzipiell auf allen dem Fachmann zu diesem Zwecke bekannten Wegen erfolgen.

**Vakuumsintern**

Das Erwärmen des Siliziumdioxidgranulats II unter Erhalt einer Glasschmelze kann durch Vakuumsintern erfolgen. Dieses Verfahren ist ein diskontinuierliches Verfahren, bei dem das Siliziumdioxidgranulat II batchweise zum Schmelzen erwärmt wird.

Bevorzugt wird das Siliziumdioxidgranulat II in einem evakuierbaren Tiegel erwärmt. Der Tiegel ist einem Schmelzofen angeordnet. Der Tiegel kann stehend oder hängend angeordnet sein, bevorzugt hängend. Der Tiegel kann ein Sintertiegel oder Blechtiegel sein. Bevorzugt sind Walzblechtiegel aus mehreren, miteinander vernieteten Platten.

Als Tiegelmaterial sind beispielsweise Refraktärmetalle, insbesondere W, Mo und Ta, Graphit oder mit Graphitfolie ausgeschlagene Tiegel geeignet, besonders bevorzugt sind Graphittiegel.

Beim Vakuumsintern wird das Siliziumdioxidgranulat II im Vakuum zum Schmelzen erwärmt. Unter Vakuum wird ein Restdruck von weniger als 2 mbar verstanden. Dazu wird der Tiegel enthaltend das Siliziumdioxidgranulat II auf einen Restdruck von weniger als 2 mbar evakuiert.

Bevorzugt wird der Tiegel im Schmelzofen auf eine Schmelztemperatur im Bereich von 1500 bis 2500°C, zum Beispiel im Bereich von 1700 bis 2300°C, besonders bevorzugt im Bereich von 1900 bis 2100°C erwärmt.

Die bevorzugte Haltedauer des Siliziumdioxidgranulats II im Tiegel bei der Schmelztemperatur ist mengenabhängig. Bevorzugt beträgt die Haltedauer des Siliziumdioxidgranulats II im Tiegel bei der Schmelztemperatur 0,5 bis 10 Stunden, zum Beispiel 1 bis 8 Stunden oder 1,5 bis 6 Stunden, besonders bevorzugt 2 bis 5 Stunden.

Das Siliziumdioxidgranulat II kann beim Erwärmen bewegt werden. Das Bewegen des Siliziumdioxidgranulats II erfolgt bevorzugt durch Rühren, Schütteln oder Schwenken.

**Gasdrucksintern**

Das Erwärmen des Siliziumdioxidgranulats II unter Erhalt einer Glasschmelze kann durch Gasdrucksintern erfolgen. Dieses Verfahren ist ein statisches Verfahren, bei dem das Siliziumdioxidgranulat II batchweise zum Schmelzen erwärmt wird.

Bevorzugt wird das Siliziumdioxidgranulat II in einem verschließbaren Tiegel gegeben und in einen Schmelzofen eingebracht. Als Tiegelmaterial sind beispielsweise Graphit, Refraktärmetalle, insbesondere W, Mo und Ta, oder mit Graphitfolie ausgeschlagene Tiegel geeignet, besonders bevorzugt sind Graphittiegel. Der Tiegel umfasst mindestens einen Gaseinlass und mindestens einen Gasauslass. Durch den Gaseinlass kann Gas in den Tiegelinnenraum eingeleitet werden. Durch den Gasauslass kann Gas aus dem Tiegelinnenraum ausgeleitet werden. Bevorzugt ist es möglich, den Tiegel im Gasstrom und im Vakuum zu betreiben.

Beim Gasdrucksintern wird das Siliziumdioxidgranulat II in Anwesenheit mindestens eines Gases oder zweier oder mehrer Gase zum Schmelzen erwärmt. Geeignete Gase sind zum Beispiel $H_2$, und Inertgase ($N_2$, He, Ne, Ar, Kr) sowie zwei oder mehr davon. Bevorzugt wird das Gasdrucksintern in reduzierender Atmosphäre durchgeführt, besonders bevorzugt in Gegenwart von $H_2$ oder $H_2$/He. Es findet ein Gasaustausch von Luft gegen $H_2$ oder $H_2$/He statt.

Bevorzugt wird das Siliziumdioxidgranulat II bei einem Gasdruck von mehr als 1 bar, zum Beispiel im Bereich von 2 bis 200 bar oder von 5 bis 200 bar oder von 7 bis 50 bar, besonders bevorzugt von 10 bis 25 bar zum Schmelzen erwärmt.

Bevorzugt wird der Tiegel im Ofen auf eine Schmelztemperatur im Bereich von 1500 bis 2500°C, zum Beispiel im Bereich von 1550 bis 2100°C oder von 1600 bis 1900°C, besonders bevorzugt im Bereich von 1650 bis 1800°C erwärmt.

Die bevorzugte Haltedauer des Siliziumdioxidgranulats II im Tiegel bei der Schmelztemperatur unter Gasdruck ist mengenabhängig. Bevorzugt beträgt die Haltedauer des Siliziumdioxidgranulats II im Tiegel bei der Schmelztemperatur bei einer Menge von 20 kg 0,5 bis 10 Stunden, zum Beispiel 1 bis 9 Stunden oder 1,5 bis 8 Stunden, besonders bevorzugt 2 bis 7 Stunden.

Bevorzugt wird das Siliziumdioxidgranulat II zuerst im Vakuum, anschließend in einer $H_2$-Atmosphäre oder einer Atmosphäre beinhaltend $H_2$ und He, insbesondere bevorzugt in einem Gegenstrom dieser Gase, zum Schmelzen gebracht. Bei diesem Verfahren ist die Temperatur im ersten Schritt bevorzugt geringer als im weiteren Schritt. Die Temperaturdifferenz zwischen dem Erwärmen im Vakuum und in Gegenwart des oder der Gase beträgt bevorzugt 0 bis 200°C, zum Beispiel 10 bis 100°C, besonders bevorzugt 20 bis 80°C.

**Ausbilden einer teilkristallinen Phase vor dem Schmelzen**

Es ist prinzipiell auch möglich, dass das Siliziumdioxidgranulat II vor dem Schmelzen vorbehandelt wird. Beispielsweise kann das Siliziumdioxidgranulat II so erwärmt werden, dass eine zumindest teilkristalline Phase ausgebildet wird, bevor das teilkristalline Siliziumdioxidgranulat zum Schmelzen erhitzt wird

Zur Ausbildung einer teilkristallinen Phase wird das Siliziumdioxidgranulat II bevorzugt bei vermindertem Druck oder in Anwesenheit eines oder mehrerer Gase erwärmt. Geeignete Gase sind zum Beispiel HCl, $Cl_2$, $F_2$, $O_2$, $H_2$, $C_2F_6$, Luft, Inertgas ($N_2$, He, Ne, Ar, Kr) sowie zwei oder mehr davon. Bevorzugt wird das Siliziumdioxidgranulat II bei vermindertem Druck erwärmt.

Bevorzugt wird das Siliziumdioxidgranulat II auf eine Behandlungstemperatur erwärmt, bei der das Siliziumdioxidgranulat II erweicht ohne vollständig zu schmelzen, zum Beispiel auf eine Temperatur im Bereich von 1000 bis 1700°C oder von 1100 bis 1600°C oder von 1200 bis 1500°C, besonders bevorzugt auf eine Temperatur im Bereich von 1250 bis 1450°C.

Bevorzugt wird das Siliziumdioxidgranulat II in einem Tiegel erwärmt, der in einem Ofen angeordnet ist. Der Tiegel kann stehend oder hängend angeordnet sein, bevorzugt hängend. Der Tiegel kann ein Sintertiegel oder ein Blechtiegel sein. Bevorzugt sind Walzblechtiegel aus mehreren, miteinander vernieteten Platten. Als Tiegelmaterial sind beispielsweise Refraktärmetalle, insbesondere W, Mo und Ta, Graphit oder mit Graphitfolie ausgeschlagene Tiegel geeignet, bevorzugt sind Graphittiegel. Bevorzugt beträgt die Haltedauer des Siliziumdioxidgranulats II im Tiegel bei der Behandlungstemperatur 1 bis 6 Stunden, zum Beispiel 2 bis 5 Stunden, besonders bevorzugt 3 bis 4 Stunden.

Bevorzugt wird das Siliziumdioxidgranulat II in einem kontinuierlichen Verfahren erwärmt, besonders bevorzugt in einem Drehrohrofen. Die mittlere Verweilzeit im Ofen beträgt bevorzugt 10 bis 180 min, zum Beispiel 20 bis 120 min, besonders bevorzugt 30 bis 90 min.

Bevorzugt kann der für die Vorbehandlung verwendete Ofen in der Zuleitung zum Schmelzofen, in dem das Siliziumdioxidgranulat II zum Schmelzen erwärmt wird, integriert sein. Weiter bevorzugt kann die Vorbehandlung in dem Schmelzofen durchgeführt werden.

**Schritt iii)**

Aus mindestens einem Teil der in Schritt ii) hergestellten Glasschmelze wird ein Quarzglaskörpers gebildet.

Bevorzugt wird der Quarzglaskörper aus mindestens einem Teil der in Schritt ii) gebildeten Glasschmelze gebildet. Prinzipiell kann der Quarzglaskörper aus mindestens einem Teil der Glasschmelze in dem Schmelzofen oder nach Entnahme mindestens eines Teils der Glasschmelze aus dem Schmelzofen gebildet werden, bevorzugt nach Entnahme mindestens eines Teils der Glasschmelze aus dem Schmelzofen.

Die Entnahme eines Teils der in Schritt ii) hergestellten Glasschmelze kann kontinuierlich aus dem Schmelzofen oder nach abgeschlossener Herstellung der Glasschmelze erfolgen. Die Glasschmelze wird durch den Auslass aus dem Ofen, bevorzugt über eine Düse, entnommen.

Die Glasschmelze kann vor, während oder nach der Entnahme auf eine Temperatur abgekühlt werden, die das Formen der Glasschmelze ermöglicht. Mit dem Abkühlen der Glasschmelze geht ein Ansteigen der Viskosität der Glasschmelze einher. Die Glasschmelze wird bevorzugt soweit abgekühlt, dass beim Formen die gebildete Form erhalten bleibt und das Formen gleichzeitig möglichst zügig, zuverlässig und mit geringem Kraftaufwand durchgeführt werden kann. Der Fachmann kann die Viskosität der Glasschmelze zum Formen durch Variieren der Temperatur der Glasschmelze am Formwerkzeug einfach ermitteln. Bevorzugt wird die Glasschmelze auf eine Temperatur von weniger als 500°C, zum Beispiel von weniger als 200°C oder weniger als 100°C oder weniger als 50°C, besonders bevorzugt auf eine Temperatur im Bereich von 20 bis 30°C abgekühlt.

Weiter bevorzugt erfolgt das Abkühlen mit einer Geschwindigkeit in einem Bereich von 0,1 bis 50 K/min, zum Beispiel von 0,2 bis 10 K/min oder von 0,3 bis 8 K/min oder von 0,5 bis 5 K/min, besonders bevorzugt in einem Bereich von 1 bis 3 K/min.

Es ist weiter bevorzugt, nach folgendem Profil abzukühlen:

1. Abkühlen auf eine Temperatur in einem Bereich von 1180 bis 1220°C;
2. Halten bei dieser Temperatur über einen Zeitraum von 30 bis 120 min, zum Beispiel von 40 bis 90 min, besonders bevorzugt von 50 bis 70 min;
3. Abkühlen auf eine Temperatur von weniger als 500°C, zum Beispiel von weniger als 200°C oder weniger als 100°C oder weniger als 50°C, besonders bevorzugt auf eine Temperatur im Bereich von 20 bis 30°C,

wobei das Abkühlen jeweils mit einer Geschwindigkeit in einem Bereich von 0,1 bis 50 K/min, zum Beispiel von 0,2 bis 10 K/min oder von 0,3 bis 8 K/min oder von 0,5 bis 5 K/min, besonders bevorzugt in einem Bereich von 1 bis 3 K/min erfolgt.

Der gebildete Quarzglaskörper kann ein massiver Körper oder ein Hohlkörper sein. Unter einem massiven Körper wird ein Körper verstanden, der im Wesentlichen aus einem einzigen Material besteht. Gleichwohl kann ein massiver Körper einen oder mehrere Einschlüsse aufweisen, z.B. Gasblasen. Solche Einschlüsse in einem massiven Körper haben oftmals eine Größe von 65 mm$^3$ oder weniger, zum Beispiel von weniger als 40 mm$^3$, oder von weniger als 20 mm$^3$, oder von weniger als 5 mm$^3$, oder von weniger als 2 mm$^3$, besonders bevorzugt von weniger als 0,5 mm$^3$.

Der Quarzglaskörper weist eine äußere Form auf. Unter äußerer Form wird die Form des Außenrands des Querschnitts des Quarzglaskörpers verstanden. Die äußere Form des Quarzglaskörper ist im Querschnitt bevorzugt rund, elliptisch oder polygon mit drei oder mehr Ecken, zum Beispiel 4, 5, 6, 7 oder 8 Ecken, besonders bevorzugt ist der Quarzglaskörper rund.

Bevorzugt hat der Quarzglaskörper eine Länge im Bereich von 100 bis 10000 mm, zum Beispiel von 1000 bis 4000 mm, besonders bevorzugt von 1200 bis 2000 mm.

Bevorzugt hat der Quarzglaskörper einen Außendurchmesser im Bereich von 10 bis 1500 mm, zum Beispiel in einem Bereich von 50 bis 1000 mm oder von 100 bis 500 mm, besonders bevorzugt in einem Bereich von 150 bis 300 mm.

Das Formen des Quarzglaskörpers kann mittels einer Düse erfolgen. Dazu wird die Glasschmelze durch die Düse geführt. Die äußere Form eines durch die Düse geformten Quarzglaskörpers wird durch die Form der Öffnung der Düse bestimmt. Ist die Öffnung der Düse rund, wird beim Formen als Quarzglaskörpers ein Zylinder gebildet. Die Düse kann in den Schmelzofen integriert oder separat angeordnet sein. Ist die Düse nicht in den Schmelzofen integriert, kann sie mit einem vorgeschalteten Behälter ausgerüstet sein, in dem die Glasschmelze nach dem Schmelzen und vor dem Formen eingeführt wird. Bevorzugt ist die Düse in den Schmelzofen integriert. Bevorzugt ist sie als Teil des Auslasses in den Schmelzofen integriert. Dieses Verfahren zum Formen des Quarzglaskörpers ist bevorzugt, wenn das Siliziumdioxidgranulat in einem für ein kontinuierliches Verfahren geeigneten, vertikal ausgerichteten Ofen zum Schmelzen erhitzt wird.

Das Formen des Quarzglaskörpers kann durch Bilden der Glasschmelze in einer Form, zum Beispiel in einem geformten Tiegel, erfolgen. Bevorzugt wird die Glasschmelze in der Form abgekühlt und anschließend daraus entfernt. Das Abkühlen kann bevorzugt durch Kühlen der Form von außen erfolgen. Dieses Verfahren zum Formen des Quarzglaskörpers ist bevorzugt, wenn das Siliziumdioxid mittels Gasdrucksintern oder mittels Vakuumsintern zum Schmelzen erhitzt wird.

Bevorzugt wird der Quarzglaskörper nach dem Bilden abgekühlt. Bevorzugt wird der Quarzglaskörper auf eine Temperatur von weniger als 500°C, zum Beispiel von weniger als 200°C oder weniger als 100°C oder weniger als 50°C, besonders bevorzugt auf eine Temperatur im Bereich von 20 bis 30°C abgekühlt.

Bevorzugt erfolgt das Abkühlen mit einer Geschwindigkeit in einem Bereich von 0,1 bis 50 K/min, zum Beispiel von 0,2 bis 10 K/min oder von 0,3 bis 8 K/min oder von 0,5 bis 5 K/min, besonders bevorzugt in einem Bereich von 1 bis 3 K/min.

Es ist weiter bevorzugt, nach folgendem Profil abzukühlen:

1. Abkühlen auf eine Temperatur in einem Bereich von 1180 bis 1220 °C;
2. Halten bei dieser Temperatur über einen Zeitraum von 30 bis 120 min, zum Beispiel von 40 bis 90 min, besonders bevorzugt von 50 bis 70 min;
3. Abkühlen auf eine Temperatur von weniger als 500°C, zum Beispiel von weniger als 200°C oder weniger als 100°C oder weniger als 50°C, besonders bevorzugt auf eine Temperatur im Bereich von 20 bis 30°C,

wobei das Abkühlen jeweils mit einer Geschwindigkeit in einem Bereich von 0,1 bis 50 K/min, zum Beispiel von 0,2 bis 10 K/min oder von 0,3 bis 8 K/min oder von 0,5 bis 5 K/min, besonders bevorzugt in einem Bereich von 1 bis 3 K/min erfolgt.

Das Verfahren beinhaltet folgenden Verfahrensschritt:
iv.) Bilden eines Hohlkörpers mit mindestens einer Öffnung aus dem Quarzglaskörper.

Der gebildete Hohlkörper weist eine innere und eine äußere Form auf. Unter innerer Form wird die Form des Innenrands des Hohlkörpers im Querschnitt verstanden. Die innere und äußere Form des Querschnitts des Hohlkörpers können gleich oder verschieden sein. Die innere und äußere Form des Hohlkörpers kann im Querschnitt rund, elliptisch oder polygon mit drei oder mehr Ecken, zum Beispiel 4, 5, 6, 7 oder 8 Ecken, sein. Bevorzugt entspricht die äußere Form des Querschnitts der inneren Form des Querschnitts des Hohlkörpers. Besonders bevorzugt hat der Hohlkörper im Querschnitt eine runde innere und eine runde äußere Form.

In einer anderen Ausgestaltung kann sich der Hohlkörper in der inneren und äußeren Form unterscheiden. Bevorzugt weist der Hohlkörper im Querschnitt eine runde äußere Form und eine polygone innere Form auf. Besonders bevorzugt weist der Hohlkörper im Querschnitt eine runde äußere Form und eine hexagonale innere Form auf.

Bevorzugt hat der Hohlkörper eine Länge im Bereich in einem Bereich von 100 bis 10000 mm, zum Beispiel von 1000 bis 4000 mm, besonders bevorzugt von 1200 bis 2000 mm.

Bevorzugt hat der Hohlkörper eine Wanddicke in einem Bereich von 1 bis 1000 mm, zum Beispiel in einem Bereich von 10 bis 500 mm oder von 30 bis 200 mm, besonders bevorzugt in einem Bereich von 50 bis 125 mm. Bevorzugt hat der Hohlkörper einen Außendurchmesser in einem Bereich von 10 bis 1500 mm, zum Beispiel in einem Bereich von 50 bis 1000 mm oder von 100 bis 500 mm, besonders bevorzugt in einem Bereich von 150 bis 300 mm.

Bevorzugt hat der Hohlkörper einen Innendurchmesser in einem Bereich von 1 bis 500 mm, zum Beispiel in einem Bereich von 5 bis 300 mm oder von 10 bis 200 mm, besonders bevorzugt in einem Bereich von 20 bis 100 mm.

Der Hohlkörper enthält eine oder mehr Öffnungen. Bevorzugt enthält der Hohlkörper genau eine Öffnung. Bevorzugt enthält der Hohlkörper eine gerade Zahl an Öffnungen, zum Beispiel 2, 4, 6, 8, 10, 12, 14, 16, 18 oder 20 Öffnungen. Bevorzugt enthält der Hohlkörper zwei Öffnungen. Bevorzugt ist der Hohlkörper ein Rohr. Diese Form des Hohlkörpers ist besonders bevorzugt, wenn der Lichtleiter nur einen Kern beinhaltet.

Der Hohlkörper kann mehr als zwei Öffnungen enthalten. Die Öffnungen liegen bevorzugt jeweils paarweise gegenüberliegend in den Enden des Quarzglaskörpers. Zum Beispiel weist jedes Ende des Quarzglaskörpers 2, 3, 4, 5, 6, 7 oder mehr als 7 Öffnungen auf, besonders bevorzugt 5, 6 oder 7 Öffnungen.

Der Hohlkörper kann prinzipiell auf dem Fachmann bekannten Wegen geformt werden. Bevorzugt wird der Hohlkörper mittels einer Düse geformt. Bevorzugt enthält die Düse in der Mitte ihrer Öffnung eine Vorrichtung, die die Glasschmelze beim Formen ableitet. So kann aus einer Glasschmelze ein Hohlkörper geformt werden.

Das Bilden eines Hohlkörpers kann durch Verwendung einer Düse und anschließende Nachbehandlung erfolgen. Als Nachbehandlung eignen sich prinzipiell alle dem Fachmann bekannten Verfahren zur Herstellung eines Hohlkörpers aus einem massiven Körper, zum Beispiel das Stauchen von Kanälen, Bohren, Honen oder Schleifen. Bevorzugt geeignet ist als Nachbehandlung das Führen des massiven Körpers über einen oder mehrere Domen, wobei ein Hohlkörper gebildet wird. Ebenso kann der Dorn in den massiven Körper unter Bilden eines Hohlkörpers eingebracht werden. Bevorzugt wird der Hohlkörper nach dem Bilden abgekühlt.

Das Formen zu einem Hohlkörper kann durch Bilden der Glasschmelze in einer Form, zum Beispiel in einem geformten Tiegel erfolgen. Bevorzugt wird die Glasschmelze in der Form abgekühlt und anschließend daraus entfernt. Das Abkühlen kann bevorzugt durch Kühlen der Form von außen erfolgen.

Bevorzugt wird der Hohlkörper auf eine Temperatur von weniger als 500°C, zum Beispiel von weniger als 200°C oder weniger als 100°C oder weniger als 50°C, besonders bevorzugt auf eine Temperatur im Bereich von 20 bis 30°C abgekühlt.

Bevorzugt erfolgt das Abkühlen mit einer Geschwindigkeit in einem Bereich von 0,1 bis 50 K/min, zum Beispiel von 0,2 bis 10 K/min oder von 0,3 bis 8 K/min oder von 0,5 bis 5 K/min, besonders bevorzugt in einem Bereich von 1 bis 3 K/min.

Es ist weiter bevorzugt, nach folgendem Profil abzukühlen:

1. Abkühlen auf eine Temperatur in einem Bereich von 1180 bis 1220 °C;
2. Halten bei dieser Temperatur über einen Zeitraum von 30 bis 120 min, zum Beispiel von 40 bis 90 min, besonders bevorzugt von 50 bis 70 min;
3. Abkühlen auf eine Temperatur von weniger als 500°C, zum Beispiel von weniger als 200°C oder weniger als 100°C oder weniger als 50°C, besonders bevorzugt auf eine Temperatur im Bereich von 20 bis 30°C,

wobei das Abkühlen jeweils mit einer Geschwindigkeit in einem Bereich von 0,1 bis 50 K/min, zum Beispiel von 0,2 bis 10 K/min oder von 0,3 bis 8 K/min oder von 0,5 bis 5 K/min, besonders bevorzugt in einem Bereich von 1 bis 3 K/min erfolgt.

Ein Quarzglaskörper, das durch dieses Verfahren erhältlich ist, wird beschrieben, wobei der Quarzglaskörper bevorzugt aus Siliziumdioxid besteht, wobei das Siliziumdioxid folgende Merkmale aufweist:

A] einen OH-Gehalt von weniger als 10 ppm; und
B] einen Chlorgehalt von weniger als 60 ppm; und
C] einen Aluminiumgehalt von weniger als 200 ppb,

wobei die ppb und ppm jeweils auf das Gesamtgewicht des Quarzglaskörpers bezogen sind.

Bevorzugt ist der Quarzglaskörper durch mindestens eines, zum Beispiel mindestens zwei oder mindestens drei oder mindestens vier, besonders bevorzugt alle der folgenden Merkmale gekennzeichnet:

D] einen ODC-Anteil von weniger als $5\times10^{15}$ /cm$^3$, zum Beispiel in einem Bereich von $0,1\times10^{15}$ bis $3\times10^{15}$ /cm$^3$, besonders bevorzugt in einem Bereich von $0,5\times10^{15}$ bis $2,0\times10^{15}$ /cm$^3$;
E] einen Metallgehalt von Metallen, die von Aluminium verschieden sind, von weniger als 300 ppb, zum Beispiel von weniger als 200 ppb, besonders bevorzugt in einem Bereich von 1 bis 150 ppb;
F] eine Viskosität (p=1013 hPa) in einem Bereich von $\log_{10}$ (η (1200°C) / dPas) = 13,4 bis $\log_{10}$ (η (1200°C) / dPas) = 13,9 und/oder $\log_{10}$ (η (1300°C) / dPas) = 11,5 bis $\log_{10}$ (η (1300°C) / dPas) = 12,1 und/oder $\log_{10}$ (η (1350°C) / dPas) = 1,2 bis $\log_{10}$ (η (1350°C) / dPas) = 10,8;
G] eine Standardabweichung des OH-Gehalts von nicht mehr als 10 %, bevorzugt nicht mehr als 5 %, bezogen auf den OH-Gehalt A] des Quarzglaskörpers;
H] eine Standardabweichung des Cl-Gehalts von nicht mehr als 10 %, bevorzugt nicht mehr als 5 %, bezogen auf den Cl-Gehalt B] des Quarzglaskörpers;
I] eine Standardabweichung des Al-Gehalts von nicht mehr als 10 %, bevorzugt nicht mehr als 5 %, bezogen auf den Al-Gehalt C] des Quarzglaskörpers;
J] eine Brechzahlhomogenität von weniger als $1\times10^{-4}$, zum Beispiel von weniger als $5\times10^{-5}$, besonders bevorzugt von weniger als $1\times10^{-6}$;
K] eine zylindrische Form;
L] einen Transformationspunkt $T_g$ in einem Bereich von 1150 bis 1250 °C;
M] eine fiktive Temperatur in einem Bereich von 1055 bis 1200°C;

wobei die ppb und ppm jeweils bezogen sind auf das Gesamtgewicht des Quarzglaskörpers.

Bevorzugt weist der Quarzglaskörper eine homogen verteilte OH-Menge, Chlormenge oder Aluminiummenge auf. Ein Indikator für die Homogenität des Quarzglaskörpers kann in der Standardabweichung der OH-Menge, Chlormenge oder Aluminiummenge ausgedrückt werden. Die Standardabweichung ist das Maß für die Streubreite der Werte einer Variablen, hier der OH-Menge, Chlormenge oder Aluminiummenge, um deren arithmetisches Mittel. Zur Bestimmung der Standardabweichung wird der Gehalt der zu bestimmenden Komponente in der Probe, z.B. OH, Chlor oder Aluminium, an mindestens sieben Messpunkten bestimmt.

Der Quarzglaskörper weist bevorzugt die Merkmalskombination A]/B]/C]/D] oder A]/B]/C]/E] oder A]/B]/C]/F] auf, weiter bevorzugt die Merkmalskombination A]/B]/C]/D]/E] oder A]/B]/C]/D]/F] oder A]/B]/C]/E]/F], besonders bevorzugt die Merkmalskombination A]/B]/C]/D]/E]/F].

Der Quarzglaskörper weist bevorzugt die Merkmalskombination A]/B]/C]/D] auf, wobei der OH-Gehalt weniger als 10 ppm, der Chlorgehalt weniger als 60 ppm, der Aluminiumgehalt weniger als 200 ppb beträgt und der ODC-Anteil in einem Bereich von $0,1 \cdot 10^{15}$ bis $3 \cdot 10^{15}$ /cm$^3$ liegt.

Der Quarzglaskörper weist bevorzugt die Merkmalskombination A]/B]/C]/E] auf, wobei der OH-Gehalt weniger als 10 ppm, der Chlorgehalt weniger als 60 ppm, der Aluminiumgehalt weniger als 200 ppb beträgt und der Metallgehalt von Metallen, die von Aluminium verschieden sind, weniger als 200 ppb beträgt.

Der Quarzglaskörper weist bevorzugt die Merkmalskombination A]/B]/C]/F] auf, wobei der OH-Gehalt weniger als 10 ppm, der Chlorgehalt weniger als 60 ppm, der Aluminiumgehalt weniger als 200 ppb beträgt und die Viskosität ($p=1013$ hPa) in einem Bereich von $\log_{10}$ ($\eta$ (1200°C) / dPas) = 13,4 bis $\log_{10}$ ($\eta$ (1200°C) / dPas) = 13,9 liegt.

Der Quarzglaskörper weist bevorzugt die Merkmalskombination A]/B]/C]/D]/E] auf, wobei der OH-Gehalt weniger als 10 ppm, der Chlorgehalt weniger als 60 ppm, der Aluminiumgehalt weniger als 200 ppb beträgt, der ODC-Anteil in einem Bereich von $0,1 \cdot 10^{15}$ bis $3 \cdot 10^{15}$ /cm$^3$ liegt und der Metallgehalt von Metallen, die von Aluminium verschieden sind, weniger als 200 ppb beträgt.

Der Quarzglaskörper weist bevorzugt die Merkmalskombination A]/B]/C]/D]/F] auf, wobei der OH-Gehalt weniger als 10 ppm, der Chlorgehalt weniger als 60 ppm, der Aluminiumgehalt weniger als 200 ppb beträgt, der ODC-Anteil in einem Bereich von $0,1 \cdot 10^{15}$ bis $3 \cdot 10^{15}$ /cm$^3$ liegt und die Viskosität ($p=1013$ hPa) in einem Bereich von $\log_{10}$ ($\eta$ (1200°C) / dPas) = 13,4 bis $\log_{10}$ ($\eta$ (1200°C) / dPas) = 13,9 liegt.

Der Quarzglaskörper weist bevorzugt die Merkmalskombination A]/B]/C]/E]/F] auf, wobei der OH-Gehalt weniger als 10 ppm, der Chlorgehalt weniger als 60 ppm, der Aluminiumgehalt weniger als 200 ppb beträgt, der Metallgehalt von Metallen, die von Aluminium verschieden sind, weniger als 200 ppb beträgt und die Viskosität ($p=1013$ hPa) in einem Bereich von $\log_{10}$ ($\eta$ (1200°C) / dPas) = 13,4 bis $\log_{10}$ ($\eta$ (1200°C) / dPas) = 13,9 liegt.

Der Quarzglaskörper weist bevorzugt die Merkmalskombination A]/B]/C]/D]E]//F] auf, wobei der OH-Gehalt weniger als 10 ppm, der Chlorgehalt weniger als 60 ppm, der Aluminiumgehalt weniger als 200 ppb beträgt, der ODC-Anteil in einem Bereich von $0,1 \cdot 10^{15}$ bis $3 \cdot 10^{15}$ /cm$^3$ liegt, der Metallgehalt von Metallen, die von Aluminium verschieden sind, weniger als 200 ppb beträgt und die Viskosität ($p=1013$ hPa) in einem Bereich von $\log_{10}$ ($\eta$ (1200°C) / dPas) = 13,4 bis $\log_{10}$ ($\eta$ (1200°C) / dPas) = 13,9 liegt.

Bevorzugt ist ein Quarzglaskörper erhältlich durch ein Verfahren umfassend die Schritte:

i) Bereitstellen von Siliziumdioxidgranulat II erhältlich durch ein Verfahren umfassend die folgenden Schritte:

(I) Bereitstellen von Siliziumdioxidgranulat I erhältlich durch ein Verfahren umfassend die folgenden Schritte:

I. Bereitstellen von Siliziumdioxidpulver;
II. Bereitstellen einer Flüssigkeit;
III. Mischen der Komponenten aus Schritt I. und II. unter Erhalt einer Aufschlämmung; und
IV. Sprühtrocknen der Aufschlämmung unter Erhalt von Siliziumdioxidgranulat I;

(II) Behandeln des Siliziumdioxidgranulats I aus Schritt (I) unter Erhalt von Siliziumdioxidgranulat II;

ii) Bilden einer Glasschmelze aus dem Siliziumdioxidgranulat II aus Schritt (I);
iii) Bilden eines Quarzglaskörpers aus mindestens einem Teils der Glasschmelze;
iv) gegebenenfalls Bilden eines Hohlkörpers mit mindestens einer Öffnung aus dem Quarzglaskörper.

Es wird ein Quarzglaskörper beschrieben, wobei der Quarzglaskörper aus Siliziumdioxid besteht und

A] einen OH-Gehalt von weniger als 10 ppm;
B] einen Chlorgehalt von weniger als 60 ppm; und
C] einen Aluminiumgehalt von weniger als 200 ppb aufweist,

wobei die ppb und ppm, jeweils auf das Gesamtgewicht des Quarzglaskörpers bezogen sind.

Bevorzugt ist der Quarzglaskörper durch mindestens eines, zum Beispiel mindestens zwei oder mindestens drei oder mindestens vier, besonders bevorzugt mindestens fünf der folgenden Merkmale gekennzeichnet:

D] einen ODC-Anteil von weniger als $5 \times 10^{15}$ /cm$^3$, zum Beispiel in einem Bereich von $0,1 \times 10^{15}$ bis $3 \times 10^{15}$ /cm$^3$, besonders bevorzugt in einem Bereich von $0,5 \times 10^{15}$ bis $2,0 \times 10^{15}$ /cm$^3$;

E] einen Metallgehalt von Metallen, die von Aluminium verschieden sind, von weniger als 300 ppb, zum Beispiel von weniger als 200 ppb, besonders bevorzugt in einem Bereich von 1 bis 150 ppb;

F] eine Viskosität (p=1013 hPa) in einem Bereich von $\log_{10} (\eta (1200°C) / dPas) = 13,4$ bis $\log_{10} (\eta (1200°C) / dPas) = 13,9$ und/oder $\log_{10} (\eta (1300°C) / dPas) = 11,5$ bis $\log_{10} (\eta (1300°C) / dPas) = 12,1$ und/oder $\log_{10} (\eta (1350°C) / dPas) = 1,2$ bis $\log_{10} (\eta (1350°C) / dPas) = 10,8$;

G] eine Standardabweichung des OH-Gehalts von nicht mehr als 10 %, bevorzugt nicht mehr als 5 %, bezogen auf den OH-Gehalt A] des Quarzglaskörpers;

H] eine Standardabweichung des Cl-Gehalts von nicht mehr als 10 %, bevorzugt nicht mehr als 5 %, bezogen auf den Cl-Gehalt B] des Quarzglaskörpers;

I] eine Standardabweichung des Al-Gehalts von nicht mehr als 10 %, bevorzugt nicht mehr als 5 %, bezogen auf den Al-Gehalt C] des Quarzglaskörpers;

J] eine Brechzahlhomogenität von weniger als $1 \times 10^{-4}$, zum Beispiel von weniger als $5 \times 10^{-5}$, besonders bevorzugt von weniger als $1 \times 10^{-6}$;

K] eine zylindrische Form;

L] einen Transformationspunkt $T_g$ in einem Bereich von 1150 bis 1250 °C;

M] eine fiktive Temperatur in einem Bereich von 1055 bis 1200°C;

wobei die ppb und ppm jeweils bezogen sind auf das Gesamtgewicht des Quarzglaskörpers.

Ein elfter Gegenstand der vorliegenden Erfindung ist ein Verfahren zum Herstellen eines Lichtleiters beinhaltend folgende Schritte:

A/ Bereitstellen

A2/ eines Quarzglaskörpers, der zunächst zu einem Hohlkörper mit mindestens einer Öffnung verarbeitet wird;

B/ Einbringen eines oder mehrerer Kernstäbe in den Quarzglaskörper durch die mindestens eine Öffnung unter Erhalt eines Vorläufers,

C/ Ziehen des Vorläufers aus Schritt B/ in der Wärme unter Erhalt des Lichtleiters mit einem oder mehreren Kernen und einer Hülle M1.

**Schritt A/**

Der in Schritt A/ bereitgestellte Quarzglaskörper ist ein Hohlkörper mit mindestens zwei Öffnungen. Der in Schritt A/ bereitgestellte Quarzglaskörper ist bevorzugt gekennzeichnet durch die Merkmale gemäß dem zehnten Gegenstand der vorliegenden Erfindung. Bevorzugt ist der in Schritt A/ bereitgestellte Quarzglaskörper erhältlich durch ein Verfahren gemäß dem achten Gegenstand der Erfindung beinhaltend als Schritt iv.) das Bilden eines Hohlkörpers mit mindestens zwei Öffnungen aus dem Quarzglaskörper. Besonders bevorzugt weist der so hergestellte Quarzglaskörper die Merkmale gemäß dem zehnten Gegenstand der Erfindung auf. Bevorzugt ist der in Schritt A/ bereitgestellte Quarzglaskörper ein Quarzglaskörper gemäß dem neunten Gegenstand der Erfindung. Besonders bevorzugt weist der in Schritt A/ bereitgestellte Quarzglaskörper die Merkmale gemäß dem neunten Gegenstand der Erfindung und die Merkmale gemäß dem zehnten Gegenstand der Erfindung auf. Bevorzugt ist der in Schritt A/ bereitgestellte Quarzglaskörper ein Quarzglaskörper gemäß dem zehnten Gegenstand der Erfindung.

**Schritt B/**

Durch mindestens eine der Öffnungen des Quarzglaskörpers werden ein oder mehrere Kernstäbe eingebracht (Schritt B/). Als Kernstab wird im Zusammenhang mit der vorliegenden Erfindung ein Gegenstand bezeichnet, der vorgesehen ist, in eine Hülle, zum Beispiel eine Hülle M1, eingebracht und zu einem Lichtleiter verarbeitet zu werden. Der Kernstab hat einen Kern aus Quarzglas. Bevorzugt beinhaltet der Kernstab einen Kern aus Quarzglas und eine den Kern umgebende erste Mantelschicht M0.

Jeder Kernstab besitzt eine Form, die so gewählt ist, dass sie in den Quarzglaskörper passt. Bevorzugt entspricht die äußere Form eines Kernstabs der Form einer Öffnung des Quarzglaskörpers. Besonders bevorzugt ist der Quarzglaskörper ein Rohr und der Kernstab ein Stab mit einem runden Querschnitt.

Der Durchmesser des Kernstabs ist geringer als der Innendurchmesser des Hohlkörpers. Bevorzugt ist der Durchmesser des Kernstabs 0,1 bis 3 mm kleiner als der Innendurchmesser des Hohlkörpers, zum Beispiel 0,3 bis 2,5 mm kleiner oder 0,5 bis 2 mm kleiner oder 0,7 bis 1,5 mm kleiner, besonders bevorzugt 0,8 bis 1,2 mm kleiner.

Bevorzugt liegt das Verhältnis des Innendurchmessers des Quarzglaskörpers zum Durchmesser des Kernstabs im Bereich von 2:1 bis 1,0001:1, zum Beispiel im Bereich von 1,8:1 bis 1,001:1 oder im Bereich von 1,6:1 bis 1,005:1 oder im Bereich von 1,4:1 bis 1,01:1, besonders bevorzugt im Bereich von 1,2:1 bis 1,05:1.

Bevorzugt kann ein Bereich innerhalb des Quarzglaskörpers, der nicht durch den Kernstab ausgefüllt ist, mit mindestens einer weiteren Komponente gefüllt werden, zum Beispiel einem Siliziumdioxidpulver oder einem Siliziumdioxidgranulat.

Es ist ebenso möglich, dass in einen Quarzglaskörper ein sich bereits in mindestens einem weiteren Quarzglaskörper befindlicher Kernstab eingeführt wird. Der weitere Quarzglaskörper hat dabei einen Außendurchmesser, der geringer als der Innendurchmesser des Quarzglaskörpers ist. Der in den Quarzglaskörper eingeführte Kernstab kann sich auch bereits in zwei oder mehr weiteren Quarzglaskörpern, zum Beispiel in 3 oder mehr weiteren Quarzglaskörpern befinden.

Ein so erhältlicher mit einem oder mehreren Kernstäben versehener Quarzglaskörper wird im Folgenden als "Vorläufer" bezeichnet.

**Schritt C/**

Der Vorläufer wird in der Wärme gezogen (Schritt C/). Das so erhaltene Produkt ist ein Lichtleiter mit einem oder mehreren Kernen und mindestens einer Hülle M1.

Bevorzugt erfolgt das Ziehen des Vorläufers mit einer Geschwindigkeit im Bereich von 0,05 m/h bis 110 km/h.

Bevorzugt wird das Ziehen in der Wärme bei einer Temperatur von bis zu 2500°C durchgeführt, zum Beispiel bei einer Temperatur im Bereich von 1700 bis 2400°C, besonders bevorzugt bei einer Temperatur im Bereich von 2100 bis 2300°C.

Bevorzugt wird der Vorläufer durch einen Ofen geführt, der den Vorläufer von außen erhitzt.

Bevorzugt wird der Vorläufer verlängert, bis die gewünschte Dicke des Lichtleiters erreicht wird. Bevorzugt wird der Vorläufer auf die 1.000 bis 6.000.000 fache Länge elongiert, zum Beispiel auf die 10.000 bis 500.000 fache Länge oder auf die 30.000 bis 200.000 fache Länge, jeweils bezogen auf die Länge des in Schritt A/ bereitgestellten Quarzglaskörper. Besonders bevorzugt wird der Vorläufer auf die 100.000 bis 10.000.000 fache Länge elongiert, zum Beispiel auf die 150.000 bis 5.800.000 fache Länge oder auf die 160.000 bis 640.000 fache Länge oder auf die 1.440.000 bis 5.760.000 fache Länge oder auf die 1.440.000 bis 2.560.000 fache Länge, jeweils bezogen auf die Länge des in Schritt B/ bereitgestellten Vorläufers.

Bevorzugt wird der Durchmesser des Vorläufers durch das Elongieren um einen Faktor in einem Bereich von 100 bis 3.500 verringert, zum Beispiel in einem Bereich von 300 bis 3.000 oder von 400 bis 800 oder von 1.200 bis 2.400 oder von 1.200 bis 1.600, jeweils bezogen auf den Durchmesser des in Schritt B/ bereitgestellten Vorläufers.

Der nach Schritt C/ erhaltene Lichtleiter kann durch verschiedene Schritte nachbehandelt werden.

Der Lichtleiter kann mit einer Beschichtung versehen werden. Bevorzugt kann der Lichtleiter nach dem Ausziehen und vor dem Durchführen weiterer Nachbehandlungsschritte mit einer Beschichtung versehen werden. Die Beschichtung dient als Schutz vor mechanischen Beschädigungen sowie als Schutz vor Feuchtigkeit, Hitze, Kälte und anderen äußeren Einflüssen. Ohne zusätzliche Beschichtung wird die Gefahr von Mikrorissen auf der Faseroberfläche erhöht, was zu einer erheblichen Verringerung der mechanischen Belastbarkeit führen kann. Die Beschichtung kann aus einer oder aus zwei oder mehr Schichten bestehen. Bevorzugt besteht die Beschichtung aus zwei Schichten. Eine Beschichtung mit zwei Schichten weist bevorzugt eine die Mantelschicht umhüllende erste Schicht, die Lackierung, auf, die Feuchtigkeit von Kern und Mantelschicht fernhält, sowie eine die erste Schicht umhüllende weitere Schicht, die den Lichtleiter vor thermischen und mechanischen Schäden schützt. Als Beschichtungsmaterialien eignen sich insbesondere vernetzte Polymere, bevorzugte Beschichtungsmaterialien sind vernetzte Acrylate, Polyimide, Silikone oder zwei oder mehr davon. Die erste Schicht besteht besonders bevorzugt aus vernetztem Polyacrylat. Die erste Schicht hat bevorzugt eine Dicke im Bereich von 10 bis 100 $\mu$m, zum Beispiel von in einem Bereich von 15 bis 50 $\mu$m, besonders bevorzugt im Bereich von 20 bis 30 $\mu$m. Die weitere Schicht besteht zum Beispiel aus einer Kombination aus vernetzten Polymeren. Die weitere Schicht hat bevorzugt eine dicke im Bereich von 5 bis 500 $\mu$m, zum Beispiel in einem Bereich von 10 bis 100 $\mu$m oder von 15 bis 50 $\mu$m, besonders bevorzugt von 20 bis 30 $\mu$m.

Der Lichtleiter erhältlich durch ein Verfahren gemäß dem elften Gegenstand der vorliegenden Erfindung weist eine Hülle M1 und einen oder mehrere Kerne auf,

wobei die Hülle M1 die Kerne umgibt;
wobei jeder Kern einen Brechungsindexverlauf senkrecht zur maximalen Kernausdehnung aufweist, wobei mindestens ein Brechungsindex $n_K$ von jedem Brechungsindexverlauf größer ist als der Brechungsindex $n_{M1}$ der Hülle M1;
wobei die Hülle M1 aus Siliziumdioxid besteht und

a) einen OH-Gehalt von weniger als 10 ppm; und

b) einen Chlorgehalt von weniger als 60 ppm; und

c) einen Aluminiumgehalt von weniger als 200 ppb aufweist;

wobei die ppb und ppm jeweils bezogen sind auf das Gesamtgewicht der Hülle M1.

Bevorzugt weist die Hülle M1 mindestens eines der folgenden Merkmale auf:

d) einen ODC-Anteil von weniger als $5 \times 10^{15}$ /cm$^3$, zum Beispiel in einem Bereich von $0,1 \times 10^{15}$ bis $3 \times 10^{15}$ /cm$^3$, besonders bevorzugt in einem Bereich von $0,5 \times 10^{15}$ bis $2,0 \times 10^{15}$ /cm$^3$;

e) einen Metallgehalt von Metallen, die von Aluminium verschieden sind, von weniger als 1 ppm, zum Beispiel von weniger als 0,5 ppm, besonders bevorzugt von weniger als 0,1 ppm;

f) eine Viskosität (p=1013 hPa) in einem Bereich von $\log_{10}$ ($\eta$ (1200°C) / dPas) = 13,4 bis $\log_{10}$ ($\eta$ (1200°C) / dPas) = 13,9 und/oder $\log_{10}$ ($\eta$ (1300°C) / dPas) = 11,5 bis $\log_{10}$ ($\eta$ (1300°C) / dPas) = 12,1 und/oder $\log_{10}$ ($\eta$ (1350°C) / dPas) = 1,2 bis $\log_{10}$ ($\eta$ (1350°C) / dPas) = 10,8;

g) einen Curl-Parameter von mehr als 6 m;

h) eine Standardabweichung des OH-Gehalts von nicht mehr als 10 %, bevorzugt nicht mehr als 5 %, bezogen auf den OH-Gehalt a) der Hülle M1;

i) eine Standardabweichung des Cl-Gehalts von nicht mehr als 10 %, bevorzugt nicht mehr als 5 %, bezogen auf den Cl-Gehalt b) der Hülle M1;

j) eine Standardabweichung des Al-Gehalts von nicht mehr als 10 %, bevorzugt nicht mehr als 5 %, bezogen auf den Al-Gehalt c) der Hülle M1

k) eine Brechzahlhomogenität von weniger als $1 \times 10^{-4}$, zum Beispiel von weniger als $5 \times 10^{-5}$, besonders bevorzugt von weniger als $1 \times 10^{-6}$;

1) einen Transformationspunkt $T_g$ in einem Bereich von 1150 bis 1250°C, besonders bevorzugt in einem Bereich von 1180 bis 1220°C,

wobei die ppb und ppm jeweils bezogen sind auf das Gesamtgewicht der Hülle M1.

Bevorzugt ist ein Lichtleiter erhältlich durch ein Verfahren umfassend die folgenden Schritte:

A/ Bereitstellen eines Quarzglaskörpers bevorzugt erhältlich gemäß einem Verfahren umfassend die folgenden Schritte:

i) Bereitstellen von Siliziumdioxidgranulat II erhältlich durch ein Verfahren umfassend die folgenden Schritte:

(I) Bereitstellen von Siliziumdioxidgranulat I erhältlich durch ein Verfahren umfassend die folgenden Schritte:

I. Bereitstellen von Siliziumdioxidpulver;

II. Bereitstellen einer Flüssigkeit;

III. Mischen der Komponenten aus Schritt I. und II. unter Erhalt einer Aufschlämmung; und

IV. Sprühtrocknen der Aufschlämmung unter Erhalt von Siliziumdioxidgranulat I;

(II) Behandeln des Siliziumdioxidgranulats I aus Schritt (I) unter Erhalt von Siliziumdioxidgranulat II;

ii) Bilden einer Glasschmelze aus dem Siliziumdioxidgranulat II aus Schritt (II);

iii) Bilden eines Quarzglaskörpers aus mindestens einem Teils der Glasschmelze

iv) Bilden eines Hohlkörpers mit mindestens einer Öffnung aus dem Quarzglaskörper;

B/ Einbringen eines oder mehrerer Kernstäbe in den Quarzglaskörper durch die mindestens eine Öffnung unter Erhalt eines Vorläufers,

C/ Ziehen des Vorläufers in der Wärme unter Erhalt des Lichtleiters mit einem Kern und mindestens einer Mantelschicht M1.

Dabei weist das Siliziumdioxidgranulat I mindestens eines der folgenden Merkmale auf:

A) einen Chlorgehalt von weniger als 200 ppm;

B) einen Aluminiumgehalt von weniger als 200 ppb;

jeweils bezogen auf das Gesamtgewicht des Siliziumdioxidgranulats I.

Dabei weist das Siliziumdioxidpulver folgende Merkmale auf:

a. einen Chlorgehalt von weniger als 200 ppm; und
b. einen Aluminiumgehalt von weniger als 200 ppb;

jeweils bezogen auf das Gesamtgewicht des Siliziumdioxidpulvers.

Dabei weist das Siliziumdioxidgranulat II mindestens eines der folgenden Merkmale auf:

(A) einen Chlorgehalt von weniger als 500 ppm;
(B) einen Aluminiumgehalt von weniger als 200 ppb;

jeweils bezogen auf das Gesamtgewicht des Siliziumdioxidgranulats II.

Ein dreizehnter Gegenstand der vorliegenden Erfindung ist ein Lichtleiterkabel beinhaltend mindestens zwei Lichtleiter gemäß dem ersten Gegenstand der Erfindung.

Bevorzugt beinhaltet das Lichtleiterkabel mindestens zwei Lichtleiter, besonders bevorzugt 10 bis 2000.

Die mindestens zwei Lichtleiter können im Kabel beliebig angeordnet sein. Bevorzugt liegen die Lichtleiter im Kabel als Bündel oder verdrillt vor. Unter einem Bündel von Lichtleitern werden mehrere nebeneinanderliegende Lichtleiter verstanden, bevorzugt 10. Unter verdrillten Lichtleitern werden sich umwickelnde Lichtleiter verstanden.

Bevorzugt sind die mindestens zwei Lichtleiter umhüllt. Die Hülle kann unmittelbar auf die mindestens zwei Lichtleiter aufgebracht sein. Unter unmittelbar aufgebracht wird verstanden, dass zwischen den mindestens zwei Lichtleitern und der Hülle ein nicht gefüllter Raum von nicht mehr als 1 mm besteht. Die Hülle kann die mindestens zwei Lichtleiter so umhüllen, dass ein Abstand von mehr als 1 mm frei bleibt.

Die Hülle dient als Schutz vor mechanischen Beschädigungen sowie als Schutz vor Feuchtigkeit, Hitze, Kälte und anderen äußeren Einflüssen. Die Hülle kann aus einer oder aus zwei oder mehr Schichten bestehen. Bevorzugt besteht die Hülle aus zwei oder mehr Schichten, einer außen liegenden Schicht und mindestens einer innen liegenden Schicht. Die außen liegende Schicht dient hauptsächlich dem Schutz vor mechanischen Beschädigungen. Die mindestens eine innen liegende Schicht schützt vor Feuchtigkeit, thermischen, mechanischen und weiteren äußeren Einflüssen. Als Materialien für die Schichten eignen sich insbesondere vernetzte Polymere.

Die mindestens zwei Lichtleiter sind im Lichtleiterkabel bevorzugt so angeordnet, dass die Enden der mindestens zwei Lichtleiter mit den Enden des Lichtleiterkabels zusammenfallen. Besonders bevorzugt sind die mindestens zwei Lichtleiter eines Kabels gleich lang. Unter "gleich lang" wird eine Abweichung der Länge eines Lichtleiters von nicht mehr als 5 %, bezogen auf die durchschnittliche Länge der Lichtleiter des Kabels, verstanden. Bevorzugt weist das Lichtleiterkabel an mindestens einem Ende, bevorzugt an beiden Enden, eine Vorrichtung auf, über die das Lichtleiterkabel mit anderen Lichtleiterkabeln oder mit anderen Komponenten verbunden werden kann. Bevorzugt weist das Lichtleiterkabel an mindestens einem Ende, bevorzugt an beiden Enden, eine Steckverbindung oder eine Spleißverbindung auf.

Ein vierzehnter Gegenstand der vorliegenden Erfindung ist ein Verfahren zum Herstellen eines Lichtleiterkabels beinhaltend folgende Schritte:

A} Bereitstellen von mindestens zwei Lichtleitern gemäß dem ersten Gegenstand der Erfindung;
B} Verarbeiten der mindestens zwei Lichtleiter aus A} zu einem Lichtleiterkabel.

Die in Schritt A} bereitgestellten mindestens zwei Lichtleiter weisen mindestens die Merkmale A] bis C] auf. Bevorzugt weisen die in Schritt A} bereitgestellten mindestens zwei Lichtleiter mindestens eines der Merkmale D] bis G] auf. Bevorzugt sind die in Schritt A} bereitgestellten mindestens zwei Lichtleiter gekennzeichnet durch die Merkmale gemäß dem ersten Gegenstand der vorliegenden Erfindung.

Die in Schritt A} bereitgestellten mindestens zwei Lichtleiter werden in dem Schritt B} verarbeitet. Die Verarbeitung kann Schritte umfassen, durch die ein Lichtleiterkabel aus zwei oder mehr Lichtleitern erhalten werden kann.

Zum Beispiel kann die Verarbeitung gemäß Schritt B} folgende Schritte beinhalten:

- Die zwei oder mehr Lichtleiter können mit einer Hülle versehen werden.
- Die zwei oder mehr Lichtleiter können verdrillt werden.
- Die zwei oder mehr Lichtleiter können gebündelt werden. Das Bündel der zwei oder mehr Lichtleiter kann bevorzugt durch eine separate Vorrichtung zusammengehalten werden. Zum Beispiel kann das Bündel durch eine Hülle zusammengehalten werden.
- Die zwei oder mehr Lichtleiter können mit einer Vorrichtung an den Enden versehen werden, bevorzugt mit einer Steck- oder Spleißvorrichtung.

Figuren

| **Fig. 1** | Flussdiagramm (Verfahren zum Herstellen eines Quarzglaskörpers) |
| **Fig. 2** | Flussdiagramm (Verfahren zum Herstellen eines Siliziumdioxidgranulats I) |
| **Fig. 3** | Flussdiagramm (Verfahren zum Herstellen eines Siliziumdioxidgranulats II) |
| **Fig. 4** | schematische Darstellung eines Sprühturms |
| **Fig. 5** | schematische Darstellung eines Querschnitts eines Lichtleiters |
| **Fig. 6** | schematische Darstellung einer Aufsicht auf einen Lichtleiter |
| **Fig. 7** | schematische Darstellung eines Gasdruck-Sinter-Ofens (GDS-Ofen) |

**Beschreibung der Figuren**

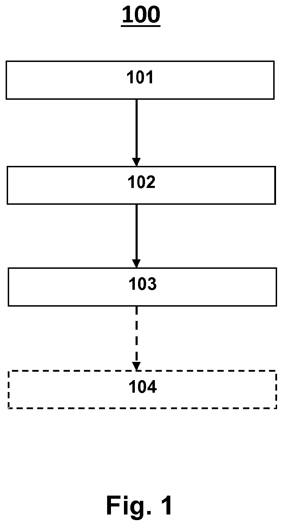

**Figur 1** zeigt ein Flussdiagramm enthaltend die Schritte 101 bis 104 eines Verfahrens 100 zur Herstellung eines Quarzglaskörpers gemäß der vorliegenden Erfindung. In einem ersten Schritt 101 wird ein Siliziumdioxidgranulat bereitgestellt. In einem zweiten Schritt 102 wird aus dem Siliziumdioxidgranulat eine Glasschmelze gebildet.

Bevorzugt werden zum Schmelzen Formen eingesetzt, die in einen Ofen eingebracht und wieder aus ihm entnommen werden können. Solche Formen werden oftmals aus Graphit hergestellt. Sie ergeben eine Negativform des Gießlings. Das Siliziumdioxidgranulat wird in die Form eingefüllt, in dem dritten Schritt 103 zunächst in der Form zum Schmelzen gebracht. Anschließend bildet sich in derselben Form durch Abkühlen der Schmelze der Quarzglaskörper. Dieser wird dann aus der Form herausgelöst und weiter bearbeitet, zum Beispiel in einem optionalen Schritt 104. Diese Vorgehensweise ist diskontinuierlich. Das Bilden der Schmelze erfolgt bevorzugt bei reduziertem Druck, insbesondere bei Vakuum. Es ist ferner möglich, während Schritt 103 zeitweise den Ofen mit einer reduzierenden, wasserstoffhaltigen Atmosphäre zu beaufschlagen.

Bei einer anderen Vorgehensweise werden bevorzugt als Schmelztiegel hängende oder stehende Tiegel eingesetzt. Hier wird dazu das Siliziumdioxidgranulat in den Schmelztiegel eingeführt und darin erwärmt, bis sich eine Glasschmelze bildet. Das Schmelzen erfolgt dabei bevorzugt in einer reduzierenden, wasserstoffhaltigen Atmosphäre. In einem dritten Schritt 103 wird ein Quarzglaskörper gebildet. Die Bildung des Quarzglaskörpers erfolgt hier durch Entnehmen zumindest eines Teils der Glasschmelze aus dem Tiegel und Abkühlen, zum Beispiel durch eine Düse am unteren Ende des Tiegels. In diesem Fall kann die Form des Quarzglaskörpers durch die Ausgestaltung der Düse mit bestimmt werden. So können beispielsweise massive Körper erhalten werden. Hohle Körper werden beispielsweise erhalten, wenn in der Düse zusätzlich ein Dorn vorgesehen ist. Dieses exemplarisch dargestellte Verfahren zur Herstellung von Quarzglaskörpern, und insbesondere Schritt 103, erfolgt bevorzugt kontinuierlich. In einem optionalen Schritt 104 kann aus einem massiven Quarzglaskörper ein Hohlkörper geformt werden.

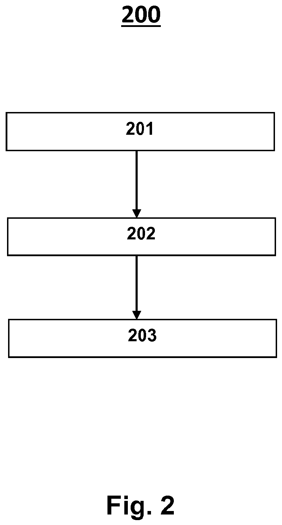

**Figur 2** zeigt ein Flussdiagramm enthaltend die Schritte 201, 202 und 203 eines Verfahrens 200 zur Herstellung eines Siliziumdioxidgranulats I. In einem ersten Schritt 201 wird ein Siliziumdioxidpulver bereitgestellt. Ein Siliziumdioxidpulver wird bevorzugt aus einem synthetischen Prozess erhalten, bei dem ein siliziumhaltiges Material, beispielsweise ein Siloxan, ein Siliziumalkoxid oder ein Siliziumhalogenid in einem pyrogenen Verfahren zu Siliziumdioxid umgesetzt wird. In einem zweiten Schritt 202 wird das Siliziumdioxidpulver mit einer Flüssigkeit, bevorzugt mit Wasser, gemischt unter Erhalt einer Aufschlämmung. In einem dritten Schritt 203 wird das in der Aufschlämmung enthaltene Siliziumdioxid in ein Siliziumdioxidgranulat überführt. Das Granulieren erfolgt mittels Sprühgranulieren. Dazu wird die Aufschlämmung durch eine Düse in einen Sprühturm eingesprüht und unter Bildung von Granulen getrocknet, wobei die Kontaktfläche zwischen der Düse und der Aufschlämmung ein Glas oder einen Kunststoff beinhaltet.

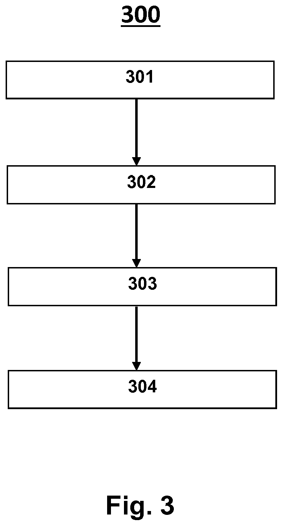

**Figur 3** zeigt ein Flussdiagramm enthaltend die Schritte 301, 302, 303 und 304 eines Verfahrens 300 zu Herstellung eines Siliziumdioxidgranulats II. Die Schritte 301, 302 und 303 verlaufen dabei entsprechend den Schritten 201, 202 und 203 gemäß Figur 2. In Schritt 304 wird das in Schritt 303 erhaltene Siliziumdioxidgranulat I zu einem Siliziumdioxidgranulat II verarbeitet. Dies erfolgt bevorzugt durch Erwärmen des Siliziumdioxidgranulats I in einer chlorhaltigen Atmosphäre.

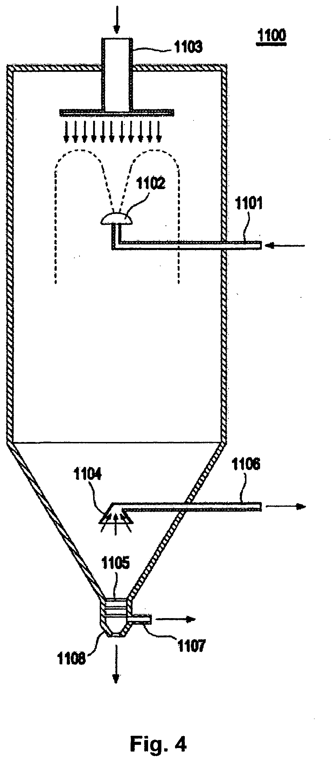

In **Figur 4** ist eine bevorzugte Ausführungsform eines Sprühturms 1100 zum Sprühgranulieren von Siliziumdioxid gezeigt. Der Sprühturm 1100 umfasst ein Zuführung 1101, durch die eine unter Druck stehende Aufschlämmung enthaltend Siliziumdioxidpulver und eine Flüssigkeit dem Sprühturm zugeführt wird. Am Ende der Leitung befindet sich eine Düse 1102, durch die die Aufschlämmung fein verteilt in den Sprühturm eingebracht wird. Bevorzugt ist die Düse schräg nach oben ausgerichtet, so dass die Aufschlämmung als feine Tröpfchen in Richtung der Düsenausrichtung in den Sprühturm gesprüht wird und dann im Bogen schwerkraftgetrieben nach unten fällt. Am oberen Ende des Sprühturms befindet sich ein Gaseinlass 1103. Durch das Einführen eines Gases durch den Gaseinlass 1103 wird ein der Austrittsrichtung der Aufschlämmung aus der Düse 1102 entgegengerichteter Gasstrom erzeugt. Der Sprühturm 1100 umfasst außerdem eine Sichtvorrichtung 1104 und eine Siebvorrichtung 1105. Durch die Sichtvorrichtung 1104 werden Teilchen abgesaugt, die eine definierte Teilchengröße unterschreiten, und durch die Abführung 1106 entfernt. Entsprechend der Teilchengröße der anzusaugenden Teilchen kann die Ansaugstärke der Sichtvorrichtung 1104 reguliert werden. Durch die Siebvorrichtung 1105 werden Teilchen oberhalb einer definierten Teilchengröße abgesiebt und durch die Abführung 1107 entfernt. Entsprechend der Teilchengröße der abzusiebenden Teilchen kann die Siebdurchlässigkeit der Siebvorrichtung 1105 gewählt werden. Die verbleibenden Teilchen, ein Siliziumdioxidgranulat der gewünschten Teilchengröße, wird durch den Auslass 1108 entnommen.

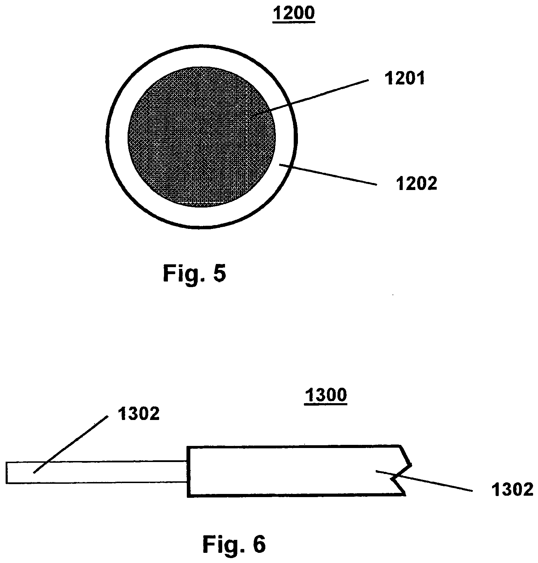

In **Figur 5** ist schematisch ein Querschnitt durch einen erfindungsgemäßen Lichtleiter 1200 gezeigt, der einen Kern 1201 und einen den Kern 1201 umgebende Hülle M1 1202 aufweist.

**Figur 6** zeigt schematisch eine Aufsicht auf einen Lichtleiter 1300, der eine kabelförmige Struktur aufweist. Um die Anordnung des Kerns 1301 und der Hülle M1 1302 um den Kern 1301 darzustellen, wurde ein Teil des Kerns 1301 ohne Hülle M1 1302 dargestellt. Typisch ist jedoch die Umkleidung des Kerns 1301 über seine komplette Länge mit der Hülle M1 1302.

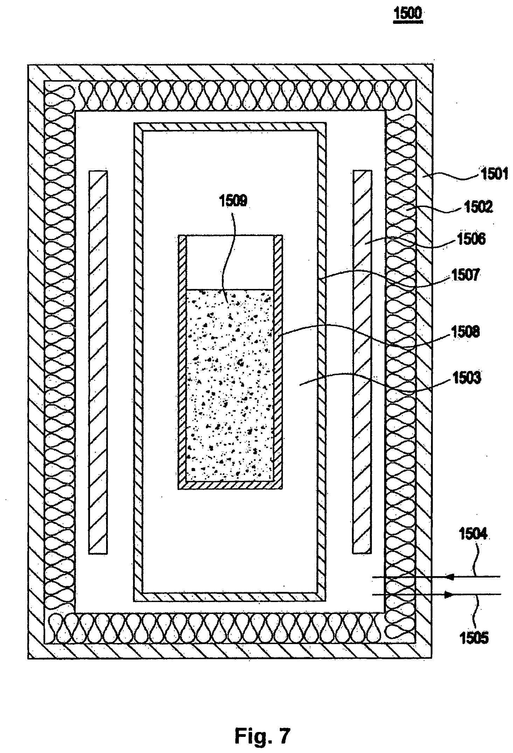

**Figur 7** zeigt eine bevorzugte Ausführungsform eines Ofens 1500, der für ein Vakuumsinterverfahren, ein Gasdrucksinterverfahren und insbesondere eine Kombination davon geeignet ist. Der Ofen weist von außen nach innen eine druckfeste Hülle 1501 und eine thermische Isolierschicht 1502 auf. Der davon umschlossene Raum, als Ofeninneres bezeichnet, kann über eine Gaszuführung 1504 mit einem Gas oder einem Gasgemisch beaufschlagt werden. Ferner ist das Ofeninnere mit einem Gasauslass 1505 versehen, über den Gas entnommen werden kann. Je nach Bilanz des Gastransports zwischen Gaszuführung 1504 und Gasentnahme bei 1505 kann ein Überdruck, ein Vakuum oder auch ein Gasstrom im Innern des Ofens 1500 erzeugt werden. Ferner sind im Innern des Ofens 1500 Heizelemente 1506 vorgesehen. Diese sind oftmals an der Isolierschicht 1502 angebracht (hier nicht gezeigt). Zum Schutz des Schmelzguts vor Kontamination ist das Innere des Ofens mit einem sogenannten "Liner" 1507 versehen, der die Ofenkammer 1503 von den Heizelementen 1506 trennt. In der Ofenkammer 1503 können Schmelzformen 1508 mit Schmelzgut 1509 eingebracht werden. Die Schmelzform 1508 kann auf einer Seite offen sein (hier gezeigt) oder das Schmelzgut 1509 vollständig umgeben (nicht gezeigt).

### Testmethoden

#### a. Fiktive Temperatur

Die fiktive Temperatur wird mittels Ramanspektroskopie anhand der Ramanstreuintensität bei etwa 606 cm$^{-1}$ ermittelt. Die Vorgehensweise und Auswertung ist in dem Beitrag von Pfleiderer et. al.; "The UV-induced 210 nm absorption band in fused Silica with different thermal history and stoichiometry"; Journal of Non-Crystalline Solids, Band 159 (1993), Seiten 145-153 beschrieben.

#### b. OH-Gehalt

Der OH Gehalt des Glases wird durch Infrarotspektroskopie bestimmt. Die in von D. M. Dodd & D. M. Fraser angegebene Methode "Optical Determinations of OH in Fused Silica" (J.A.P. 37, 3991 (1966)) wird angewendet. Statt des darin angegebenen Geräts, wird ein FTIR-Spektrometer (Fourier-Transform-Infrarotspektrometer, aktuell System 2000 der Fa. Perkin Eimer) eingesetzt. Die Auswertung der Spektren kann prinzipiell sowohl an der Absorptionsbande bei ca. 3670 cm$^{-1}$ als auch bei der Absorptionsbande bei ca. 7200 cm$^{-1}$ erfolgen. Die Auswahl der verwendeten Bande erfolgt nach der Regel, dass der Transmissionsverlust durch die OH-Absorption zwischen 10 und 90% liegt.

#### c. Oxygen Deficiency Centers (ODCs)

Zum quantitativen Nachweis wird die ODC(I)-Absorption bei 165 nm mittels einer Transmissionsmessung an zwischen 1-2 mm dicken Proben mittels eines Vakuum-UV-Spektrometers, Modell VUVAS 2000, von McPherson, Inc. (USA) bestimmt.

Dann gilt:

$$N = \alpha / \sigma$$

mit

N = Defektkonzentration [1/cm$^3$]
$\alpha$ = Optische Absorption [1/cm, Basis e] der ODC(I) Bande
$\sigma$ = Wirkungsquerschnitt [cm$^2$]

wobei als Wirkungsquerschnitt $\sigma = 7{,}5 \times 10^{-17} cm^2$ eingesetzt wird (aus L. Skuja, "Color Centers and Their Transformations in Glassy SiO2", Lectures of the summer school "Photosensitivity in optical Waveguides and glasses", July 13-18 1998, Vitznau, Switzerland)

d. Elementaranalyse

d-1) Massive Proben werden zertrümmert. Anschließend werden zur Reinigung ca. 20 g der Probe in ein HFbeständiges Gefäß eingebracht, vollständig mit HF bedeckt und bei 100°C für eine Stunde thermisch behandelt. Nach dem Abkühlen wird die Säure verworfen und die Probe mehrmals mit Reinstwasser gespült. Anschließend wird das Gefäß mit der Probe im Trockenschrank getrocknet.

Anschließend werden ca. 2 g der festen Probe (Bruchmaterial, gereinigt wie oben; Stäube etc. ohne Vorbehandlung direkt) in einen HF beständigen Aufschlussbehälter eingewogen und mit 15 ml HF (50 Gew.- %) versetzt. Der Aufschlussbehälter wird verschlossen und bei 100°C solange thermisch behandelt, bis die feste Probe vollständig aufgelöst ist. Danach wird der Aufschlussbehälter geöffnet und thermisch weiter bei 100°C behandelt, bis die Lösung komplett eingedampft ist. Währenddessen wird der Aufschlussbehälter 3x mit 15 ml Reinstwasser aufgefüllt. In den Aufschlussbehälter wird 1 ml $HNO_3$ gegeben, um abgeschiedene Verunreinigungen zu lösen und mit Reinstwasser auf 15 ml aufgefüllt. Damit steht die Messlösung bereit.

d-2) Messung ICP-MS / ICP-OES

Ob OES oder MS verwendet wird, hängt von der erwarteten Elementkonzentration ab. Typische Bestimmungsgrenzen für die MS sind 1 ppb, für die OES 10 ppb (jeweils bezogen auf die eingewogene Probenmenge). Die Bestimmung der Elementkonzentration mit den Messgeräten erfolgt nach Maßgabe der Gerätehersteller (ICP-MS: Agilent 7500ce; ICP-OES: Perkin Eimer 7300 DV) und unter Verwendung von zertifizierten Referenzflüssigkeiten zur Kalibrierung. Die von den Geräten bestimmte Elementkonzentration in der Lösung (15 ml) werden dann auf die ursprüngliche Einwaage der Probe (2 g) umgerechnet.

Anmerkung: Es ist darauf zu achten, dass die Säure, die Gefäße, das Wasser, die Geräte eine ausreichende Reinheit aufweisen müssen, um die nachzuweisenden Elementkonzentrationen bestimmen zu können. Überprüft wird das mit dem Aufschluss einer Blindprobe ohne Quarzglas.

Folgende Elemente werden auf diese Weise bestimmt: Li, Na, Mg, K, Ca, Fe, Ni, Cr, Hf, Zr, Ti, (Ta), V, Nb, W, Mo, Al.

d-3) Die Bestimmung von flüssig vorliegenden Proben erfolgt wie zuvor beschrieben, wobei die Probenvorbereitung gemäß Schritt d-1) entfällt. Es werden 15 ml der flüssigen Probe in das Aufschlussgefäß gegeben. Eine Umrechnung auf eine ursprüngliche Einwaage entfällt.

e. Dichtebestimmung einer Flüssigkeit

Zur Bestimmung der Dichte einer Flüssigkeit wird ein genau definiertes Volumen der Flüssigkeit in ein gegenüber der Flüssigkeit und ihren Bestandteilen inertes Messgefäß eingewogen, wobei das Leergewicht und das Gewicht des befüllten Gefäßes gemessen wird. Die Dichte ergibt sich aus der Differenz der beiden Gewichtsmessungen, dividiert durch das eingebrachte Volumen der Flüssigkeit.

f. Nachweis von Fluorid

15 g einer Quarzglasprobe werden zerkleinert und in Salpetersäure zum Reinigen bei einer Temperatur von 70°C behandelt. Anschließend wird die Probe mehrmals mit Reinstwasser gespült, anschließend getrocknet. Davon werden 2 g der Probe in einen Nickeltiegel eingewogen und mit 10 g $Na_2CO_3$ sowie 0,5 g ZnO überschichtet. Der Tiegel wird mit einem Ni-Deckel verschlossen und bei 1000°C für eine Stunde geglüht. Anschließend wird der Nickeltiegel mit Wasser gefüllt und aufgekocht, bis sich der Schmelzkuchen ganz gelöst hat. Die Lösung wird in einen 200 ml Messkolben überführt und mit Reinstwasser auf 200 ml aufgefüllt. Nach Absetzen ungelöster Bestandteile werden 30 ml abgenommen und in einen Messkolben mit 100 ml überführt, 0,75 ml Eisessig und 60 ml TISAB hinzugegeben und mit Reinstwasser aufgefüllt. Die Messlösung wird in ein Becherglas 150 ml überführt.

Die Bestimmung des Fluoridgehalts aus der Messlösung erfolgt mittels einer ionensensitiven (Fluorid) Elektrode, geeignet für den erwarteten Konzentrationsbereich, und Anzeigegerät nach Vorgabe des Herstellers, hier eine Fluorid-Ionenselektive Elektrode und Bezugselektrode F-500 mit R503/D an einem pMX 3000/pH/ION der Firma Wissenschaftlich-Technische Werkstätten GmbH. Mit der Fluoridkonzentration in der Lösung, dem Verdünnungsfaktor und der Einwaage wird die Fluoridkonzentration im Quarzglas berechnet.

g. Nachweis von Chlor (≥ 50 ppm)

15 g einer Quarzglasprobe werden zerkleinert und in Salpetersäure zum Reinigen bei ca. 70°C behandelt. Anschließend wird die Probe mehrmals mit Reinstwasser gespült, anschließend getrocknet. Davon werden 2 g der Probe in einen PTFE-Einsatz eines Druckbehälters gefüllt, mit 15 ml NaOH (c=10 mol/l) versetzt, mit einem PTFE-Deckel verschlossen und in den Druckbehälter gesetzt. Dieser wird verschlossen und bei ca. 155°C für 24 Stunden thermisch behandelt. Nach dem Abkühlen wird der PTFE-Einsatz entnommen und die Lösung vollständig in einen Messkolben 100 ml überführt. Dort werden 10 ml $HNO_3$ (65 Gew.-%) und 15 ml Acetatpuffer hinzugeben, abkühlen gelassen und mit Reinstwasser auf 100 ml aufgefüllt. Die Messlösung wird in ein Becherglas 150 ml überführt. Die Messlösung hat einen pH-Wert im Bereich zwischen 5 und 7.

Die Bestimmung des Chloridgehalts aus der Messlösung erfolgt mittels Ionensensitiver (Chlorid) Elektrode, geeignet für den erwarteten Konzentrationsbereich, und Anzeigegerät nach Vorgabe des Herstellers hier einer Elektrode Typ Cl-500 und Bezugselektrode Typ R-503/D an einem pMX 3000/pH/ION der Firma Wissenschaftlich-Technische Werkstätten GmbH.

h. Chlorgehalt (< 50 ppm)

Chlorgehalte < 50 ppm bis zu 0,1 ppm in Quarzglas werden mittels Neutronenaktivierungsanalyse (NAA) bestimmt. Dazu werden aus dem zu untersuchenden Quarzglaskörper 3 Bohrlinge mit je 3 mm Durchmesser und je 1 cm Länge gezogen. Diese werden zur Analyse an ein Forschungsinstitut abgegeben, in diesem Fall an das Institut für Kernchemie der Johannes-Gutenberg-Universität in Mainz. Um Kontamination der Proben mit Chlor auszuschließen wird mit dem Forschungsinstitut vereinbart, eine gründliche Reinigung der Proben in einem HF-Bad vor Ort und erst unmittelbar vor der Messung vorzunehmen. Jeder Bohrling wird mehrmals vermessen. Die Ergebnisse und die Bohrlinge werden anschließend von dem Forschungsinstitut zurückübermittelt.

i. Optische Eigenschaften

Die Transmission von Quarzglasproben wird mit kommerziellen Gitter- oder FTIR Spektrometern von Perkin Eimer bestimmt (Lambda 900 [190-3000 nm] oder System 2000 [1000-5000 nm]). Die Wahl richtet sich nach dem benötigten Messbereich.

Zur Bestimmung der Absoluttransmission werden die Probenkörper planparallel poliert (Oberflächenrauhigkeit RMS < 0,5 nm) und die Oberfläche nach der Politur von allen Rückständen durch eine Ultraschallbehandlung befreit. Die Probendicke beträgt 1 cm. Im Falle von erwartetem, starkem Transmissionsverlust durch Verunreinigung, Dotierung etc., kann auch eine dickere oder dünnere Probe ausgewählt werden, um im Messbereich des Geräts zu bleiben. Es wird eine Probendicke (Messlänge) gewählt, bei der aufgrund des Strahlendurchgangs durch die Probe nur geringfügig Artefakte auftreten und zugleich ein hinreichend detektierbarer Effekt gemessen wird.

Für die Messung der Opazität wird die Probe vor einer Ulbrichkugel im Strahlengang platziert. Die Opazität errechnet sich anhand des so gemessenen Transmissionswertes T gemäß der Formel: $O = 1/T = I_0/I$.

j. Brechzahl und Brechzahlverlauf an einem Rohr oder Stab

Der Brechzahlverlauf von Rohren / Stäben kann mittels eines York Technology Ltd. Preform Profiler P102 oder P104 charakterisiert werden. Dazu wird der Stab liegend in die Messkammer eingelegt und diese dicht verschlossen. Danach wird die Messkammer mit einem Immersionsöl aufgefüllt, das eine Brechzahl bei der Prüfwellenlänge 633 nm hat, die der äußersten Glasschicht bei 633 nm sehr ähnlich ist. Der Laserstrahl geht dann durch die Messkammer. Hinter der Messkammer (in Strahlrichtung) ist ein Detektor montiert, der den Ablenkwinkel (Strahleintritt in gegenüber Strahlaustritt aus der Messkammer) bestimmt. Unter Annahme der Radialsymmetrie desr Brechzahlverlaufs des Stabes lässt sich der diametrale Brechzahlverlauf mittels einer inversen Abel-Transformation rekonstruieren. Diese Berechnungen werden von der Software des Geräteherstellers York durchgeführt.

Die Brechzahl einer Probe wird analog der vorstehenden Beschreibung mit dem York Technology Ltd. Preform Profiler P104 bestimmt. Bei isotropen Proben ergibt sich auch bei Messen des Brechzahlverlaufs nur ein Wert, die Brechzahl.

k. Kohlenstoffgehalt

Die quantitative Bestimmung des Oberflächenkohlenstoffgehaltes Siliziumdioxidgranulat und Siliziumdioxidpulver wird an einem Kohlenstoffanalysator RC612 der Fa. Leco Corporation, USA, durch die vollständige Oxidation aller Oberflächenkohlenstoffkontaminationen (außer SiC) mit Sauerstoff zu Kohlendioxid durchgeführt. Hierzu werden 4,0 g einer Probe eingewogen und in einem Quarzglasschiffchen in den Kohlenstoffanalysator eingebracht. Die Probe wird mit reinem Sauerstoff umspült und für 180 Sekunden auf 900 °C erhitzt. Das dabei gebildete $CO_2$ wird durch den Infrarotdetektor des Kohlenstoffanalysators erfasst. Unter diesen Messbedingungen liegt die Nachweisgrenze bei $\leq$ 1 ppm (Gewichts-ppm) Kohlenstoff.

Ein für diese Analyse an dem oben genannten Kohlenstoffanalysator geeignetes Quarzglasschiffchen ist erhältlich als Verbrauchsmaterial für LECO-Analysator mit der LECO-Nummer 781-335 im Laborbedarfshandel, im vorliegenden Fall von Deslis Laborhandel, Flurstraße 21, D-40235 Düsseldorf (Deutschland), Deslis-Nr. LQ-130XL. Ein solches Schiffchen hat die Abmessungen von Breite/Länge/Höhe von ca. 25mm/60mm/15mm. Das Quarzglasschiffchen wird zu halber Höhe mit Probenmaterial befüllt. Für Siliziumdioxidpulver kann so eine Einwaage von 1,0 g Probenmaterial erreicht werden. Die untere Nachweisgrenze liegt dann bei <1 Gewichts-ppm Kohlenstoff. In das gleiche Quarzglasschiffchen wird bei gleicher Füllhöhe eine Einwaage von 4 g eines Siliziumdioxidgranulats erreicht (mittlere Partikelgröße im Bereich von 100 bis 500 $\mu$m). Die untere Nachweisgrenze liegt dann bei etwa 0,1 Gewichts-ppm Kohlenstoff. Die untere Nachweisgrenze ist erreicht, wenn das Messflächenintegral der Probe nicht größer ist als das dreifache Messflächenintegral einer Leerprobe (Leerprobe = Verfahren wie oben, aber mit leerem Quarzglasschiffchen).

### 1. Curl-Parameter

Der Curl-Parameter (auch genannt: "Fibre Curl") wird bestimmt gemäß der DIN EN 60793-1-34:2007-01 (deutsche Fassung der Norm IEC 60793-1-34:2006). Gemessen wird gemäß der in Annex A in den Abschnitten A.2.1, A.3.2 und A.4.1 beschriebenen Methode ("extrema technique").

### m. Dämpfung

Die Dämpfung wird bestimmt gemäß der DIN EN 60793-1-40:2001 (deutsche Fassung der IEC 60793-1-40:2001). Gemessen wird gemäß der in Annex beschriebenen Methode ("cut-back method") bei einer Wellenlänge $\lambda$=1550 nm.

### n. Viskosität der Aufschlämmung

Die Aufschlämmung wird mit demineralisiertem Wasser (Direct-Q 3UV, Millipore, Wasserqualität: 18,2 M$\Omega$cm) auf eine Konzentration von 30 Gewichts % Feststoffgehalt eingestellt. Anschließend wird die Viskosität an einem MCR102 der Fa. Anton-Paar gemessen. Dazu wird die Viskosität bei 5 Umdrehungen/Minute (rpm) gemessen. Es wird bei einer Temperatur von 23 °C und einem Luftdruck von 1013 hPa gemessen.

### o. Thixotropie

Die Aufschlämmung wird mit demineralisiertem Wasser (Direct-Q 3UV, Millipore, Wasserqualität: 18,2 M$\Omega$cm) auf eine Konzentration von 30 Gewichts % Feststoffgehalt eingestellt. Anschließend wird die Thixotropie wird mit einem MCR102 der Fa. Anton-Paar mit einer Kegel-Platte-Anordnung bestimmt. Dazu wird die Viskosität bei 5 und bei 50 Umdrehungen/Minute (rpm) gemessen. Der Quotient aus dem ersten und dem zweiten Wert ergibt den Thixotropieindex. Die Messung wird bei einer Temperatur von 23 °C gemessen.

### p. Zeta Potential der Aufschlämmung

Für Zetapotentialmessungen wird eine Zetapotentialmesszelle (Flow Cell, Beckman Coulter) eingesetzt. Die Probe wird in demineralisiertem Wasser (Direct-Q 3UV, Millipore, Wasserqualität: 18,2 M$\Omega$cm) gelöst um eine 20 mL Lösung mit Konzentration von 1 g/L zu erhalten. Der pH wird auf 7 mittels Zugabe von $HNO_3$-Lösungen mit den Konzentrationen von 0,1 mol/L und 1 mol/L und einer NaOH-Lösung mit der Konzentration von 0,1 mol/L gebracht. Es wird bei einer Temperatur von 23 °C gemessen.

### q. Isoelektrischer Punkt der Aufschlämmung

Für den isoelektrischen Punkt wird eine Zetapotentialmesszelle (Flow Cell, Beckman Coulter) und ein Autotitrator (DelsaNano AT, Beckman Coulter) eingesetzt. Die Probe wird in demineralisiertem Wasser (Direct-Q 3UV, Millipore, Wasserqualität: 18,2 M$\Omega$cm) gelöst um eine 20 mL Lösung mit Konzentration von 1 g/L zu erhalten. Der pH wird mittels Zugabe von $HNO_3$-Lösungen mit den Konzentrationen von 0,1 mol/L und 1 mol/L und einer NaOH-Lösung mit der Konzentration von 0,1 mol/L variiert. Der isoelektrische Punkt ergibt sich als der pH Wert bei dem das Zeta-Potenzial gleich 0 ist. Es wird bei einer Temperatur von 23 °C gemessen.

r. pH Wert der Aufschlämmung

Der pH Wert der Aufschlämmung wird mittels eines WTW 3210 der Fa. Wissenschaftlich-Technische-Werkstätten GmbH gemessen. Als Elektrode wird die pH 3210 Set 3 der Fa. WTW eingesetzt. Es wird bei einer Temperatur von 23 °C gemessen.

s. Feststoffgehalt

Eine Einwaage $m_1$ einer Probe wird für 4 Stunden auf 500 °C erhitzt und nach dem Abkühlen erneut gewogen ($m_2$). Der Feststoffgehalt w ergibt sich aus $m_2/m_1*100$ [Gew.- %].

t. Schüttdichte

Die Schüttdichte wird gemäß der Norm DIN ISO 697:1984-01 mit einem SMG 697 der Fa. Powtec bestimmt. Das Schüttgut (Siliziumdioxidpulver bzw. -granulat) bildet keine Klumpen.

u. Stampfdichte (Granulate)

Die Stampfdichte wird gemäß der Norm DIN ISO 787:1995-10 gemessen.

v. Bestimmung der Porengrößenverteilung

Die Bestimmung der Porengrößenverteilung erfolgt gemäß DIN 66133 (mit einer Oberflächenspannung 480 mN/m und einem Kontaktwinkel von 140°). Für die Messung von Porengrößen kleiner als 3,7 nm wird das Pascal 400 von der Fa. Porotec angewendet. Für die Messung von Porengrößen von 3,7 nm bis 100 $\mu$m wird das Pascal 140 von der Fa. Porotec angewendet. Die Probe wird vor der Messung einer Druckbehandlung unterzogen. Genutzt wird hierzu eine Manual Hydraulic Press (Bestell-Nr. 15011 der Fa. Specac Ltd., River House, 97 Cray Avenue, Orpington, Kent BR5 4HE, U.K.). Dabei werden in eine "Pellet Die" mit 13 mm Innendurchmesser der Fa. Specac Ltd. 250 mg Probenmaterial eingewogen und laut Anzeige mit 1 t belastet. Diese Last wird 5 s gehalten und gegebenenfalls nachgeregelt. Anschließend wird die Probe entspannt und für 4 h bei 105 ± 2°C in einem Umlufttrockenschrank getrocknet.

Die Einwaage der Probe in das Penetrometer vom Typ 10 erfolgt auf 0,001 g genau und wird für eine gute Reproduzierbarkeit der Messung so gewählt, dass das "stem volume used", also das prozentual verbrauchte Hg-Volumen zum Füllen des Penetrometers im Bereich zwischen 20% bis 40% des Gesamt-Hg-Volumens beträgt. Anschließend wird das Penetrometer langsam auf 50 $\mu$m Hg evakuiert und für 5 min bei diesem Druck belassen. Folgende Parameter werden direkt von der Software der Messgeräte angegeben: Gesamtporenvolumen, Gesamtporenoberfläche (Annahme Poren zylindrisch), durchschnittlicher Porenradius, modaler Porenradius (häufigster Porenradius), Peak n. 2 Porenradius ($\mu$m).

w. Primärpartikelgröße

Die Primärpartikelgröße wird mittels eines Rasterelektronenmikroskops (REM) Modell Zeiss Ultra 55 gemessen. Die Probe wird in demineralisiertem Wasser (Direct-Q 3UV, Millipore, Wasserqualität: 18,2 MΩcm) suspendiert, um eine extrem verdünnte Suspension zu erhalten. Die Suspension wird mit der Ultraschallsonde (UW 2070, Bandelin electronic, 70 W, 20 kHz) für 1 min behandelt und dann auf ein Kohlenstoff-Klebepad aufgetragen.

x. Mittlere Partikelgröße in Suspension

Die mittlere Partikelgröße in Suspension wird mittels eines Mastersizers 2000, erhältlich von Malvern Instruments Ltd., UK, gemäß deren Bedienungsanleitung unter Anwendung der Laserbeugungs-Methode gemessen. Die Probe wird in demineralisiertem Wasser (Direct-Q 3UV, Millipore, Wasserqualität: 18,2 MΩcm) suspendiert, um 20 mL Suspension mit einer Konzentration von 1 g/L zu erhalten. Die Suspension wird mit der Ultraschallsonde (UW 2070, Bandelin electronic, 70 W, 20 kHz) für 1 min behandelt.

y. Partikelgröße und Korngröße des Feststoffs

Die Partikelgröße und Korngröße des Feststoffs werden mittels eines Camsizers XT, erhältlich von Retsch Technology GmbH, Deutschland gemäß deren Bedienungsanleitung gemessen. Die Software gibt die $D_{10}$, $D_{50}$ und $D_{90}$-Werte für eine Probe aus.

z. BET Messung

Für die Messung der spezifischen Oberfläche wird die statisch volumetrische BET-Methode gemäß DIN ISO 9277:2010 angewendet. Für die BET Messung wird ein "NOVA 3000" bzw. ein "Quadrasorb" (von der Firma Quantachrome erhältlich), welche gemäß der SMART Methode ("Sorption Method with Adaptive dosing Rate) funktioniert, angewendet. Die Mikroporenanalyse wird mittels t-plot-Verfahren ($p/p_0$ = 0,1-0,3) und die Mesoporenanalyse mittels MBET-Verfahren ($p/p_0$ = 0,0-0,3) durchgeführt. Als Referenzmaterial, werden die Standards Alumina SARM-13 und SARM-214 verwendet, erhältlich bei Quantachrome. Das Tara-Gewicht der eingesetzten Messzellen (sauber und trocken) wird gewogen. Der Messzellentyp wird so gewählt, dass das zugeführte Probematerial und der Füllstab die Messzelle möglichst füllen und der tote Raum auf ein Minimum reduziert wird. Das Probematerial wird in die Messzelle gebracht. Die Menge des Probematerials wird so ausgewählt, dass der zu erwartende Messwert 10-20 $m^2/g$ entspricht. Die Messzellen werden in den Ausheizstationen des BET-Messgerätes fixiert (ohne Füllstab) und auf < 200 mbar evakuiert. Die Geschwindigkeit des Evakuierens wird so eingestellt, dass kein Material aus der Messzelle entweicht. In diesem Zustand wird bei 200°C für 1h ausgeheizt. Nach dem Abkühlen wird die mit Probe gefüllte Messzelle gewogen (Brutto). Anschließend wird das Tara-Gewicht vom Brutto-Gewicht abgezogen = Nettogewicht = Gewicht der Probe. Nun wird der Füllstab in die Messzelle eingeführt und diese wiederum in der Messstation des BET-Messgerätes fixiert. Vor Messstart werden die Probenbezeichnung und das Probengewicht in die Software eingepflegt. Die Messung wird gestartet. Der Sättigungsdruck des Stickstoffgases ($N_2$ 4.0) wird gemessen. Die Messzelle wird evakuiert und wird mit Hilfe eines Stickstoffbads auf 77 K heruntergekühlt. Der tote Raum wird mittels Heliumgas (He 4.6) gemessen. Es wird erneut evakuiert. Eine Mehrpunktanalyse mit mindestens 5 Messpunkten wird ausgeführt. Als Adsorptiv, wird $N_2$ 4.0 angewendet. Die spezifische Oberfläche wird in $m^2/g$ angegeben.

za. Viskosität von Glaskörpern

Die Viskosität des Glases wird mit Hilfe des Balkenbiegeviskosimeter Typ 401 - Fa. TA Instruments mit der Herstellersoftware WinTA (aktuell Version 9.0) unter Windows 10 gemäß der Norm DIN ISO 7884-4:1998-02 gemessen. Die Stützweite zwischen den Auflagern beträgt 45 mm. Probestäbchen mit rechteckigem Querschnitt werden aus Bereichen homogenen Materials geschnitten (Probenober- und -unterseite mit Feinschliff mindestens 1000-er Korn). Die Probenoberflächen nach Bearbeitung haben Korngröße = 9$\mu$m & RA = 0,15 $\mu$m. Die Probestäbchen haben folgende Maße: Länge = 50 mm, Breite = 5 mm & Höhe = 3 mm (Zuordnung Länge, Breit, Höhe wie in der Norm). Drei Proben werden gemessen und der Mittelwert errechnet. Die Probentemperatur wird durch ein Thermoelement dicht an der Probenoberfläche gemessen. Folgende Parameter werden angewendet: Heizrate = 25 K auf maximal 1500 °C, Belastungsgewicht = 100 g, maximale Durchbiegung = 3000 $\mu$m (in Abweichung von der Norm).

zc. Restfeuchte (Wassergehalt)

Die Bestimmung der Restfeuchte einer Probe Siliziumdioxidgranulat erfolgt mit Hilfe eines Moisture Analyzers HX204 der Firma Mettler Toledo. Das Gerät arbeitet nach dem Prinzip der Thermogravimetrie. Der HX204 ist mit einem Halogenstrahler als Heizelement ausgerüstet. Die Trocknungstemperatur beträgt 220°C. Das Startgewicht der Probe liegt bei 10 g ± 10 %. Es wird die Messmethode "Standard" ausgewählt. Die Trocknung wird solange fortgesetzt bis die Gewichtsänderung nicht mehr als 1 mg /140 s erreicht. Die Restfeuchte ergibt sich aus der Differenz von Startgewicht der Probe zu Endgewicht der Probe, geteilt durch das Startgewicht der Probe.
Die Bestimmung der Restfeuchte von Siliziumdioxidpulver wird gemäß DIN EN ISO 787-2:1995 (2h, 105°C) durchgeführt.

**Beispiele**

Die Erfindung wird im Folgenden durch Beispiele weiter beispielhaft illustriert. Die Erfindung ist nicht auf die Beispiele beschränkt.

**A. 1. Herstellen von Siliziumdioxidpulver (OMCTS-Route)**

Das aus der Verdüsung eines Siloxans mit Luft (A) gebildete Aerosol wird mit Druck in eine Flamme eingebracht, die durch Zündung eines Gemisches von mit Sauerstoff angereicherter Luft (B) und Wasserstoff gebildet wird. Weiterhin wird ein die Flamme umgebender Luftstrom (C) eingebracht und das Prozessgemisch nachfolgend mit Prozessgas abgekühlt. Das Produkt wird an einem Filter abgeschieden. Die Verfahrensparameter sind in Tabelle 1 und die Kenndaten der resultierenden Produkte in
Tabelle 2 angegeben. Experimentaldaten zu diesem Beispiel sind mit **A1-x** gekennzeichnet.

**2. Modifizierung 1: Erhöhter Kohlenstoffgehalt**

Es wurde wie unter A.1. beschrieben verfahren, das Verbrennen des Siloxans wurde aber so geführt, dass dabei auch eine Menge an Kohlenstoff gebildet wird. Experimentaldaten zu diesem Beispiel sind mit **A2-x** gekennzeichnet.

**Tabelle 1**

| Beispiel | | A1-1 | A2-1 | A2-2 |
|---|---|---|---|---|
| Aerosolbildung | | | | |
| Siloxan Zufuhr | kg/h (kmol/h) | OMCTS* 10 (0,0337) | OMCTS* 10 (0,0337) | OMCTS* 10 (0,0337) |
| Zufuhr Luft (A) | $Nm^3/h$ | 14 | 10 | 12 |
| Druck | barÜ | 1,2 | 1,2 | 1,2 |
| Zufuhr Brenner | | | | |
| Sauerstoffangereicherte Luft (B) | $Nm^3/h$ | 69 | 65 | 68 |
| $O_2$-Gehalt | Vol.% | 32 | 30 | 32 |
| Summe $O_2$ Zufuhr | $Nm^3/h$ | 25,3 | 21,6 | 24,3 |
| | kmol/h | 1,130 | 0,964 | 1,083 |
| Zufuhr Wasserstoff | $Nm^3/h$ | 27 | 27 | 12 |
| | kmol/h | 1,205 | 1,205 | 0,536 |
| Zufuhr Kohlenstoffverbindung Stoff | | -- | -- | Methan |
| Menge | $Nm^3/h$ | | | 5,5 |
| Luftstrom (C) | $Nm^3/h$ | 60 | 60 | 60 |
| Stöchiometrische Verhältnisse | | | | |
| V | | 2,099 | 1,789 | 2,011 |
| X | | 0,938 | 0,80 | 2,023 |
| Y | | 0,991 | 0,845 | 0,835 |
| V = molares Verhältnis eingesetzter $O_2$/Bedarf an $O_2$ zur vollständigen Oxidation des Siloxans; X = als molares Verhältnis $O_2/H_2$; Y = (mol. Verhältnis eingesetztes $O_2$/ Bedarf an $O_2$ für stöchiometrische Umsetzung OMCTS+ Brenngase); <br> * OMCTS = Octamethylcyclotetrasiloxan. | | | | |

**Tabelle 2**

| Beispiel | | A1-1 | A2-1 | A2-2 |
|---|---|---|---|---|
| BET | $m^2/g$ | 30 | 33 | 34 |
| Schüttdichte | g/ml | 0,114± 0,011 | 0,105 ± 0,011 | 0,103± 0,011 |
| Stampfdichte | g/ml | 0,192 ± 0,015 | 0,178 ± 0,015 | 0,175 ± 0,015 |
| Primärpartikelgröße | nm | 94 | 82 | 78 |
| Partikelgrößenverteilung $D_{10}$ | $\mu m$ | 3,978 ± 0,380 | 5,137 ± 0,520 | 4,973 ± 0,455 |
| Partikelgrößenverteilung $D_{50}$ | $\mu m$ | 9,383 ± 0,686 | 9,561 ± 0,690 | 9,423 ± 0,662 |
| Partikelgrößenverteilung $D_{90}$ | $\mu m$ | 25,622 ± 1,387 | 17,362 ± 0,921 | 18,722 ± 1,218 |
| C-Gehalt | ppm | 34 ± 4 | 73 ± 6 | 80 ± 6 |

(fortgesetzt)

| Beispiel | | A1-1 | A2-1 | A2-2 |
|---|---|---|---|---|
| Cl-Gehalt | ppm | < 60 | < 60 | < 60 |
| Al-Gehalt | ppb | 20 | 20 | 20 |
| Gesamtgehalt Metalle außer Al | ppb | < 700 | < 700 | < 700 |
| Restfeuchte | Gew.-% | 0,02-1,0 | 0,02-1,0 | 0,02-1,0 |
| pH-Wert in Wasser 4% (IEP) | - | 4,8 | 4,6 | 4,5 |
| Viskosität bei 5 rpm, wässrige Suspension 30 Gew-%, 23 °C | mPas | 753 | 1262 | 1380 |
| Erdalkalimetallgehalt | ppb | 538 | 487 | 472 |

## B. 1. Herstellen von Siliziumdioxidpulver (Siliziumquelle: SiCl$_4$)

Eine Menge Siliziumtetrachlorid (SiCl$_4$) wird bei einer Temperatur T verdampft und mit einem Druck P in eine Flamme eines Brenners eingebracht, die durch Zündung eines Gemisches von mit Sauerstoff angereicherter Luft und Wasserstoff gebildet wird. Der mittlere normalisierte Gasfluss an der Brennermündung wird festgehalten. Das Prozessgemisch wird nachfolgend mit Prozessgas abgekühlt. Das Produkt wurde an einem Filter abgeschieden. Die Verfahrensparameter sind in

Tabelle 3 und die Kenndaten der resultierenden Produkte in der Tabelle 4 angegeben. Sie sind mit **B1-x** gekennzeichnet.

## 2. Modifizierung: Erhöhter Kohlenstoffgehalt

Es wurde wie unter B.1. beschrieben verfahren, das Verbrennen des Siliziumtetrachlorids wurde aber so geführt, dass dabei auch eine Menge an Kohlenstoff gebildet wird. Experimentaldaten zu diesem Beispiel sind mit **B2-1** gekennzeichnet.

### Tabelle 3

| Beispiel | | B1-1 | B2-1 |
|---|---|---|---|
| Aerosolbildung | | | |
| Zufuhr Siliziumtetrachlorid | kg/h (kmol/h) | 50 (0,294) | 50 (0,294) |
| Temperatur T<br>Druck p | °C<br>barÜ | 90<br>1,2 | 90<br>1,2 |
| Zufuhr Brenner | | | |
| Sauerstoffangereicherte Luft,<br>darin O$_2$-Gehalt<br>Zufuhr Kohlenstoffverbindung<br><br>Stoff<br>Menge | Nm$^3$/h<br>Vol.%<br><br><br><br>Nm$^3$/h | 145<br>45<br>--<br><br><br> | 115<br>30<br><br><br>Methan<br>2,0 |
| Zufuhr Wasserstoff | Nm$^3$/h<br>kmol/h | 115<br>5,13 | 60<br>2,678 |
| Stöchiometrische Verhältnisse | | | |
| X | | 0,567 | 0,575 |

(fortgesetzt)

| Stöchiometrische Verhältnisse | | |
|---|---|---|
| Y | 0,946 | 0,85 |

X = als molares Verhältnis $O_2/H_2$; Y = mol. Verhältnis eingesetztes $O_2$/ $O_2$-Bedarf für stöchiometrische Reaktion mit $SiCl_4$+ $H_2$ + $CH_4$)

**Tabelle 4**

| Beispiel | | B1-1 | B2-1 |
|---|---|---|---|
| BET | $m^2/g$ | 49 | 47 |
| Schüttdichte | g/ml | 0,07 ± 0,01 | 0,06 ± 0,01 |
| Stampfdichte | g/ml | 0,11 ± 0,01 | 0,10 ± 0,01 |
| Primärpartikelgröße | nm | 48 | 43 |
| Partikelgrößenverteilung $D_{10}$ | $\mu$m | 5,0 ± 0,5 | 4,5 ± 0,5 |
| Partikelgrößenverteilung $D_{50}$ | $\mu$m | 9,3 ± 0,6 | 8,7 ± 0,6 |
| Partikelgrößenverteilung $D_{90}$ | $\mu$m | 16,4 ± 0,5 | 15,8 ± 0,7 |
| C-Gehalt | ppm | <4 | 76 |
| Cl-Gehalt | ppm | 280 | 330 |
| Al-Gehalt | ppb | 20 | 20 |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | < 1300 | < 1300 |
| Restfeuchte | Gew.-% | 0,02-1,0 | 0,02-1,0 |
| *pH-Wert in Wasser 4% (IEP)* | pH | 3,8 | 3,8 |
| Viskosität bei 5 rpm, wässrige Suspension 30 Gew-%, 23 °C | mPas | 5653 | 6012 |
| Erdalkalimetallgehalt | ppb | 550 | 342 |

**C. Wasserdampfbehandlung**

Ein Partikelstrom von Siliziumdioxidpulver wird über den Kopf einer stehenden Säule eingebracht. Über den Fuß der Säule werden Wasserdampf mit einer Temperatur (A) und Luft zugeführt. Die Säule wird durch eine innenliegende Heizung auf eine Temperatur (B) am Säulenkopf und eine zweite Temperatur (C) am Säulenfuß gehalten. Nach Verlassen der Säule (Verweilzeit (D)) weist das Siliziumdioxidpulver insbesondere die in Tabelle 6 gezeigten Eigenschaften auf. Die Verfahrensparameter sind in Tabelle 5 angegeben.

**Tabelle 5**

| Beispiel | | C-1 | C-2 |
|---|---|---|---|
| Edukt: Produkt aus | | B1-1 | B2-1 |
| Zufuhr Edukt | kg/h | 100 | 100 |
| Zufuhr Wasserdampf | kg/h | 5 | 5 |
| Temperatur Wasserdampf (A) | °C | 120 | 120 |
| Zufuhr Luft | $Nm^3/h$ | 4,5 | 4,5 |
| Säule | | | |
|   Höhe | m | 2 | 2 |
|   Innendurchmesser | mm | 600 | 600 |

(fortgesetzt)

| Beispiel | | C-1 | C-2 |
|---|---|---|---|
| Edukt: Produkt aus | | **B1-1** | **B2-1** |
| T (B) | °C | 260 | 260 |
| T (C) | °C | 425 | 425 |
| Verweilzeit (D) Siliziumdioxidpulver | s | 10 | 10 |

**Tabelle 6**

| Beispiel | | C-1 | C-2 |
|---|---|---|---|
| pH-Wert in Wasser 4% (IEP) | - | 4,6 | 4,6 |
| Cl-Gehalt | ppm | < 60 | < 60 |
| C-Gehalt | ppm | <4 | 36 |
| Viskosität bei 5 rpm, wässrige Suspension 30 Gew-%, 23 °C | mPas | 1523 | 1478 |

Die in den Beispielen C-1 und C-2 erhaltenen Siliziumdioxidpulver weisen jeweils einen niedrigen Chlorgehalt, sowie in Suspension einen moderaten pH-Wert auf. Der Kohlenstoffgehalt von Beispiel C-2 ist höher als bei C-1.

**D. Behandlung mit Neutralisationsmittel**

Ein Partikelstrom von Siliziumdioxidpulver wird über den Kopf einer stehenden Säule eingebracht. Über den Fuß der Säule wird ein Neutralisationsmittel und Luft zugeführt. Die Säule wird durch eine innenliegende Heizung auf eine Temperatur (B) am Säulenkopf und eine zweite Temperatur (C) am Säulenfuß gehalten. Nach Verlassen der Säule (Verweilzeit (D)) weist das Siliziumdioxidpulver insbesondere die in Tabelle 8 gezeigten Eigenschaften auf. Die Verfahrensparameter sind in Tabelle 7 angegeben.

**Tabelle 7**

| Beispiel | | D-1 |
|---|---|---|
| Edukt: Produkt aus | | **B1-1** |
| Zufuhr Edukt | kg/h | 100 |
| Neutralisationsmittel | | Ammoniak |
| Zufuhr Neutralisationsmittel | kg/h | 1,5 |
| Kenndaten Neutralisationsmittel | | Erhältlich bei Air Liquide: Ammoniak N38, Reinheit $\geq$ 99,98 Vol.% |
| Zufuhr Luft | Nm$^3$/h | 4,5 |
| Säule<br>Höhe<br>Innendurchmesser | <br>m<br>mm | <br>2<br>600 |
| T (B) | °C | 200 |
| T (C) | °C | 250 |
| Verweilzeit (D) Siliziumdioxidpulver | s | 10 |

**Tabelle 8**

| Beispiel | | D-1 |
|---|---|---|
| pH-Wert in Wasser 4% (IEP) | - | 4,8 |
| Cl-Gehalt | ppm | 210 |
| C-Gehalt | ppm | < 4 |
| Viskosität bei 5 rpm, wässrige Suspension 30 Gew-%, 23 °C | mPas | 821 |

**E. 1. Herstellen von Siliziumdioxidgranulat aus Siliziumdioxidpulver**

Ein Siliziumdioxidpulver wird in vollentsalztem Wasser dispergiert. Dabei wird ein Intensivmischer Typ R der Maschinenfabrik Gustav Eirich eingesetzt. Die entstehende Suspension wird durch eine Membranpumpe gefördert und dabei mit Druck beaufschlagt und durch eine Düse in Tröpfchen überführt. Diese werden in einen Sprühturm getrocknet und sammeln sich an dessen Boden. Die Verfahrensparameter sind in Tabelle 9 angegeben, die Eigenschaften der erhaltenen Granulate in Tabelle 10. Experimentaldaten zu diesem Beispiel sind mit **E1-x** gekennzeichnet.

**2. Modifizierung: Erhöhter Kohlenstoffgehalt**

Es wird analog der Beschreibung E.1. verfahren. Zusätzlich wird als AdditivKohlenstoffpulver in die Suspension eindispergiert. Experimentaldaten zu diesem Beispiel sind mit **E2-1** gekennzeichnet. In E2-21 bis E2-23 wird als Additiv Aluminiumoxid zugegeben.

EP 3 390 308 B1

**Tabelle 9**

| Beispiel | | E1-1 | E1-2 | E1-3 | E1-4 | E1-5 | E2-1 | E2-21 | E2-22 | E2-23 |
|---|---|---|---|---|---|---|---|---|---|---|
| Edukt = Produkt aus | | A1-1 | A2-1 | B1-1 | C-1 | C-2 | A1-1 | A1-1 | A1-1 | A1-1 |
| Menge Edukt | kg | 10 | 10 | 10 | 10 | 10 | 10 | 1000 | 1000 | 1000 |
| Additiv | | | | | | | | | | |
|    Material<br>   Max.<br>   Partikelgröße<br>   Menge | | --<br><br><br> | --<br><br><br> | --<br><br><br> | --<br><br><br> | --<br><br><br> | C**<br><br>75 $\mu$m<br>1 g | $Al_2O_3^+$<br><br>65 $\mu$m<br>0,32 g | $Al_2O_3^+$<br><br>65 $\mu$m<br>0,47 g | $Al_2O_3^+$<br><br>65 $\mu$m<br>0,94 g |
| Wasser | Güte* Liter | VE 5,4 | VE 5,4 | VE 5,4 | VE 5,4 | VE 5,4 | VE 5,4 | VE 5,4 | VE 5,4 | VE 5,4 |
| Dispersion<br>   Feststoffgehalt | Gew. -% | 65 | 65 | 65 | 65 | 65 | 65 | 65 | 65 | 65 |
| Düse<br>   Durchmesser<br>   Temperatur<br>   Druck<br>   Einbauhöhe | <br>mm<br>°C<br>bar<br>m | <br>2,2<br>25<br>16<br>6,5 | <br>2,2<br>25<br>16<br>6,5 | <br>2,2<br>25<br>16<br>6,5 | <br>2,2<br>25<br>16<br>6,5 | <br>2,2<br>25<br>16<br>6,5 | <br>2,2<br>25<br>16<br>6,5 | <br>2,2<br>25<br>16<br>6,5 | <br>2,2<br>25<br>16<br>6,5 | <br>2,2<br>25<br>16<br>6,5 |
| Sprühturm<br>   Höhe<br>   Innendurchmess er | <br>m<br>m | <br>18,20<br>6,30 | <br>18,20<br>6,30 | <br>18,20<br>6,30 | <br>18,20<br>6,30 | <br>18,20<br>6,30 | <br>18,20<br>6,30 | <br>18,20<br>6,30 | <br>18,20<br>6,30 | <br>18,20<br>6,30 |
|    T (Zugeführtes G as) | °C | 380 | 380 | 380 | 380 | 380 | 380 | 380 | 380 | 380 |
|    T (Abluft) | °C | 110 | 110 | 110 | 110 | 110 | 110 | 110 | 110 | 110 |
|    Luftstrom | m³/h | 6500 | 6500 | 6500 | 6500 | 6500 | 6500 | 6500 | 6500 | 6500 |

Einbauhöhe = Abstand zwischen Düse und tiefstem Punkt des Sprühturminneren in Richtung des Schwerkraftvektors.

* VE = vollentsalzt, Leitwert $\leq$ 0,1 $\mu$S;

** C 006011: Graphitpulver, max. Teilchengröße: 75 $\mu$m, hochrein (erhältlich bei Goodfellow GmbH, Bad Nauheim (Deutschland);

+ Aeroxide Alu 65: hochdisperses pyrogenes Aluminiumoxid, Teilchengröße 65 $\mu$m (Evonik Industries AG, Essen (Deutschland).

**Tabelle 10**

| Beispiel | | E1-1 | E1-2 | E1-3 | E1-4 | E1-5 | E2-1 | E2-21 | E2-22 | E2-23 |
|---|---|---|---|---|---|---|---|---|---|---|
| BET | $m^2/g$ | 30 | 33 | 49 | 49 | 47 | 28 | 32 | 30 | 32 |
| Schüttdichte | g/ml | 0,8 ± 0,1 | 0,8 ± 0,1 | 0,8± 0,1 | 0,8 ± 0,1 | 0,8 ± 0,1 | 0,8 ± 0,1 | 0,8 ± 0,1 | 0,8 ± 0,1 | 0,8 ± 0,1 |
| Stampfdichte | g/ml | 0,9 ± 0,1 | 0,9 ± 0,1 | 0,9±0, 1 | 0,9 ± 0,1 | 0,9 ± 0,1 | 0,9 ± 0,1 | 0,9 ± 0,1 | 0,9 ± 0,1 | 0,9 ± 0,1 |
| mittlere Partikelgröße | $\mu$m | 255 | 255 | 255 | 255 | 255 | 255 | 255 | 255 | 255 |
| Partikelgrößenverteilu ng $D_{10}$ | $\mu$m | 110 | 110 | 110 | 110 | 110 | 110 | 110 | 110 | 110 |
| Partikelgrößenverteilu ng $D_{50}$ | $\mu$m | 222 | 222 | 222 | 222 | 222 | 222 | 222 | 222 | 222 |
| Partikelgrößenverteilu ng $D_{90}$ | $\mu$m | 390 | 390 | 390 | 390 | 390 | 390 | 390 | 390 | 390 |
| SPHT3 | dim.-los | 0,64-0,98 | 0,64-0,98 | 0,64-0,98 | 0,64-0,98 | 0,64-0,98 | 0,64-0,98 | 0,64-0,98 | 0,64-0,98 | 0,64-0,98 |
| Aspektverhältnis B/L (Breite zu Länge) | dim.-los | 0,64-0,94 | 0,64-0,94 | 0,64-0,94 | 0,64-0,94 | 0,64-0,94 | 0,64-0,94 | 0,64-0,94 | 0,64-0,94 | 0,64-0,94 |
| C-Gehalt | ppm | < 4 | 39 | < 4 | <4 | 32 | 100 | < 4 | < 4 | < 4 |
| Cl-Gehalt | ppm | < 60 | < 60 | 280 | < 60 | < 60 | < 60 | < 60 | < 60 | < 60 |
| Al-Gehalt | ppb | 20 | 20 | 20 | 20 | 20 | 20 | 190 | 270 | 520 |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | < 700 | < 700 | <1300 | <1300 | <1300 | < 700 | < 700 | < 700 | < 700 |
| Restfeuchte | Gew.- % | < 3 | < 3 | < 3 | < 3 | < 3 | < 3 | < 3 | < 3 | < 3 |
| Erdalkalimetallgehalt | ppb | 538 | 487 | 550 | 550 | 342 | 538 | 517 | 490 | 541 |
| Porenvolumen | ml/g | 0,33 | 0,33 | 0,45 | 0,45 | 0,45 | 0,33 | 0,33 | 0,33 | 0,33 |
| Schüttwinkel | ○ | 26 | 26 | 26 | 26 | 26 | 26 | 26 | 26 | 26 |

Die Granulate sind allesamt offenporig, zeigen eine gleichmäßige und kugelförmige Gestalt (alles mikroskopische Untersuchung). Sie neigen nicht zum Verbacken oder Verkleben.

## F. Reinigen von Siliziumdioxidgranulat

Siliziumdioxidgranulat wird in einem Drehrohrofen zunächst gegebenenfalls bei einer Temperatur T1 mit Sauerstoff behandelt. Anschließend wird das Siliziumdioxidgranulat im Gleichstrom mit chlorhaltigen Komponenten behandelt, wobei die Temperatur bis auf eine Temperatur T2 erhöht wird. Die Verfahrensparameter sind in Tabelle 11 angegeben, die Eigenschaften der erhaltenen behandelten Granulate in Tabelle 12.Tabelle 11

| Beispiel | | | F1-1 | F1-2 | F2-1 | F2-21 | F2-22 | F2-23 |
|---|---|---|---|---|---|---|---|---|
| Edukt = Produkt aus | | | E1-1 | E1-2 | E2-1 | E2-21 | E2-22 | E2-23 |
| Drehrohrofen [1] | | | | | | | | |
| Länge | | cm | 200 | | | 200 | 200 | 200 |
| Innendurchmesser | | cm | 10 | | | 10 | 10 | 10 |
| Durchsatz | | kg/h | 2 | | | 2 | 2 | 2 |
| Rotationsgeschwindigkeit | | U/min | 2 | | | 2 | 2 | 2 |
| T1 | | °C | 1100 | entfällt | entfällt | 1100 | 1100 | 1100 |
| Atmosphäre | | | O2 pur | entfällt | entfällt | O2 pur | O2 pur | O2 pur |
| | Reaktand | | O2 | entfällt | entfällt | O2 | O2 | O2 |
| | Zuführung | 1/h | 300 | entfällt | entfällt | 300l/h | 300l/h | 300l/h |
| Restfeuchte | | Gew.-% | < 1 | < 3 | < 3 | <1 | <1 | <1 |
| T2 | | °C | 1100 | 1100 | 1100 | 1100 | 1100 | 1100 |
| Gleichstrom | | | | | | | | |
| | Komponente 1: HCl | 1/h | 50 | 50 | 50 | 50 | 50 | 50 |
| | Komponente 2: Cl2 | 1/h | 0 | 15 | 15 | 0 | 0 | 0 |
| | Komponente 3: N2 | 1/h | 50 | 35 | 35 | 50 | 50 | 50 |
| Gleichstrom gesamt | | 1/h | 100 | 100 | 100 | 100 | 100 | 100 |

[1] Bei den Drehrohröfen wurde der Durchsatz als Regelgröße gewählt. Das bedeutet, dass im Betrieb laufend der aus dem Drehrohrofen austretende Massenstrom gewogen wird und dann die Rotationsgeschwindigkeit und/oder die Neigung des Drehrohrofens entsprechend angepasst werden. Zum Beispiel kann eine Erhöhung des Durchsatzes erreicht werden durch a) Erhöhen der Rotationsgeschwindigkeit, oder b) Erhöhen der Neigung des Drehrohrs aus der Waagrechten, oder einer Kombination von a) und b).

**Tabelle 11**

| Beispiel | | | F1-1 | F1-2 | F2-1 | F2-21 | F2-22 | F2-23 |
|---|---|---|---|---|---|---|---|---|
| Edukt = Produkt aus | | | E1-1 | E1-2 | E2-1 | E2-21 | E2-22 | E2-23 |
| Drehrohrofen[1] | | | | | | | | |
| Länge | | cm | 200 | | | 200 | 200 | 200 |
| Innendurchmesser | | cm | 10 | | | 10 | 10 | 10 |
| Durchsatz | | kg/h | 2 | | | 2 | 2 | 2 |
| Rotationsgeschwindigkeit | | U/min | 2 | | | 2 | 2 | 2 |
| T1 | | °C | 1100 | entfällt | entfällt | 1100 | 1100 | 1100 |

(fortgesetzt)

| Beispiel | | | F1-1 | F1-2 | F2-1 | F2-21 | F2-22 | F2-23 |
|---|---|---|---|---|---|---|---|---|
| | Atmosphäre | | $O_2$ pur | entfällt | entfällt | $O_2$ pur | $O_2$ pur | $O_2$ pur |
| | | Reaktand | $O_2$ | entfällt | entfällt | $O_2$ | $O_2$ | $O_2$ |
| | | Zuführung | l/h | 300 | entfällt | entfällt | 300l/h | 300l/h | 300l/h |
| | Restfeuchte | | Gew.-% | < 1 | < 3 | < 3 | < 1 | < 1 | < 1 |
| | T2 Gleichstrom | | °C | 1100 | 1100 | 1100 | 1100 | 1100 | 1100 |
| | | Komponente 1: HCl | l/h | 50 | 50 | 50 | 50 | 50 | 50 |
| | | Komponente 2: $Cl_2$ | l/h | 0 | 15 | 15 | 0 | 0 | 0 |
| | | Komponente 3: $N_2$ | l/h | 50 | 35 | 35 | 50 | 50 | 50 |
| | | Gleichstrom gesamt | l/h | 100 | 100 | 100 | 100 | 100 | 100 |
| [1] Bei den Drehrohröfen wurde der Durchsatz als Regelgröße gewählt. Das bedeutet, dass im Betrieb laufend der aus dem Drehrohrofen austretende Massenstrom gewogen wird und dann die Rotationsgeschwindigkeit und/oder die Neigung des Drehrohrofens entsprechend angepasst werden. Zum Beispiel kann eine Erhöhung des Durchsatzes erreicht werden durch a) Erhöhen der Rotationsgeschwindigkeit, oder b) Erhöhen der Neigung des Drehrohrs aus der Waagrechten, oder einer Kombination von a) und b). | | | | | | | | |

**Tabelle 12**

| Beispiel | | F1-1 | F1-2 | F2-1 | F2-21 | F2-22 | F2-23 |
|---|---|---|---|---|---|---|---|
| BET | $m^2$/g | 25 | 27 | 23 | 26 | 26 | 23 |
| C-Gehalt | ppm | <4 | <4 | <4 | <4 | <4 | <4 |
| Cl-Gehalt | ppm | 100-200 | 100-200 | 100-200 | 100-200 | 100-200 | 100-200 |
| Al-Gehalt | ppb | 20 | 20 | 20 | 190 | 270 | 520 |
| Porenvolumen | $mm^3$/g | 650 | 650 | 650 | 650 | 650 | 650 |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | < 200 | < 200 | < 200 | <200 | <200 | <200 |
| Erdalkalimetallgehalt | ppb | 115 | 55 | 35 | 124 | 110 | 116 |
| Stampfdichte | g/cm$^3$ | 0,95 ± 0,05 | 0,95 ± 0,05 | 0,95 ± 0,05 | 0,95± 0,05 | 0,95± 0,05 | 0,95± 0,05 |

Die Granulate nach dem Reinigungsschritt zeigen im Fall von F1-2 und F2-1 einen erheblich verringerten Kohlenstoffgehalt (wie kohlenstoffarme Granulate, z.B. F1-1) und einen erheblich niedrigeren Gehalt an Erdalkalimetallen. SiC-Bildung wurde nicht beobachtet.

**G. Bilden eines Glaskörpers**

Siliziumdioxidgranulat gemäß Zeile 2 von Tabelle 13 wurde als Rohmaterial verwendet. Es wurde eine Graphitform mit einem ringförmigen Hohlraum und einem äußerem Durchmesser des Formkörpers von $d_a$, einem inneren Durchmesser des Formkörpers von $d_i$ und einer Länge $l$ hergestellt. Eine hochreine Graphitfolie, die eine Dicke von 1 mm aufwies, wurde auf die Innenwand des äußeren Formkörpers aufgebracht und eine Graphitfolie aus dem gleichen hochreinen Graphit mit einer Dicke von 1 mm wurde auf die Außenwand des inneren Formkörpers aufgebracht. Eine hochreine Graphitbahn aus einem hochreinen Graphit mit einer Schüttdichte von 1,2 g/cm$^3$ und einer Dicke von 0,4 mm wurde auf den Boden des ringförmigen Hohlraums der Form (bei G-2: zylinderförmiger Hohlraum) aufgebracht. Die mit der Graphitfolie versehene hochreine Graphitform wurde mit dem Siliziumdioxidgranulat gefüllt. Die befüllte Graphitform wird in einen Ofen eingebracht und dieser mit Vakuum beaufschlagt. Das eingefüllte Siliziumdioxidgranulat wurde von der Temperatur T1 mit einer Heizrate R1 auf eine Temperatur T2 gebracht und für die Zeitdauer t2 auf dieser gehalten. Dann wurde mit der Heizrate R2 auf T3 erwärmt, dann ohne weiteres Tempern mit der Heizrate R3 auf die Temperatur T4, weiter mit der Heizrate R4 auf die Temperatur T5 gebracht und bei dieser für die Zeitdauer t5 gehalten. Während der letzten 240 Minuten wird der Ofen mit einem Druck von 1,6*10$^6$ Pa Stickstoff beaufschlagt. Danach wurde die Form allmählich abgekühlt. Bei Erreichen einer Temperatur von 1050 °C wurde die Form für eine Zeit von 240 min auf dieser Temperatur gehalten. Anschließend wurde allmählich weiter auf T6 abgekühlt. Die Verfahrensparameter sind in Tabelle 13 zusammengestellt, die Eigenschaften der gebildeten Quarzglaskörper in Tabelle 14."Allmähliches Kühlen" bedeutet, dass die Form ohne Kühlmaßnahmen im ausgeschalteten Ofen stehen gelassen wird, also nur durch Abgabe der Wärme an die Umgebung abkühlt.

**Tabelle 13**

| Beispiel | | G1-1 | G1-2 | G2-1 | G2-21 | G2-22 | G2-23 |
|---|---|---|---|---|---|---|---|
| Edukt = Produkt aus | | F1-1 | F1-2 | F2-1 | F2-21 | F2-22 | F2-23 |
| T1 | °C | 25 | 25 | 25 | 25 | 25 | 25 |
| R1 | °C/min | +2 | +2 | +2 | +2 | +2 | +2 |
| T2 | °C | 400 | 400 | 400 | 400 | 400 | 400 |
| t2 | min | 60 | 60 | 60 | 60 | 60 | 60 |
| R2 | °C/min | +3 | +3 | +3 | +3 | +3 | +3 |
| T3 | °C | 1000 | 1000 | 1000 | 1000 | 1000 | 1000 |
| R3 | °C/min | + 0,2 | + 0,2 | + 0,2 | +0,2 | +0,2 | +0,2 |
| T4 | °C | 1350 | 1350 | 1350 | 1350 | 1350 | 1350 |
| R4 | °C/min | +2 | +2 | +2 | +2 | +2 | +2 |
| T5 | °C | 1750 | 1750 | 1750 | 1750 | 1750 | 1750 |
| t5 | min | 720 | 720 | 720 | 720 | 720 | 720 |
| T6 | °C | 25°C | 25°C | 25°C | 25°C | 25°C | 25°C |

**Tabelle 14**

| Beispiel | | G1-1 | G1-2 | G2-1 | G2-21 | G2-22 | G2-23 |
|---|---|---|---|---|---|---|---|
| Länge (Quarzglaskörper) | mm | 2000 | 1000 | 2000 | 2000 | 2000 | 2000 |
| Außendurchmesser (Quarzglaskörper) | mm | 260 | 560 | 260 | 260 | 260 | 260 |
| Innendurchmesser (Quarzglaskörper) | mm | 45 | - (massiv) | 45 | 45 | 45 | 45 |
| OH-Gehalt* | ppm | 0,3 ± 0,2 | 0,4 ± 0,2 | 0,4 ± 0,2 | 0,3 ± 0,2 | 0,3 ± 0,2 | 0,3 ± 0,2 |
| C-Gehalt | ppm | < 4 | < 4 | <4 | <4 | <4 | <4 |
| Cl-Gehalt* | ppm | < 60 | < 60 | < 60 | < 60 | < 60 | < 60 |
| Al-Gehalt* | ppb | 14 ± 5 | 13 ± 5 | 12 ± 5 | 185 ± 5 | 280 ± 5 | 510 ± 5 |
| ODC-Anteil | /cm3 | 0,8*10$^{15}$ | 1,7*10$^{15}$ | 1,1*10$^{15}$ | 0,8*10$^{15}$ | 0,8*10$^{15}$ | 0,8*10$^{15}$ |

(fortgesetzt)

| Beispiel | | G1-1 | G1-2 | G2-1 | G2-21 | G2-22 | G2-23 |
|---|---|---|---|---|---|---|---|
| Summe der Konzentrationen von Ca, Co, Cr, Cu, Fe, Ge, Hf, K, Li, Mg, Mn, Mo, Na, Nb, Ni, Ti, V, W, Zn, Zr | ppb | 153 | 62 | 171 | 160 | 166 | 172 |
| Brechzahlhomogenität | ppm | 30 | 30 | 30 | 30 | 30 | 30 |
| Fiktive Temperatur | °C | 1109 | 1137 | 1148 | 1120 | 1113 | 1244 |
| Viskosität | | | | | | | |
| @1250°C | Lg(/ dPas) | 12,6 | 12,4 | 12,7 | 12,6 | 12,6 | 12,7 |
| @1300°C | | 11,8 | 11,8 | 11,8 | 11,8 | 11,8 | 11,8 |
| @1350°C | | 11,1 | 11,1 | 11,1 | 11,1 | 11,1 | 11,2 |
| "±"-Angaben sind die Standardabweichung. | | | | | | | |

Alle Glaskörper zeigen sehr gute Werte für OH-, Kohlenstoff- und Aluminiumgehalt.

## H. Herstellen einer Glasfaser

Der zuvor in Beispiel G hergestellte Quarzglaskörper wird zunächst analog Beispiel 1 der EP 0598349 B1 mechanisch bearbeitet. Der Außendurchmesser des bearbeiteten Quarzglaskörpers betrug 250 mm, der Innendurchmesser 50 mm. Anschließend wird der bearbeitete Quarzglaskörper analog Beispiel 6 der EP 0598349 B1 weiterverarbeitet, wobei dieser anstelle des natürlichen Quarzglaskörpers des Beispiels 6 eingesetzt wird. Es wurde ein Kernstab mit 45 mm Außendurchmesser verwendet. Die Verfahrensparameter sind in Tabelle 15 angegeben, die Eigenschaften der gebildeten Glasfaser in Tabelle 16.

**Tabelle 15**

| Beispiel | | H1-1 | H2-1 | H2-21 | H2-22 | H2-23 |
|---|---|---|---|---|---|---|
| Material = Produkt aus | | **G1-1** | **G2-1** | **G2-21** | **G2-22** | **G2-23** |
| Ofentemperatur Faserziehofen | °C | 2100 | 2100 | 2100 | 2100 | 2100 |
| Ziehgeschwindigkeit | m/min | 1200 | 1200 | 1200 | 1200 | 1200 |

**Tabelle 16**

| Beispiel | | H1-1 | H2-1 | H2-21 | H2-22 | H2-23 |
|---|---|---|---|---|---|---|
| Länge (Glasfaser) | km | 120 | 120 | 120 | 120 | 120 |
| Durchmesser gesamt | $\mu$m | 125 | 125 | 125 | 125 | 125 |
| Kenndaten Hülle | | | | | | |
| OH-Gehalt* | ppm | < 1 | < 1 | < 1 | < 1 | < 1 |
| C-Gehalt | ppm | < 4 | < 4 | < 4 | < 4 | < 4 |
| Cl-Gehalt* | ppm | < 60 | < 60 | < 60 | < 60 | < 60 |
| Al-Gehalt* | ppb | 14 ± 5 | 12 ± 5 | 185 ± 5 | 280 ± 5 | 510 ± 5 |
| ODC-Anteil | /cm$^3$ | $0,3*10^{15}$ | $0,5*10^{15}$ | $0,3*10^{15}$ | $0,3*10^{15}$ | $0,3*10^{15}$ |
| Summe der Konzentrationen von Ca, Co, Cr, Cu, Fe, Ge, Hf, K, Li, Mg, Mn, Mo, Na, Nb, Ni, Ti, V, W, Zn, Zr | ppb | 153 | 171 | 153 | 153 | 153 |

(fortgesetzt)

| Beispiel | | H1-1 | H2-1 | H2-21 | H2-22 | H2-23 |
|---|---|---|---|---|---|---|
| Curl | m | 17,3 | 22,1 | 9,1 | 5,5 | 4,3 |

*"±"-Angaben sind die Standardabweichung.
Große Curl-Werte sind besser als kleine.

**Patentansprüche**

1. Ein Lichtleiter beinhaltend eine Hülle M1 und einen oder mehrere Kerne,

   wobei die Hülle M1 die Kerne umgibt,
   wobei jeder Kern einen Brechungsindexverlauf senkrecht zur maximalen Kernausdehnung aufweist, wobei mindestens ein Brechungsindex $n_K$ von jedem Brechungsindexverlauf größer ist als der Brechungsindex $n_{MI}$ der Hülle M1;
   wobei die Hülle M1 aus Siliziumdioxid besteht und

   a) einen OH-Gehalt von weniger als 10 ppm;
   b) einen Chlorgehalt von weniger als 60 ppm; und
   c) einen Aluminiumgehalt von weniger als 200 ppb aufweist;

   wobei die ppb und ppm jeweils bezogen sind auf das Gesamtgewicht der Hülle M1.

2. Der Lichtleiter gemäß Anspruch 1, beinhaltend zwei oder mehr Kerne, wobei die Hülle M1 die Kerne als Matrix umgibt.

3. Der Lichtleiter nach einem der vorhergehenden Ansprüche, wobei die Hülle M1 mindestens eines der folgenden Merkmale aufweist:

   d) einen ODC-Anteil von weniger als $5 \times 10^{15}/cm^3$;
   e) einen Metallgehalt von Metallen, die von Aluminium verschieden sind, von weniger als 1 ppm;
   f) eine Viskosität (p=1013 hPa) in einem Bereich von $\log_{10}$ ($\eta$ (1200°C) / dPas) = 13,4 bis $\log_{10}$ ($\eta$ (1200°C) / dPas) = 13,9 oder $\log_{10}$ ($\eta$ (1300°C) / dPas) = 11,5 bis $\log_{10}$ ($\eta$ (1300°C) / dPas) = 12,1 oder $\log_{10}$ ($\eta$ (1350°C) / dPas) = 1,2 bis $\log_{10}$ ($\eta$ (1350°C) / dPas) = 10,8;
   g) einen Curl-Parameter von mehr als 6 m;
   h) eine Standardabweichung des OH-Gehalts von nicht mehr als 10 %, bezogen auf den OH-Gehalt a) der Hülle M1,
   i) eine Standardabweichung des Cl-Gehalts von nicht mehr als 10 %, bezogen auf den Cl-Gehalt b) der Hülle M1,
   j) eine Standardabweichung des Al-Gehalts von nicht mehr als 10 %, bezogen auf den Al-Gehalt c) der Hülle M1,
   k) eine Brechzahlhomogenität von weniger als $1 \times 10^{-4}$;
   1) einen Transformationspunkt $T_g$ in einem Bereich von 1150 bis 1250°C,

   wobei die ppb und ppm jeweils bezogen sind auf das Gesamtgewicht der Hülle M1.

4. Der Lichtleiter nach einem der vorhergehenden Ansprüche, wobei der Gewichtsanteil der Hülle M1 mindestens 60 Gew.-%, bezogen auf das Gesamtgewicht der Kerne und Hülle M1, beträgt.

5. Ein Verfahren zum Herstellen eines Lichtleiters, beinhaltend mindestens folgende Schritte:

   A/ Durchführen der folgenden Schritte i.) bis iii.):

      i.) Durchführen folgender Verfahrensschritte:

         I. Bereitstellen eines Siliziumdioxidpulvers, wobei das Siliziumdioxidpulver folgende Merkmale aufweist:

            a. einen Chlorgehalt von weniger als 200 ppm; und
            b. einen Aluminiumgehalt von weniger als 200 ppb;

wobei die ppb und ppm jeweils auf das Gesamtgewicht des Siliziumdioxidpulvers bezogen sind;

II. Bereitstellen einer Flüssigkeit;

III. Mischen der Komponenten aus Schritt I. und II. unter Erhalt einer Aufschlämmung;

IV. Sprühtrocknen der Aufschlämmung unter Erhalt eines Siliziumdioxidgranulats I;

V. Behandeln des Siliziumdioxidgranulats I aus Schritt IV. unter Erhalt des Siliziumdioxidgranulats II

ii.) Bilden einer Glasschmelze aus dem Siliziumdioxidgranulat II;

iii.) Bilden eines Quarzglaskörpers aus mindestens einem Teil der Glasschmelze;

B/ Verarbeiten des Quarzglaskörpers zu einem Hohlkörper mit mindestens einer Öffnung;

C/ Einbringen eines oder mehrerer Kernstäbe in den Hohlkörper durch die mindestens eine Öffnung unter Erhalt eines Vorläufers;

D/ Ziehen des Vorläufers aus Schritt C/ in der Wärme unter Erhalt des Lichtleiters mit einem oder mehreren Kernen und einer Hülle M1,

wobei der Lichtleiter eine Hülle M1 und einen oder mehrere Kerne aufweist,

wobei die Hülle M1 die Kerne umgibt,

wobei jeder Kern einen Brechungsindexverlauf senkrecht zur maximalen Kernausdehnung aufweist, wobei mindestens ein Brechungsindex $n_K$ von jedem Brechungsindexverlauf größer ist als der Brechungsindex $n_{MI}$ der Hülle M1;

wobei die Hülle M1 aus Siliziumdioxid besteht und

a) einen OH-Gehalt von weniger als 10 ppm; und

b) einen Chlorgehalt von weniger als 60 ppm; und

c) einen Aluminiumgehalt von weniger als 200 ppb aufweist;

wobei die ppb und ppm jeweils auf das Gesamtgewicht der Hülle M1 bezogen sind.

6. Ein Lichtleiterkabel beinhaltend mindestens zwei Lichtleiter gemäß einem der Ansprüche 1 bis 4.

7. Ein Verfahren zum Herstellen eines Lichtleiterkabels beinhaltend folgende Schritte:

A} Bereitstellen von mindestens zwei Lichtleitern gemäß einem der Ansprüche 1 bis 4;

B} Verarbeiten der mindestens zwei Lichtleiter aus A} zu einem Lichtleiterkabel.

**Claims**

1. A light guide comprising a sleeve MI and one or more cores,

wherein the sleeve MI surrounds the cores,

wherein each core has a refraction index profile perpendicular to the maximum core expansion, wherein at least one refraction index $n_K$ of each refraction index profile is greater than the refraction index $n_{MI}$ of the sleeve MI;

wherein the sleeve MI consists of silicon dioxide and comprises

a) an OH content of less than 10 ppm;

b) a chlorine content of less than 60 ppm; and

c) an aluminum content of less than 200 ppb;

wherein the ppb and ppm are each based on the total weight of the sleeve MI.

2. The light guide according to claim 1, comprising two or more cores, wherein the sleeve MI surrounds the cores as a matrix.

3. The light guide according to either of the preceding claims, wherein the sleeve MI comprises at least one of the following features:

d) an ODC content of less than $5 \times 10^{15}/cm^3$;

e) a metal content of metals that are different from aluminum of less than 1 ppm;

f) a viscosity (p=1013 hPa) in a range of from $\log_{10} (\eta\ (1200°C)\ /\ dPas) = 13.4$ to $\log_{10} (\eta\ (1200°C)\ /\ dPas) = 13.9$ or $\log_{10} (\eta\ (1300°C)\ /\ dPas) = 11.5$ to $\log_{10} (\eta\ (1300°C)\ /\ dPas) = 12.1$ or $\log_{10} (\eta\ (1350°C)\ /\ dPas) = 1.2$ to $\log_{10} (\eta\ (1350°C)\ /\ dPas) = 10.8$;

g) a curl parameter of more than 6 m;

h) a standard deviation of the OH content of not more than 10%, based on the OH content a) of the sleeve MI;

i) a standard deviation of the Cl content of not more than 10%, based on the Cl content b) of the sleeve MI;

j) a standard deviation of the Al content of not more than 10%, based on the Al content c) of the sleeve MI;

k) a refractive index homogeneity of less than $1 \times 10^{-4}$;

l) a transformation point $T_g$ in a range of from 1150 to 1250°C,

wherein the ppb and ppm are each based on the total weight of the sleeve MI.

4. The light guide according to any of the preceding claims, wherein the weight proportion of the sleeve MI is at least 60 wt.%, based on the total weight of the cores and sheath MI.

5. A method for producing a light guide, comprising at least the following steps:

A/ performing the following steps i.) to iii.):

   i.) performing the following method steps:

      I. providing a silicon dioxide powder, wherein the silicon dioxide powder comprises the following features:

         a. a chlorine content of less than 200 ppm; and
         b. an aluminum content of less than 200 ppb;

      wherein the ppb and ppm are each based on the total weight of the silicon dioxide powder;
      II. providing a liquid;
      III. mixing the components from steps I. and II. to obtain a slurry;
      IV. spray-drying the slurry to obtain a silicon dioxide granulate I;
      V. treating the silicon dioxide granulate I from step IV. to obtain the silicon dioxide granulate II;

   ii.) forming a glass melt from the silicon dioxide granulate II;
   iii.) forming a quartz glass body from at least part of the glass melt;

B/ processing the quartz glass body to form a hollow body comprising at least one opening;
C/ inserting one or more core rods into the hollow body through the at least one opening to obtain a precursor;
D/ drawing the precursor from step C/ in heat to obtain the light guide comprising one or more cores and a sleeve MI;
wherein the light guide comprises a sleeve MI and one or more cores,
wherein the sleeve MI surrounds the cores,
wherein each core has a refraction index profile perpendicular to the maximum core expansion, wherein at least one refraction index $n_K$ of each refraction index profile is greater than the refraction index $n_{MI}$ of the sleeve MI;
wherein the sleeve MI consists of silicon dioxide and comprises

   a) an OH content of less than 10 ppm; and
   b) a chlorine content of less than 60 ppm; and
   c) an aluminum content of less than 200 ppb;

wherein the ppb and ppm are each based on the total weight of the sleeve MI.

6. A light guide cable comprising at least two light guides according to any of claims 1 to 4.

7. A method for producing a light guide cable, comprising the following steps:

   A} providing at least two light guides according to any of claims 1 to 4;
   B} processing the at least two light guides from A} to form a light guide cable.

**Revendications**

1.  Fibre optique contenant une gaine M1 et un ou plusieurs coeurs,

    dans laquelle la gaine M1 entoure les coeurs,
    dans laquelle chaque coeur présente une courbe d'indice de réfraction perpendiculaire à l'allongement de coeur maximal, dans laquelle au moins un indice de réfraction $n_K$ de chaque courbe d'indice de réfraction est supérieur à l'indice de réfraction $n_{M1}$ de la gaine M1 ;
    dans laquelle la gaine M1 est constituée de silice et présente

    > a) une teneur en OH inférieure à 10 ppm ;
    > b) une teneur en chlore inférieure à 60 ppm ; et
    > c) une teneur en aluminium inférieure à 200 ppb ;

    dans laquelle les ppb et ppm se rapportent respectivement au poids total de la gaine M1.

2.  Fibre optique selon la revendication 1, contenant deux coeurs ou plus, dans laquelle la gaine M1 entoure les coeurs sous forme de matrice.

3.  Fibre optique selon l'une des revendications précédentes, dans laquelle la gaine M1 présente au moins l'une des caractéristiques suivantes :

    > d) une proportion d'ODC inférieure à $5 \times 10^{15}/cm^3$ ;
    > e) une teneur en métaux de métaux, lesquels sont différents de l'aluminium, inférieure à 1 ppm ;
    > f) une viscosité (p = 1 013 hPa) dans une plage allant de

    > > $\log_{10} (\eta$ (1 200 °C) / dPas) = 13,4 à $\log_{10} (\eta$ (1 200 °C) / dPas) = 13,9 ou de
    > > $\log_{10} (\eta$ (1 300 °C) / dPas) = 11,5 à $\log_{10} (\eta$ (1 300 °C) / dPas) = 12,1 ou de
    > > $\log_{10} (\eta$ (1 350 °C) / dPas) = 1,2 à $\log_{10} (\eta$ (1 350 °C) / dPas) = 10,8 ;

    > g) un paramètre de courbure supérieur à 6 m ;
    > h) un écart type de la teneur en OH ne dépassant pas 10 % par rapport à la teneur en OH a) de la gaine M1 ;
    > i) un écart type de la teneur en Cl ne dépassant pas 10 % par rapport à la teneur en Cl b) de la gaine M1 ;
    > j) un écart type de la teneur en Al ne dépassant pas 10 % par rapport à la teneur en Al c) de la gaine M1 ;
    > k) une homogénéité d'indice de réfraction inférieure à $1 \times 10^{-4}$ ;
    > l) un point de transformation $T_g$ dans une plage allant de 1 150 à 1 250 °C,

    dans laquelle les ppb et ppm se rapportent respectivement au poids total de la gaine M1.

4.  Fibre optique selon l'une des revendications précédentes, dans laquelle la proportion en poids de la gaine M1 est d'au moins 60 % en poids par rapport au poids total des coeurs et de la gaine M1.

5.  Procédé pour la fabrication d'une fibre optique, contenant au moins les étapes suivantes :

    A/ réalisation des étapes suivantes i.) à iii.) :

    > i.) réalisation des étapes de procédé suivantes :

    > > I. fourniture d'une poudre de silice, dans lequel la poudre de silice présente les caractéristiques suivantes :

    > > > a. une teneur en chlore inférieure à 200 ppm ; et
    > > > b. une teneur en aluminium inférieure à 200 ppb ;

    > > dans lequel les ppb et ppm se rapportent respectivement au poids total de la poudre de silice ;
    > > II. fourniture d'un liquide ;
    > > III. mélange des composants des étapes I. et II. pour obtenir une suspension ;
    > > IV. séchage par pulvérisation de la suspension pour obtenir un granulat de silice I ;

V. traitement du granulat de silice I de l'étape IV. pour obtenir le granulat de silice II

ii.) formation d'un bain de verre à partir du granulat de silice II ;
iii.) formation d'un corps en verre de quartz à partir d'au moins une partie du bain de verre ;

B/ transformation du corps en verre de quartz en un corps creux comportant au moins une ouverture ;
C/ insertion d'une ou de plusieurs tiges de coeurs dans le corps creux à travers l'au moins une ouverture pour obtenir un précurseur ;
D/ étirement du précurseur de l'étape CI dans la chaleur pour obtenir la fibre optique comportant un ou plusieurs coeurs et une gaine M1 ;
dans lequel la fibre optique présente une gaine M1 et un ou plusieurs coeurs,
dans lequel la gaine M1 entoure les coeurs,
dans lequel chaque coeur présente une courbe d'indice de réfraction perpendiculaire à l'allongement de coeur maximal, dans lequel au moins un indice de réfraction $n_K$ de chaque courbe d'indice de réfraction est supérieur à l'indice de réfraction $n_{M1}$ de la gaine M1 ;
dans lequel la gaine M1 est constituée de silice et présente

a) une teneur en OH inférieure à 10 ppm ; et
b) une teneur en chlore inférieure à 60 ppm ; et
c) une teneur en aluminium inférieure à 200 ppb ;

dans lequel les ppb et ppm se rapportent respectivement au poids total de la gaine M1.

6. Câble à fibres optiques contenant au moins deux fibres optiques selon l'une des revendications 1 à 4.

7. Procédé pour la fabrication d'un câble à fibres optiques contenant les étapes suivantes :

A} fourniture d'au moins deux fibres optiques selon l'une des revendications 1 à 4 ;
B} transformation des au moins deux fibres optiques de A} en un câble à fibres optiques.

**100**

| 101 |
|:---:|

| 102 |
|:---:|

| 103 |
|:---:|

| 104 |
|:---:|

# Fig. 1

**200**

**Fig. 2**

<u>300</u>

```
┌─────────────────────┐
│         301         │
└─────────────────────┘
           │
           ▼
┌─────────────────────┐
│         302         │
└─────────────────────┘
           │
           ▼
┌─────────────────────┐
│         303         │
└─────────────────────┘
           │
           ▼
┌─────────────────────┐
│         304         │
└─────────────────────┘
```

# Fig. 3

Fig. 4

**1200**

1201

1202

**Fig. 5**

**1300**

1302

1302

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4650511 A

- EP 0598349 B1

**In der Beschreibung aufgeführte Nicht-Patentliteratur**

- **VON PFLEIDERER.** The UV-induced 210 nm absorption band in fused Silica with different thermal history and stoichiometry. *Journal of Non-Crystalline Solids,* 1993, vol. 159, 145-153

- **VON D. M. DODD ; D. M. FRASER.** Optical Determinations of OH in Fused Silica. *J.A.P,* 1966, vol. 37, 3991
- **L. SKUJA.** Color Centers and Their Transformations in Glassy SiO. *Photosensitivity in optical Waveguides and glasses,* 13. Juli 1998